(19) Europäisches Patentamt
European Patent Office
Office européen des brevets

(11) EP 3 080 209 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**14.06.2023 Patentblatt 2023/24**

(45) Hinweis auf die Patenterteilung:
**18.10.2017 Patentblatt 2017/42**

(21) Anmeldenummer: **14815636.7**

(22) Anmeldetag: **11.12.2014**

(51) Internationale Patentklassifikation (IPC):
***C09C 1/62*** *(2006.01)* ***C09C 1/64*** *(2006.01)*
***C09C 3/12*** *(2006.01)* ***C09C 3/06*** *(2006.01)*
***C09D 5/03*** *(2006.01)* ***C09D 7/12*** *(2006.01)*

(52) Gemeinsame Patentklassifikation (CPC):
**C09C 3/12; C09C 1/62; C09C 1/648; C09D 7/62;**
C01P 2004/20; C01P 2004/22; C01P 2004/24;
C01P 2004/54

(86) Internationale Anmeldenummer:
**PCT/EP2014/077443**

(87) Internationale Veröffentlichungsnummer:
**WO 2015/086771 (18.06.2015 Gazette 2015/24)**

(54) **BESCHICHTETE METALLPIGMENTE, VERFAHREN ZU DEREN HERSTELLUNG UND DEREN VERWENDUNG, BESCHICHTUNGSMITTEL UND GEGENSTAND**

COATED METAL PIGMENTS, METHOD FOR THE PRODUCTION AND THE USE THEREOF, COATING AGENT AND ARTICLE

PIGMENTS MÉTALLIQUES POURVUE D'UN REVÊTEMENT, PROCÉDÉ POUR LEUR FABRICATION ET LEUR UTILISATION, COMPOSITIONS DE REVÊTEMENT ET OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 DE 102013113885**

(43) Veröffentlichungstag der Anmeldung:
**19.10.2016 Patentblatt 2016/42**

(73) Patentinhaber: **Eckart GmbH**
**91235 Hartenstein (DE)**

(72) Erfinder:
- **HIPPMANN, Frank**
**91235 Hartenstein (DE)**
- **HÖFENER, Sebastian**
**90482 Nürnberg (DE)**
- **STRUCK, Oliver**
**91239 Henfenfeld (DE)**
- **BEDFORD, Oliver**
**64372 Ober-Ramstadt (DE)**
- **SCHUMACHER, Dirk**
**91275 Auerbach (DE)**

(74) Vertreter: **Louis Pöhlau Lohrentz**
**Patentanwälte**
**Postfach 30 55**
**90014 Nürnberg (DE)**

(56) Entgegenhaltungen:
**WO-A1-98/13426**
**WO-A2-03/043567**
**DE-A1-102008 031 901**

EP 3 080 209 B2

## Beschreibung

Die Erfindung betrifft Metallpigmente mit metallischem Substrat und Beschichtung sowie Verfahren zu deren Herstellung und deren Verwendung. Die Erfindung betrifft weiterhin Beschichtungsmittel umfassend derartige Metallpigmente sowie beschichtete Gegenstände. Ferner betrifft die Erfindung die Verwendung spezieller Polysiloxane zur Modifizierung verschiedener Eigenschaften von beschichteten Metallpigmenten.

Die WO 1999/057204 A2 betrifft mit Oberflächenmodifizierungsmitteln beschichtete Effektpigmente, bei dem das Ausgangspigment eine Schicht mit wenigstens einem reaktiven Oberflächenmodifizierungsmittel aufweist.

Die US 2002/0169244 A1 betrifft Weicheiseneffektpigmente mit metallischem Glanz, welche mittels Vermahlung von reduziertem Carbonyleisenpulver erhalten werden. Diese werden während oder nach der Vermahlung passiviert.

Die WO 2004/087816 A2 und WO 2008/077612 A2 betreffen spezifische Aluminiumeffektpigmente, welche sich durch herausragende optische Eigenschaften auszeichnen. Die Pigmente können mit einer Inhibitor- und/oder Korrosionsschutzschicht versehen werden.

Die WO 2008/095697 A2 betrifft Metalleffektpigmente mit einer umhüllenden homogenen Kunstharzbeschichtung, wobei die Kunstharzbeschichtung Polyacrylat und/oder Polymethacrylat sowie organofunktionelles Silan umfasst.

Die WO 2009/144005 A1 betrifft spezielle Eiseneffektpigmente, welche durch ihre besonderen optischen Eigenschaften gekennzeichnet sind. Hierbei kann eine Inhibitor- und/oder Korrosionsschutzschicht aufgebracht werden.

Die WO 2009/149834 A2 betrifft eine Mischung von kupferhaltigen Metalleffektpigmenten mit einem Cellulosederivat und/oder wenigstens ein Additiv mit antioxidativen und/oder radikalinhibierenden Eigenschaften. Die kupferhaltigen Metalleffektpigmente können hierbei mit einer umhüllenden Korrosionsschutzschicht versehen werden.

Die WO 2012/130680 A1 betrifft kupferhaltige Metallpigmente, wobei die kupferhaltigen Metallpigmente wenigstens eine umhüllende Metalloxidschicht und wenigstens eine umhüllende chemisch nichtreaktive Kunststoffschicht aufweisen.

Zwar bieten die vorgenannten Beschichtungen bereits beispielsweise verbesserte Korrosionsstabilität, chemische Stabilität und/oder mechanische Stabilität gegenüber konventionell beschichteten oder gar unbeschichteten Pigmenten, jedoch besteht noch immer das Bedürfnis nach einer weiteren Verbesserung der Stabilität. Da beispielsweise andere Lackbestandteile wie Farbpigmente oder auch hohe pH-Werte die Stabilität von unter anderem Aluminiumpigmenten stark beeinflussen können, wäre es für eine unkomplizierte Formulierung von Metalleffektlacken von Vorteil eine größere Stabilität gegenüber solchen Bedingungen zu gewährleisten.

Die DE 10 2008 031 901 A1 betrifft Metalleffektpigmente. Die WO98/13426 A1 betrifft modifizierte Perlglanzpigmente für Wasserlacksysteme. Die WO 03/043567 A2 betrifft mit siliziumorganischen Verbindungen behandeltes Kosmetikpulver.

Eine Aufgabe der vorliegenden Erfindung ist es mithin, Metallpigmente zur Verfügung zu stellen, welche eine verbesserte Stabilität auch unter sehr aggressiven Bedingungen wie beispielsweise hohe pH-Werten aufweisen. Ferner ist es eine Aufgabe der vorliegenden Erfindung, Verfahren zu deren Herstellung sowie deren Verwendungen bereitzustellen.

Ferner erzielen die im Markt erhältlichen Metalleffektpigmenten bereits hervorragende Helligkeitsflops. Es besteht jedoch generell das Bedürfnis nach einer weiteren Verbesserung der optischen Eigenschaften. Eine weitere Aufgabe der vorliegenden Erfindung ist es mithin, Metallpigmente zur Verfügung zu stellen, welche sich durch verbesserte optische Eigenschaften, insbesondere einen verbesserten Helligkeitsflop, auszeichnen. Dabei sollten andere grundlegende anwendungstechnische Eigenschaften wie beispielsweise die Schwitzwasserbeständigkeit, nicht beeinträchtigt werden. Ferner ist es eine Aufgabe der vorliegenden Erfindung, Verfahren zu deren Herstellung sowie deren Verwendungen bereitzustellen.

Bei Metalleffektpigmenten, welche mittels physikalischer Dampfabscheidung in PVD-Verfahren hergestellt wurden, sogenannten PVD-Metallpigmenten oder PVD-Pigmenten, besteht das Problem einer sehr starken Agglomerationsneigung. Dies resultiert beispielsweise darin, dass entsprechende Pigmentpasten nur bis zu einem bestimmten Grad konzentriert werden können. Hierdurch wird deren Lagerung und Transport erschwert, ein Umnetzen auf andere Lösungsmittel kompliziert oder unmöglich und die Bereitstellung eines PVD-Metallpigmentpulvers ohne gravierende Agglomeration der PVD-Metallpigmente ist bestenfalls unter unverhältnismäßigem Aufwand machbar.

Somit ist es eine spezielle Aufgabe der vorliegenden Erfindung, einfach zugängliche PVD-Pigmente bereitzustellen, die auch in hoher Konzentration oder gar ausgetrocknet eine stark verringerte oder gar keine Agglomerationsneigung aufweisen.

Metalleffektpigmente können erfolgreich in Pulverlack eingebracht werden, jedoch muss gerade bei Pulverlacken eine gute Einbindung in das Lacksystem gewährleistet werden. So werden Pulverlacke oft als kostengünstige Einschichtlackierung aufgebracht, wobei diese Lackierung sehr widerstandsfähig sein soll. Demgemäß muss eine gute Einbindung schon allein deshalb gewährleistet sein, um die Pigmente vor aggressiven äußeren Bedingungen zu schützen.

Daher ist es eine spezielle Aufgabe der vorliegenden Erfindung, ferromagnetische Pigmente bereitzustellen,

welche sich durch besonders gute Applikationseigenschaften und Ausrichtung der Pigmente bei der Verwendung in einem Pulverlack auszeichnen.

Die der Erfindung zugrunde liegenden Aufgaben werden durch die in den Ansprüchen und Aspekten angegebenen Gegenständen, Verfahren und Verwendungen gelöst.

Die Aufgabe der Erfindung wird durch Bereitstellung eines Metallpigments mit metallischem Substrat und Beschichtung gemäß Anspruch 1 gelöst.

Bevorzugte Weiterbildungen der erfindungsgemäßen Metallpigmente sind in den Unteransprüchen 2 bis 11 angegeben.

Gemäß einer bevorzugten Ausführungsform umfasst das mindestens eine Heteropolysiloxan mindestens ein Aminosilan und mindestens ein Alkylsilan. Vorzugsweise handelt es sich bei weiteren Ausführungsformen bei den vorgenannten Metallpigmenten um plättchenförmige Metallpigmente. Die plättchenförmigen Metallpigmente können auch als Metalleffektpigmente bezeichnet werden.

Die der Erfindung zugrunde liegende Aufgabe wird ferner durch Bereitstellen eines Verfahrens zur Herstellung von Metallpigmenten mit metallischem Substrat und Beschichtung gemäß Anspruch 12 gelöst.

Vorzugsweise ist das optional vorbeschichtete Metallpigment plättchenförmig.

Eine bevorzugte Weiterbildung des erfindungsgemäßen Verfahrens ist in Unteranspruch 13 angegeben.

Ferner betrifft die vorliegende Erfindung die Verwendung mindestens eines vorkondensierten Heteropolysiloxans zur Verbesserung von Anwendungseigenschaften von Metallpigmenten gemäß Anspruch 14.

Vorzugsweise umfasst das Heteropolysiloxan mindestens ein Aminosilan und mindestens ein Alkylsilan. Weiterhin ist es bevorzugt, dass die Aminosilane und Alkylsilane gemäß einem der Aspekte 9 bis 19 ausgewählt werden.

Ferner betrifft die vorliegende Erfindung die Verwendung eines erfindungsgemäß beschichteten Metallpigments in einem Kosmetikum, einem Kunststoff oder einem Beschichtungsmittel.

Ferner betrifft die vorliegende Erfindung ein Beschichtungsmittel, welches erfindungsgemäß beschichtete Metallpigmente umfasst.

Ferner betrifft die vorliegende Erfindung einen Gegenstand, der erfindungsgemäße Metallpigmente oder ein erfindungsgemäßes Beschichtungsmittel aufweist.

Die vorliegende Erfindung betrifft Metallpigmente mit der oben genannten Beschichtung.

Besonders bevorzugt ist es hierbei, dass das Metallpigment mit Beschichtung plättchenförmig ist. Beispielsweise erleichtert oder ermöglicht die Beschichtung in vielen Fällen erst die gewünschte Orientierung in einem Beschichtungsmittel.

Der Begriff "Metallpigment mit metallischem Substrat" im Sinne der vorliegenden Erfindung umfasst sphärische und plättchenförmige metallhaltige Partikel, sofern dies nicht anders spezifiziert ist. Dies umfasst insbesondere Partikel, bei denen mindestens eine Metallschicht auf ein nichtmetallisches Substrat aufgebracht ist, und Partikel bestehend im Wesentlichen oder vorzugsweise vollständig aus mindestens einem Metall oder mindestens einer Metalllegierung.

Der Begriff "Metalleffektpigment" im Sinne der vorliegenden Erfindung bezeichnet plättchenförmige metallhaltige Partikel. Sofern nicht anders spezifiziert, umfassen die Begriffe "Metallpigment" und "Metalleffektpigment" bei der vorliegenden Erfindung auch eine Mehrzahl von Pigmenten, insbesondere falls die darauf bezogene Größe eine statistische Größe darstellt, welche nur an einer größeren Zahl an Partikeln in gemittelter Form erhalten werden kann. Sofern keine spezifischen Angaben hinsichtlich einer derartigen Mittelung angegeben sind, bezieht sich die entsprechende gemittelte Größe auf das arithmetische Mittel der betreffenden Größe. Der Begriff "nichtmetallisches Substrat" umfasst im Sinne der vorliegenden Erfindung beispielsweise Polymersubstrate, Glassubstrate, beispielsweise Glasplättchen, und rein metalloxidische Substrate, beispielsweise Siliziumoxidplättchen, Aluminiumoxidplättchen oder Titanoxidplättchen. Als nichtmetallisches Substrat können auch natürliche oder synthetische Glimmerplättchen verwendet werden. Insbesondere ist es jedoch bevorzugt, dass erfindungsgemäße "Metallpigmente" und "Metalleffektpigmente" im Wesentlichen oder vorzugsweise vollständig aus Metall oder Metalllegierungen bestehen.

Insbesondere ist es bei weiteren Ausführungsformen bevorzugt, dass das metallische Substrat plättchenförmig ist. Der Begriff "Metallkern" im Sinne der vorliegenden Erfindung bezeichnet metallische Substrate, welche im Wesentlichen, vorzugsweise vollständig, aus Metall oder Metalllegierungen bestehen.

Der Begriff "plättchenförmig" im Sinne der vorliegenden Erfindung bedeutet, dass das betreffende Partikel in einer Dimensionen bedeutend kleiner ist verglichen mit den beiden verbleibenden. Das heißt, dass beispielsweise die mittlere Höhe des Partikels mindestens 10 mal kleiner ist als die mittlere Breite und Länge. Die Bestimmung der Ausmaße der Pigmente erfolgt mithilfe dem Fachmann geläufiger Verfahren, beispielsweise Rasterelektronenmikroskopie. Derartige Pigmente weisen besondere vorteilhafte Eigenschaften auf und stehen im Fokus der vorliegenden Erfindung. Beispielsweise erlaubt eine plättchenförmige Ausformung die gerichtete Reflexion von elektromagnetischer Strahlung wie sichtbarem Licht. Hierdurch können wiederum besondere optische Effekte erzielt werden. Eine möglichst einheitlich plane Ausformung erweist sich beispielsweise zur Erzielung einer besonders hohen Brillanz als vorteilhaft, da hiermit eine räumlich gleichgerichtete Reflexion der Pigmente erreicht werden kann und nur wenig Streuung auftritt.

Bei den meisten erfindungsgemäßen Metallpigmenten stehen insbesondere die optischen Effekte im Vordergrund und daher sind plättchenförmige Pigmente bevorzugt. Insbesondere bei der Verwendung von ferromagnetischen Pigmenten können besondere Effekte jedoch beispielsweise auch durch Anlegung eines Magnetfeldes und dadurch induziert eine nachträgliche Verschiebung und lokale An- bzw. Abreicherungen der Pigmente in Teilbereichen des applizierten Lackes erzielt werden.

Überraschenderweise hat sich gezeigt, dass durch Aufbringung des mindestens einen vorkondensierten Heteropolysiloxans auf die mindestens eine umhüllende, mindestens ein Metalloxid umfassende Beschichtungsschicht unter anderem die Stabilität und insbesondere die Gasungsstabilität der hiermit beschichteten Pigmente erhöht wird.

Es wird vermutet, dass eine Reaktion des vorkondensierten Heteropolysiloxans mit dem Metalloxidbestandteil der umhüllenden Beschichtung erfolgt, infolge der das Heteropolysiloxan auf der Oberfläche verankert wird. Dieses gebundene Heteropolysiloxan scheint eine Schutzschicht zu bilden, welche Schwachstellen der darunter liegenden mindestens ein Metalloxid umfassenden Beschichtungsschicht ausgleicht. Gleichzeitig ermöglicht die Verwendung eines vorkondensierten Heteropolysiloxans eine äußerst einfache Handhabung, bei der ein definiertes Produkt auf der Oberfläche aufgebracht wird. Überraschenderweise zeigte sich, dass eine äußerst homogene Beschichtung mittels der vorkondensierten Heteropolysiloxane aufgebracht werden kann. Hingegen wurde gefunden, dass der Verwendung von monomeren Silanen direkt in Gegenwart der zu beschichtenden Metallpigmente zu einer inhomogene Beschichtung der Pigmente führt.

Bei den erfindungsgemäßen Pigmenten wurde beispielsweise eine erhöhte Chemikalienstabilität, erhöhte Oxidationsstabilität und eine verminderte Gasung beobachtet, verglichen mit Pigmenten, bei denen anstelle von vorkondensierten Heteropolysiloxanen monomere Silane bei der Beschichtung verwendet wurden. Besonders hoch war der Stabilitätsgewinn hinsichtlich der Gasungsstabilität.

## Vorkondensierte Heteropolysiloxane gemäß Variante I

Erfindungsgemäß zu verwendende vorkondensierte Heteropolysiloxane können beispielsweise durch Mischen von Aminoalkylalkoxysilanen der allgemeinen Formel (RI) mit Alkyltrialkoxysilanen und/oder Dialkyldialkoxysilanen der allgemeinen Formeln (RII) und (RIII), Versetzen des Gemisches mit Wasser, Einstellen des pH-Wertes der Reaktionsmischung auf einen Wert zwischen 1 und 8 sowie Entfernen des vorhandenen und/oder bei der Umsetzung entstandenen Alkohols hergestellt werden. Die vorkondensierten Heteropolysiloxane sind im Wesentlichen frei von organischen Lösemitteln. Die so hergestellten vorkondensierten Heteropolysiloxane sind klare, stabile Lösungen, die einen Flammpunkt von deutlich mehr als 80 °C besitzen und auch beim Verdünnen mit Wasser im Wesentlichen keine Alkohole durch Hydrolyse freisetzen.

Mithin sind die erfindungsgemäß zu verwendenden Heteropolysiloxane vorzugsweise wasserbasierende Organopolysiloxan-haltige Zusammensetzungen, die im Wesentlichen frei von organischen Lösemitteln sind, einen Flammpunkt von deutlich mehr als 80 °C besitzen und bei Verdünnen mit Wasser im Wesentlichen keine Alkohole durch Hydrolyse freisetzen.

So können in den erfindungsgemäß zu verwendenden vorkondensierten Heteropolysiloxanen zum Beispiel lineare Cokondensate der Formel (SI)

$$HO\text{-}[[Si(R)(OH)_{1-y}(R^1)_y\text{-}O]_q[\text{-}Si(A)(A')\text{-}O]_a[\text{-}Si(R^2)(OH)\text{-}O]_m]\text{-}H \qquad (SI)$$

und/oder cyclische Cokondensate der Formel (SII)

$$\overline{\underline{[[\text{-}Si(R)(OH)_{1-y}(R^1)_y\text{-}O]_{q'}[\text{-}Si(A)(A')\text{-}O]_{a'}[\text{-}Si(R^2)(OH)\text{-}O]_{m'}]}} \qquad (SII)$$

und/oder lineare Kondensate der Formel (SIII)

$$HO[\text{-}Si(R)(OH)_{1-y}(R^1)_y\text{-}O]_{x''}\text{-}H \qquad (SIII)$$

und/oder lineare Kondensate der Formel (SIV)

$$HO[\text{-}Si(R^2)(OH)\text{-}O]_{x'''}\text{-}H \qquad (SIV)$$

und/oder lineare Kondensate der Formel (SV)

$HO[-Si(A)(A')-O]_{x'''}-H$ (SV)

und/oder cyclische Kondensate der Formel (SVI)

$$\overline{[-Si(R)(OH)_{1-y}(R^1)_y-O]_{x'''}} \quad (SVI)$$

und/oder cyclische Kondensate der Formel (SVII)

$$\overline{[-Si(R^2)(OH)-O]_{x'''}} \quad (SVII)$$

und/oder cyclische Kondensate der Formel (SVIII)

$$\overline{[-Si(A)(A')-O]_{x'''}} \quad (SVIII)$$

und/oder Silanole der Formel (SIX)

$Si(R)(R^1)_y(OH)_{3-y}$ (SIX)

und/oder Silanole der Formel (SX)

$Si(R^2)(OH)_3$ (SX)

und/oder Silanole der Formel (SXI)

$Si(A)(A')(OH)_2$ (SXI)

enthalten sein,
wobei die voranstehenden Formeln keine Reihenfolge der einzelnen Silankomponenten innerhalb des jeweiligen Polysiloxans vorgeben,
wobei die R unabhängig voneinander ausgewählt werden aus aminofunktionellen organischen Gruppen der Formel (SXII)

$[Z_{(f+g+h)}]^{(f+g+h)-}[NH_{2+f}-(CH_2)_b-(NH_{g+1})_c-(CH_2)_d-(NH_{h+1})_e-(CH_2)_i]^{(f+g+h)+}-$ (SXII)

wobei $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$, falls $b = 0$ dann $c = 0$, falls $d = 0$ dann $e = 0$, falls $i = 0$ dann $e = 0$, falls $d = i = 0$ dann $c = 0$, und Z ein einwertiger anorganischer oder organischer Säure-Rest ist, der beispielsweise ausgewählt wird aus der Gruppe bestehend aus Chlorid, Nitrat, Formiat und Acetat,
wobei die $R^1$ unabhängig voneinander ausgewählt werden aus der Gruppe bestehend aus Methyl und Ethyl,
die $R^2$ unabhängig voneinander ausgewählt werden aus der Gruppe bestehend aus linearen, cyclischen und verzweigten Alkylgruppen mit 1 bis 8 C-Atomen,
die A unabhängig voneinander ausgewählt werden aus der Gruppe bestehend aus unverzweigten und verzweigten Alkylgruppen mit 1 bis 3 C-Atomen,
die A' unabhängig voneinander ausgewählt werden aus der Gruppe bestehend aus unverzweigten und verzweigten Alkylgruppen mit 1 bis 3 C-Atomen,
jeweils unabhängig voneinander $0 \leq y \leq 1$ ist und
q+a+m, q'+a'+m', x" und x"' jeweils einen gemittelten Wert von mindestens 4 aufweisen. Hierbei werden die x" und x"' der Formeln (SIII), (SIV), (SV), (SVI), (SVII) und (SVIII) jeweils separat betrachtet. Vorzugsweise liegt das Verhältnis von M/Q zwischen 0 und 2, mehr bevorzugt zwischen 0,1 und 2, wobei Q die Summe der Molzahlen der

aminohaltigen Silane gemäß Formel (SIX) und den entsprechenden in den Kondensaten enthaltenen Silankomponenten ist,
M die Summe der Molzahlen von $M^1$ und $M^2$ ist,
$M^1$ die Summe der Molzahlen der Silane gemäß Formel (SX) und den entsprechenden in den Kondensaten enthaltenen Silankomponenten,
$M^2$ die Summe der Molzahlen der Silane gemäß Formel (SXI) und den entsprechenden in den Kondensaten enthaltenen Silankomponenten ist. Wie bereits voranstehend angemerkt geben die vorgenannten Strukturen nicht die Reihenfolge der darin enthaltenen Silankomponenten vor. So sind die voranstehenden erfindungsgemäß verwendeten Polysiloxane insbesondere nicht lediglich auf entsprechende Blockpolymere beschränkt. Die gemittelten Werte von q+a+m, q'+a'+m', x" und x"' ergeben sich als das arithmetische Mittel der entsprechenden Verbindungen.

Bei weiteren Ausführungsformen ist es bevorzugt, dass $M^2/M^1$ kleiner 0,1, mehr bevorzugt 0, ist.

Des Weiteren sind erfindungsgemäß zu verwendende vorkondensierte Heteropolysiloxane beispielsweise erhältlich durch

- Mischen wasserlöslicher Aminoalkylalkoxysilane der allgemeinen Formel (RI)

$$Si(R)(R^1)_y(OR^{1*})_{3-y} \qquad (RI)$$

mit nicht wasserlöslichen Alkyltrialkoxysilanen der allgemeinen Formel (RII)

$$Si(R^2)(OR^{1**})_3 \qquad (RII)$$

oder nicht wasserlöslichen Dialkyldialkoxysilanen der allgemeinen Formel (RIII)

$$Si(A)(A')(OR^{1***})_2 \qquad (RIII)$$

oder Mischungen aus nicht wasserlöslichen Alkyltrialkoxysilanen und Dialkyldialkoxysilanen der allgemeinen Formeln (RII) und (RIII),
wobei die R unabhängig voneinander ausgewählt werden aus aminofunktionellen organischen Gruppen gemäß Formel (RIV)

$$[Z_{(f+g+h)}]^{(f+g+h)-}[NH_{2+f}-(CH_2)_b-(NH_{g+1})_c-(CH_2)_d-(NH_{h+1})_e-(CH_2)_i]^{(f+g+h)+} - \qquad (RIV),$$

wobei $0 \leq b \leq 3$, $0 \leq d \leq 3$, $0 \leq i \leq 3$, $0 \leq f \leq 1$, $0 \leq g \leq 1$, $0 \leq h \leq 1$, $0 \leq c \leq 1$, $0 \leq e \leq 1$, $b + d + i \neq 0$ , falls b = 0 dann c = 0, falls d = 0 dann e = 0, falls i = 0 dann e = 0, falls d = i = 0 dann c = 0, und Z ein einwertiger anorganischer oder organischer Säure-Rest ist,
die $R^1$, $R^{1*}$, $R^{1**}$ und $R^{1***}$ jeweils unabhängig voneinander ausgewählt werden aus der Gruppe bestehend aus Methyl und Ethyl,
die $R^2$ unabhängig voneinander ausgewählt werden aus der Gruppe bestehend aus linearen, cyclischen und verzweigten Alkylgruppen mit 1 bis 8 C-Atomen,
die A unabhängig voneinander ausgewählt werden aus der Gruppe bestehend aus unverzweigten und verzweigten Alkylgruppen mit 1 bis 3 C-Atomen,
die A' unabhängig voneinander ausgewählt werden aus der Gruppe bestehend aus unverzweigten und verzweigten Alkylgruppen mit 1 bis 3 C-Atomen und jeweils unabhängig voneinander $0 \leq y \leq 1$ ist,
in dem molaren Verhältnis $0 < M/Q \leq 2$,
wobei Q die Summe der Molzahlen der Aminoalkylalkoxysilane der allgemeinen Formel (RI) und M die Summe der Molzahlen der Alkyltrialkoxysilane der allgemeinen Formel (RII) und der Dialkyldialkoxysilane der allgemeinen Formel (RIII) ist,

- Versetzen des Gemisches mit Wasser,
- Einstellen des pH-Wertes der Reaktionsmischung auf einen Wert zwischen 1 und 8 und
- Entfernen des bereits vorhandenen und/oder bei der Umsetzung entstandenen

Alkohols. Der Begriff "wasserlöslich" im Sinne der vorliegenden Erfindung bedeutet vorzugsweise, dass bei 20 °C in Wasser bei einem pH-Wert von 7 mindestens 1 g/l der betreffenden Verbindung gelöst werden kann. Der Begriff "nicht wasserlöslich" im Sinne der vorliegenden Erfindung bedeutet vorzugsweise, dass bei 20 °C in Wasser bei einem

pH-Wert von 7 höchstens 0,1 g/l der betreffenden Verbindung gelöst werden kann.

Dabei werden als nicht wasserlösliche Ausgangskomponenten vorzugsweise Mischungen aus Alkyltrialkoxysilanen der allgemeinen Formel (RII) und Dialkyldialkoxysilanen der allgemeinen Formel (RIII), die durch gleichzeitige Veresterung der entsprechenden Tri- und Dichlorsilane der allgemeinen Formeln (RV) und (RVI)

$Si(R^2)(Cl)_3$ (RV)

$Si(A)(A')(Cl)_2$ (RVI),

wobei die $R^2$ unabhängig voneinander ausgewählt werden aus der Gruppe bestehend aus linearen, cyclischen und verzweigten Alkylgruppen mit 1 bis 8 C-Atomen,
die A unabhängig voneinander ausgewählt werden aus der Gruppe bestehend aus unverzweigten und verzweigten Alkylgruppen mit 1 bis 3 C-Atomen und
die A' unabhängig voneinander ausgewählt werden aus der Gruppe bestehend aus unverzweigten und verzweigten Alkylgruppen mit 1 bis 3 C-Atomen,
mit Methanol oder Ethanol hergestellt. Die Mischungen an sich können aber auch aus den reinen Einzelkomponenten, den Alkyltrialkoxy- und Dialkyldialkoxysilanen der allgemeinen Formeln (RII) und (RIII), durch Abmischen erhalten werden.

Im Übrigen wird auf die EP 0 716 128 A2 verwiesen, deren Inhalt unter Bezugnahme hiermit aufgenommen ist.

**Vorkondensierte Heteropolysiloxane gemäß Variante II**

Erfindungsgemäß zu verwendende vorkondensierte Heteropolysiloxane auf Wasserbasis sind auch erhältlich, wenn man nicht wasserlösliche Organosilane der allgemeinen Formel (TII) mit wasserlöslichen Organosilanen der allgemeinen Formel (TI) in einem molaren Verhältnis M, das heißt bezogen auf die nicht wasserlöslichen Organotrialkoxysilane, zu Q, das heißt bezogen auf die wasserlöslichen Aminoalkylalkoxysilane, von $0 < M/Q \leq 2$ mischt, das Gemisch mit Wasser versetzt, den pH-Wert der Reaktionsmischung auf einen Wert zwischen 1 und 8 einstellt sowie bereits vorhandenen bzw. den bei der Umsetzung entstandenen Alkohol destillativ abtrennt. Bevorzugt gibt man während der destillativen Abtrennung des Alkohols Wasser in dem Maße zu, wie Alkohol bzw. Alkohol/Wasser-Gemisch aus dem Reaktionsmedium entfernt wird. Zum Einstellen des pH-Wertes sind einbasige Säuren besonders geeignet. So hergestellte vorkondensierte Heteropolysiloxane setzen auch bei Verdünnen mit Wasser keine weiteren Alkohole durch Hydrolyse frei und weisen einen Flammpunkt von deutlich mehr als 70 °C auf.

Auch können erfindungsgemäß vorkondensierte Heteropolysiloxane auf Wasserbasis verwendet werden, die im Wesentlichen frei von organischen Lösemitteln sind, einen Flammpunkt von mehr als 70 °C besitzen, bei Verdünnen mit Wasser im Wesentlichen keine Alkohole durch Hydrolyse freisetzen, wobei der Alkohol-Gehalt in den Zusammensetzungen weniger als 5 Gew.-% beträgt, und erhältlich sind durch

- Mischen von Q Molen wasserlöslicher Aminoalkylalkoxysilane der allgemeinen Formel (TI)

  $Si(R)(R^1)_y(OR^{1*})_{3-y}$ (TI)

  mit M Molen nicht wasserlöslicher Alkylalkoxysilane der allgemeinen Formel (TII)

  $Si(R^2)(OR^{1**})_3$ (TII)

  wobei die R unabhängig voneinander ausgewählt werden aus aminofunktionellen organischen Gruppe der allgemeinen Formel (TIII)

  $[Z_{(f+c \cdot f^*)}]^{(f+c \cdot f^*)-}[A_dNH_{(2+f-d)}-(CH_2)_a-NA^1_eH_{(1-e+f^*)}-]_c(CH_2)_b-]^{(f+c \cdot f^*)+}$ (TIII),

  wobei $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$ ist,
  die A und $A^1$ jeweils unabhängig voneinander ausgewählt werden aus der Gruppe bestehend aus Benzylgruppen und Vinylgruppen, N ein Stickstoffatom symbolisiert und Z ein einwertiger anorganischer oder organischer Säurerest ist,
  die $R^1$, $R^{1*}$, $R^{1**}$ jeweils unabhängig voneinander ausgewählt werden aus der Gruppe bestehend aus Methyl und Ethyl und

die $R^2$ unabhängig voneinander ausgewählt werden aus der Gruppe bestehend aus linearen, cyclischen und verzweigten Alkylgruppen mit 1 bis 6 C-Atomen und Ureido-Alkylgruppen der Formel (TIV)

$$NH_2\text{-CO-NH-}(CH_2)_b\text{-} \qquad \text{(TIV)}$$

wobei $1 \leq b \leq 6$,
jeweils unabhängig voneinander $0 \leq y \leq 1$ ist,
in dem molaren Verhältnis $0 < M/Q \leq 2$,

- Versetzen des Gemisches mit Wasser,
- Einstellen des pH-Wertes der Reaktionsmischung auf einen Wert zwischen 1 und 8 und
- Entfernen des bereits vorhandenen und/oder bei der Umsetzung entstandenen Alkohols.

So können in den erfindungsgemäß zu verwendenden vorkondensierten Heteropolysilxanen zum Beispiel lineare Cokondensate der Formel (UI)

$$HO[[\text{-Si(R)(OH)}_{1-y}(R^1)_y\text{-O}]_q[\text{-Si}(R^2)\text{(OH)-O}]_m]\text{-H} \qquad \text{(UI)}$$

und/oder cyclische Cokondensate der Formel (UII)

$$[[\text{-Si(R)(OH)}_{1-y}(R^1)_y\text{-O}]_{q'}[\text{-Si}(R^2)\text{(OH)-O}]_{m'}] \qquad \text{(UII)}$$

und/oder lineare Kondensate der Formel (UIII)

$$HO[\text{-Si(R)(OH)}_{1-y}(R^1)_y\text{-O}]_{x''}\text{-H} \qquad \text{(UIII)}$$

und/oder lineare Kondensate der Formel (UIV)

$$HO[\text{-Si}(R^2)\text{(OH)-O}]_{x''}\text{-H} \qquad \text{(UIV)}$$

und/oder cyclische Kondensate der allgemeinen Formel (UV)

$$[\text{-Si(R)(OH)}_{1-y}(R^1)_y\text{-O}]_{x'''} \qquad \text{(UV)}$$

und/oder cyclische Kondensate der Formel (UVI)

$$[\text{-Si}(R^2)\text{(OH)-O}]_{x'''} \qquad \text{(UVI)}$$

und/oder Silanole der Formel (UVII)

$$Si(R)(R^1)_y(OH)_{3-y} \qquad \text{(UVII)}$$

und/oder Silanole der Formel (UVIII)

$$Si(R^2)(OH)_3 \qquad \text{(UVIII)}$$

enthalten sein,
wobei die voranstehenden Formeln keine Reihenfolge der einzelnen Silankomponenten innerhalb des jeweiligen Polysiloxans vorgeben,
wobei die R unabhängig voneinander ausgewählt werden aus aminofunktionellen organischen Gruppen der Formel (UIX)

$$[Z_{(f+c\cdot f^*)}]^{(f+c\cdot f^*)-}[A_dNH_{(2+f-d)}-[(CH_2)_a-NA^1{}_eH_{(1-e+f^*)}-]_c(CH_2)_b-]^{(f+c\cdot f^*)+}, \quad \text{(UIX)},$$

wobei $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$ und die A und $A^1$ unabhängig voneinander ausgewählt werden aus der Gruppe bestehend aus Benzylgruppen und Vinylbenzylgruppen, N ein Stickstoffatom und Z ein einwertiger anorganischer oder organischer Säurerest ist, der beispielsweise ausgewählt wird aus der Gruppe bestehend aus $Cl^-$, $NO_3^-$, $HCOO^-$ und $CH_3COO^-$,
wobei die $R^1$ unabhängig voneinander ausgewählt werden aus der Gruppe bestehend aus Methyl und Ethyl und die $R^2$ unabhängig voneinander ausgewählt werden aus der Gruppe bestehend aus linearen, cyclischen und verzweigten Alkylgruppen mit 1 bis 6 C-Atomen und Ureido-Alkylgruppen der Formel (UX)

$$NH_2-CO-NH-(CH_2)_b- \quad \text{(UX)},$$

mit $1 \leq b \leq 6$,
wobei jeweils unabhängig voneinander $0 \leq y \leq 1$ ist und
q + m, q' +m', x" und x'" jeweils einen gemittelten Wert im Bereich von 2 bis 20 aufweisen. Hierbei werden die x" und x'" der Formeln (UIII), (UIV), (UV) und (UVI) jeweils separat betrachtet. Vorzugsweise liegt das Verhältnis M/Q zwischen 0 und 2, wobei Q die Summe der Molzahlen der aminohaltigen Silane gemäß Formel (UVII) und den entsprechenden in den Kondensaten enthaltenen Silankomponenten ist,
M die Summe der Molzahlen der Silane gemäß Formel (UVIII) und den entsprechenden in den Kondensaten enthaltenen Silankomponenten ist. Wie bereits voranstehend angemerkt geben die vorgenannten Strukturen nicht die Reihenfolge der darin enthaltenen Silankomponenten vor. So sind die voranstehenden erfindungsgemäß verwendeten Polysiloxane insbesondere nicht lediglich auf entsprechende Blockpolymere beschränkt. Die gemittelten Werte von q + m, q' + m', x" und x"' ergeben sich als das arithmetische Mittel der entsprechenden Verbindungen.

Des Weiteren sind erfindungsgemäß zu verwendende vorkondensierte Heteropolysiloxane beispielsweise erhältlich, indem man

- Q Mole wasserlöslicher Aminoalkylalkoxysilane der Formel (TI)

$$Si(R)(R^1)_y(OR^{1*})_{3-y} \quad \text{(TI)}$$

mit M Molen nicht wasserlöslicher Alkylalkoxysilane der Formel (TII)

$$Si(R^2)(OR^{1***})_3 \quad \text{(TII)}$$

wobei die R unabhängig voneinander ausgewählt werden aus aminofunktionellen organischen Gruppen der Formel (TIII)

$$[Z_{(f+c\cdot f^*)}]^{(f+c\cdot f^*)-}[A_dNH_{(2+f-d)}-(CH_2)_a-NA^1{}_eH_{(1-e+f^*)}-]_c(CH_2)_b-]^{(f+c\cdot f^*)+} \quad \text{(TIII)},$$

wobei $1 \leq a \leq 6$, $1 \leq b \leq 6$, $0 \leq c \leq 6$, $0 \leq d \leq 2$, $0 \leq e \leq 1$, $0 \leq f \leq 1$, $0 \leq f^* \leq 1$ ist,
A und $A^1$ einen Benzyl- oder Vinylbenzyl-Rest darstellen,
N ein Stickstoffatom symbolisiert,
Z ein einwertiger anorganischer oder organischer Säurerest ist, der beispielsweise ausgewählt wird aus der Gruppe bestehend aus $Cl^-$, $NO_3^-$, $HCOO^-$, und $CH_3COO^-$,
die $R^1$, $R^{1*}$, $R^{1**}$ jeweils unabhängig voneinander ausgewählt werden aus der Gruppe bestehend aus Methyl und Ethyl,
die $R^2$ unabhängig voneinander ausgewählt werden aus der Gruppe bestehend aus linearen, cyclischen und verzweigten Alkylgruppen mit 1 bis 6 C-Atomen und Ureido-Alkylgruppen der Formel (TIV)

$$NH_2-CO-NH-(CH_2)_b- \quad \text{(TIV)}$$

wobei $1 \leq b \leq 6$,
und jeweils unabhängig voneinander $0 \leq y \leq 1$ ist,

- in dem molaren Verhältnis $0 < M/Q \leq 2$,
- das Gemisch mit Wasser versetzt,
- den pH-Wert der Reaktionsmischung auf einen Wert zwischen 1 und 8 einstellt,

- den bereits vorhandenen und/oder bei der Umsetzung entstandenen Alkohol entfernt.

Im Übrigen wird auf die EP 0 716 127 B1 verwiesen, deren Inhalt unter Bezugnahme hiermit aufgenommen ist.

Bevorzugte Heteropolysiloxane sind von der Firma Evonik Industries AG, 45128 Essen, Deutschland, unter den Handelsnamen Dynasylan Hydrosil 2627, Dynasylan Hydrosil 2776, Dynasylan Hydrosil 2909, Dynasylan 1146 und Dynasylan Hydrosil 2907 erhältlich. Besonders bevorzugte wasserbasierende Heteropolysiloxane sind Dynasylan Hydrosil 2627, Dynasylan Hydrosil 2776, Dynasylan Hydrosil 2907 und Dynasylan Hydrosil 2909.

Gemäß einer bevorzugten Variante der Erfindung wird das vorkondensierte Heteropolysiloxan aus der Gruppe, die aus Dynasylan Hydrosil 2627, Dynasylan Hydrosil 2776, Dynasylan Hydrosil 2909, Dynasylan 1146, Dynasylan Hydrosil 2907 und Mischungen davon besteht, ausgewählt.

Die Heteropolysiloxane weisen bevorzugt ein mittleres Molekulargewicht von mindestens 500 g/mol, besonders bevorzugt von mindestens 750 g/mol und ganz besonders bevorzugt von mindestens 1000 g/mol auf. Das mittlere Molekulargewicht kann beispielsweise mittels NMRspektrokopischen Methoden wie $^{29}$Si-NMR gegebenenfalls in Verbindung mit $^{1}$H-NMR erfolgen. Eine Beschreibung derartiger Verfahren findet sich beispielsweise in Publikationen wie "Organofunctional alkoxysilanes in dilute aqueous solution: new accounts on the dynamic structural mutability", Journal of Organometallic Chemistry 625 (2001) 208-216.

Ferner zeigte sich überraschenderweise, dass die erfindungsgemäß beschichteten Metallpigmente eine signifikant verringerte Agglomeration aufweisen, verglichen mit herkömmlich beschichteten Pigmenten. Neben der vereinfachten Handhabung, Prozessierung und Verwendung der erfindungsgemäßen Pigmente in hochkonzentrierter Form, wie in Form eine Paste, wirkt sich dies überraschenderweise auch signifikant auf die Eigenschaften der Pigmente in Form eines Trockenpräparates aus. So ist es mit den erfindungsgemäßen Pigmenten sogar möglich, PVD-Pigmente in Pulverform auf einfachste Weise zu erhalten, ohne signifikante Qualitätseinbußen bei den PVD-Pigmenten im Hinblick auf Agglomeration und in Folge dessen bei den optischen Eigenschaften hinnehmen zu müssen.

Die Möglichkeit, qualitativ hochwertige, jedoch empfindliche Pigmente, wie insbesondere PVD-Pigmente, in stark konzentrierter Form ohne Gefahr von wesentlichen Qualitätseinbußen verarbeiten zu können, führt zu mehreren Vorteilen. Beispielsweise wird die Handhabung der Pigmente vereinfacht, und es werden die Anwendungsmöglichkeiten stark erweitert. Auch wird die Reinigung der Pigmente vereinfacht, und es wird eine gleichbleibend hohe Qualität bei dem Endanwender bei verringerten Anforderungen an Transport, Lagerung und Prozessierung gewährleistet.

Die Möglichkeit einer signifikanten Konzentrierung von PVD-Pigmenten und sogar deren Trocknung ermöglicht eine gänzlich neue Handhabung der Pigmente. Beispielsweise können entsprechende Pigmente mittels einfacher Verfahrensschritte ohne merkliche Qualitätsverluste vor weiteren Aufarbeitungsschritten abfiltriert werden. Beispielsweise können die Pigmente nach vollständiger Entfernung des Lösungsmittels direkt in lösemittelfreien Lackanwendungen eingesetzt werden. Beispielsweise wird der Transport und die Lagerung infolge der Abtrennungsmöglichkeit des Lösungsmittels sehr stark vereinfacht. Beispielsweise sind neue Modifizierungsmöglichkeiten, beispielsweise eine Modifizierung der Pigmente in einer Gasphasenreaktion, gegeben. Beispielsweise ermöglicht die vorliegende Erfindung die Verwendung der Pigmente in lösemittelfreien Systemen, wie Pulverlack oder Kunststoffen, oder in Systemen bei denen Lösemittel Probleme bereiten können, wie UV-Lacke und Druckfarben. Beispielsweise können Bestandteile leicht entfernt werden, welche im Produkt zur Migration neigen würden. Dies vereinfacht oder ermöglicht erst die Verwendung von Pigmenten im Lebensmittelbereich. Beispielsweise wird ein Umnetzen auf ein anderes Lösemittel, d.h. ein Austausch des Lösemittels, deutlich vereinfacht.

Ferner zeigte sich überraschenderweise bei den erfindungsgemäßen Pigmenten eine gute Applizierbarkeit, sehr gute Deckung und Abriebbeständigkeit bei der Verwendung in einem Pulverlack. So zeigte sich beispielsweise bei der Pulverlackapplikation von erfindungsgemäßen Aluminiumpigmenten eines deutlich verbesserte Applizierbarkeit, verglichen mit analogen Aluminiumpigmenten ohne Heteropolysiloxan. Insbesondere erwies sich die erfindungsgemäß aufzubringende Beschichtung als vorteilhaft bei der Beschichtung ferromagnetischer Pigmente, welche zudem während oder nach Applikation des Pulverlackes besonders gut ausgerichtet werden können.

Die ferromagnetischen Pigmente werden beispielsweise während der Applikation durch ein Magnetfeld, beispielsweise eines an der Rückseite des zu beschichteten Stoffes angeordneten, beispielsweise befestigten, Magneten, abgelenkt, so dass es an bestimmten Stellen zu einer Häufung von ferromagnetischen Pigmenten kommt und an anderen Stellen zu einem Mangel. Ferner kann beispielsweise die Orientierung der Pigmente nach der Aufbringung mittels eines Magnetfeldes beeinflusst werden, wodurch besondere optische Effekte erzielt werden können. Mithin können besondere optische Effekte bei Verwendung von erfindungsgemäßen ferromagnetischen Pigmenten reproduzierbar erzeugt werden.

Bei einer erfindungsgemäßen Variante, bei der der angeordnete Magnet an dem zu beschichtenden Stoff verbleibt, während das Beschichtungsmittel, beispielsweise ein Lack, beispielsweise in einem Ofen, ausgehärtet wird, ist es nun möglich, eine Optik zu generieren, die mit einem anderen zweischichtigen Aufbau, beispielsweise mit einer Metalloxidschicht und einer darauf angeordneten Acrylatschicht, nicht erzeugt werden kann.

Überraschenderweise hat sich bei einer erfindungsgemäßen zweiten Variante, bei der der Magnet vor dem Aushärten des Beschichtungsmittels entfernt wird, gezeigt, dass die Pigmente mit Metalloxidschicht und Heteropolysiloxan-Modifizierung eine besondere Haptik hervorrufen Diese Haptik ähnelt einer Blindenschrift. Hingegen konnte diese Haptik bei Verwendung von ferromagnetischen Pigmenten mit einem anderen 2-Schichtaufbau, beispielsweise mit einer Metalloxidschicht und einer darauf angeordneten Acrylatschicht, welche unter gleichen Bedingungen appliziert wurden, nicht beobachtet werden.

Insbesondere erwies sich die erfindungsgemäß aufzubringende zwei Schichten umfassende Beschichtung als vorteilhaft für die Beschichtung ferromagnetischer Pigmente, welche zudem während oder nach Applikation des Pulverlackes, vorzugsweise unter Einfluss einer Magnetfeldes, ausgerichtet werden können.

Ein Merkmal zur Charakterisierung der erfindungsgemäßen Pigmente, deren Metallkerne oder metallischen Substrate, ist die Größe der Pigmente. Diese wird typischerweise mittels D-Werten angeben. Hierbei gibt die angegebene Zahl an, wieviel % der Partikel in einer volumengemittelten Partikelgrößenverteilung unterhalb einer angegebenen Größe liegen. Beispielsweise gibt der $D_{50}$-Wert an, unter welcher Größe 50% der Partikel liegen. Die Messungen erfolgen beispielsweise mittels Lasergranulometrie unter Einsatz eines Partikelgrößenanalysator der Fa. Quantachrome (Gerät: Cilas 1064). Die Messung erfolgt hierbei gemäß Herstellerangaben. Hierzu werden 1,5 g des pulverförmigen Beschichtungsmaterials oder Paste mit einem Feststoffgehalt von 1,5 g in ca. 100 ml Ethanol dispergiert, 300 Sekunden in einem Ultraschallbad (Gerät: Sonorex IK 52, Fa. Bandelin) behandelt und anschließend mittels einer Pasteurpipette in die Probenvorbereitungszelle des Messgerätes gegeben und mehrmals vermessen. Aus den einzelnen Messergebnissen werden die resultierenden Mittelwerte gebildet. Die Auswertung der Streulichtsignale erfolgt dabei nach der Fraunhofer Methode.

Die erfindungsgemäßen Metallpigmente, insbesondere die Metalleffektpigmente, weisen vorzugsweise einen mittleren Pigmentdurchmesser ($D_{50}$-Wert) in einem Bereich von 2 bis 66 μm, vorzugsweise in einem Bereich von 4 bis 50 μm, noch weiter bevorzugt in einem Bereich von 8 bis 47 μm auf.

Ferner liegt der $D_{90}$-Wert vorzugsweise in einem Bereich von 10 bis 81 μm, weiter bevorzugt in einem Bereich von 16 bis 80 μm und noch weiter bevorzugt in einem Bereich von 21 bis 79 μm.

Zudem ist es weiter bevorzugt, dass der $D_{10}$-Wert in einem Bereich von 0,5 bis 34 μm, weiter bevorzugt in einem Bereich von 1 bis 29 μm und noch weiter bevorzugt in einem Bereich von 2 bis 27 μm liegt.

Insbesondere ist es bei Ausführungsformen der Erfindung bevorzugt, dass der $D_{50}$-Wert in einem Bereich von 2 bis 66μm, der $D_{90}$-Wert in einem Bereich von 10 bis 81μm und der $D_{10}$-Wert in einem Bereich von 0,5 bis 34μm liegt. Vorzugsweise liegt der $D_{50}$-Wert in einem Bereich von 4 bis 50 μm, der $D_{90}$-Wert in einem Bereich von 16 bis 80 μm und der $D_{10}$-Wert in einem Bereich von 1 bis 29 μm.

Ein weiteres Merkmal zur Charakterisierung der erfindungsgemäßen Metallpigmente, vorzugsweise Metalleffektpigmente, ist der Span ΔD, der folgendermaßen definiert ist

$$\Delta D = (D_{90} - D_{10}) / D_{50}.$$

Vorzugsweise weisen die erfindungsgemäßen Metallpigmente, insbesondere die Metalleffektpigmente, einen Span in einem Bereich von 0,6 bis 2,1, vorzugsweise in einem Bereich von 0,7 bis 1,9 und noch weiter bevorzugt in einem Bereich von 0,75 bis 1,7, auf.

Ferner zeichnen sich die erfindungsgemäßen beschichteten Metalleffektpigmente, vorzugsweise Metalleffektpigmente, vorzugsweise durch eine bestimmte mittlere Dicke ($h_{50}$-Wert) aus. Die mittlere Dicke gibt den Wert an, bei dem 50% der Metallpigmente in einer Summenhäufigkeitsverteilung, die auch als Summendurchgangskurve bezeichnet wird, die angegebene Dicke oder weniger haben, wobei mindestens 100 Pigmente, beispielsweise 100 Pigmente, vermessen wurden.

Die Präparation und die Vermessung der Pigmente zur Bestimmung der Dickenverteilung erfolgt nach der in der EP 1 613 702 B1 ([0125 - [0126]) beschriebenen Methode. Es werden dabei nur Pigmente mit einem azimuthalen Winkel von unter 10° gezählt. Die Bestimmung einschlägiger Kennwerte der Summendurchgangskurve kann beispielsweise mittels eines Standardprogramms wie excel (Quantil-Funktion) erfolgen.

Sollte das vorgenannte Verfahren zur Präparation der Pigmente nicht anwendbar sein, so kann alternativ beispielsweise eine Präparation im Lack erfolgen. Hierbei ist auf eine möglichst gute Orientierung der Plättchen im Anwendungsmedium zu achten. Anschließend wird der ausgehärtete Lack angeschliffen und der Querschliff im REM betrachtet. Für die Zählung werden nur Teilchen ausgewählt, die eine gute Orientierung aufweisen.

So ist es bei den erfindungsgemäßen beschichteten Metalleffektpigmenten bevorzugt, dass der $h_{50}$-Wert in einem Bereich von 15 nm bis 2 μm, vorzugsweise in einem Bereich von 20 nm bis 1,5 μm, liegt. Insbesondere ist es bei weiteren Ausführungsformen bevorzugt, dass die erfindungsgemäßen beschichteten Metalleffektpigmente einen $h_{50}$-Wert in einem Bereich von 20 nm bis 370 nm, weiter bevorzugt in einem Bereich von 20 nm bis 240 nm, und besonders bevorzugt in einem Bereich von 15 bis 80 nm und ganz besonders bevorzugt in einem Bereich von 20 bis

50 nm aufweisen.

Zur Charakterisierung der erfindungsgemäß besonders bevorzugten Metalleffektpigmente kann beispielsweise das Aspektverhältnis dienen. Dieses ergibt sich gemäß folgender Formel

$$\text{Aspektverhältnis} = \frac{D_{50}}{h_{50}}.$$

So sind die erfindungsgemäßen beschichteten Metalleffektpigmente bei bevorzugten Ausführungsformen durch ein Aspektverhältnis in einem Bereich von 1500:1 bis 10:1, vorzugsweise in einem Bereich von 1200:1 bis 15:1, weiter bevorzugt in einem Bereich von 950:1 bis 25:1, gekennzeichnet.

Die metallischen Substrate sind vorteilhafterweise Metalleffektpigmente. Unter dem Begriff "metallische Substrate" werden im Sinne der vorliegenden Erfindung unbeschichtete metallhaltige Pigmente verstanden, welche höchstens eine dünne Oxidationsschicht aufweisen. Vorzugsweise handelt es sich hierbei um Metallpigmente, welche im Wesentlichen, vorzugsweise vollständig, aus mindestens einem Metall oder mindestens einer Metalllegierungen bestehen. Insbesondere handelt es sich bei den metallischen Substraten nicht um Nanopartikel oder Nanopartikelagglomerate. Unter dem Begriff "Nanopartikel" im Sinne der vorliegenden Erfindung werden Partikel mit einer mittleren Partikelgröße von weniger als 400 nm verstanden. Vorzugsweise handelt es sich bei den metallischen Substraten nicht um Partikel mit einer mittleren Partikelgröße von weniger als 500 nm oder deren Agglomerate. Die Bestimmung von derart kleinen Partikeln erfolgt beispielsweise mittels eines DelsaNano C Gerätes der Firma Beckman Coulter gemäß Herstellerangaben.

Bei Anwendungen, bei denen hohe metallische Glanzwerte ohne gravierende Farbänderungen durch Oxidation des metallischen Substrats gewünscht sind, ist es bevorzugt, dass das Metall der erfindungsgemäßen verwendeten metallischen Substrats zum Großteil in elementarer Metallform, mithin in nichtoxidierter Form, vorliegt. Bei weiteren Ausführungsformen beträgt daher der Sauerstoffgehalt des Metalls des metallischen Substrats höchstens 15 Gew.-%, vorzugsweise höchstens 12 Gew.-%, weiter bevorzugt höchstens 8 Gew.-%, noch weiter bevorzugt höchstens 5 Gew.-% und am meisten bevorzugt höchstens 3 Gew.-%, jeweils bezogen auf das Gewicht des Metalls des metallischen Substrats.

Sofern jedoch auf spezifische Farbtöne erwünscht sind, können diese ohne zusätzliche Farbpigmente oder in Ergänzung zu vorhandenen Farbpigmenten mittels Einfärbung durch eine gezielte Oxidation der Metallpigmente unter Erzeugung einer farbgebenden Oxidschicht erzielt werden.

Die erfindungsgemäßen Metallpigmente umfassen das metallische Substrat und mindestens eine umhüllende Beschichtungsschicht, die mindestens ein Metalloxid aufweist. Auf diese umhüllende erste Beschichtungsschicht ist die zweite Beschichtungsschicht, die mindestens ein Heteropolysiloxan umfasst, aufgebracht. Die zweite Beschichtungsschicht kann nicht umhüllend oder umhüllend ausgebildet sein. Erfindungsgemäß handelt es sich bei dem metallischen Substrat um einen Metallkern.

Dieser Metallkern besteht vorzugsweise weitgehend aus einem Metall, das ausgewählt wird aus der Gruppe, bestehend aus Aluminium, Kupfer, Eisen, Zink, Zinn, Titan, Chrom, Kobalt, Silber, Edelstahl, Nickel, Antimon, Magnesium, Zirkonium, Silizium und Bor und Mischungen sowie Legierungen davon. Im Sinne der vorliegenden Erfindung umfasst der Begriff "Metall" auch die Halbmetalle Silizium und Bor, insbesondere Silizium, welche vorzugsweise als Legierungsbestandteil eingesetzt werden. Vorzugsweise stellen die vorgenannten Metalle mindestens 95 Gew.-% des Metallkerns dar, bezogen auf das Gewicht des Metallkerns ohne Sauerstoff. Aufgrund einer in den meisten Fällen schwer vermeidbaren oberflächlichen Oxidation wird der Gehalt an Sauerstoff bei der Berechnung des Metallanteils der vorgenannten Metalle nicht berücksichtigt.

Soweit nicht anderweitig spezifiziert, ist es in der vorliegenden Erfindung besonders bevorzugt, dass "im Wesentlichen" mindestens 95 %, vorzugsweise mindestens 99 %, bedeutet. Soweit es sich auf ein stoffliches Merkmal bezieht, wie beispielsweise der Gehalt eines spezifischen Metalls oder die Menge einer Beschichtung, so sind hiermit Gew.-% gemeint.

Bei weiteren Ausführungsformen ist es bevorzugt, dass das Metall des metallischen Substrats weitgehend aus einem Metall besteht, das ausgewählt wird aus der Gruppe, bestehend aus Aluminium, Kupfer, Eisen, Zink, Zinn, Titan, Edelstahl und Mischungen sowie Legierungen davon. Bestehend "weitgehend" aus einem Metall X oder einer Mischung der Metall X bis Z bedeutet im Sinne der vorliegenden Erfindung, dass das Metall X mindestens 60 Gew.-% darstellt, bezogen auf das Gewicht des Metalls des metallischen Substrats ohne Sauerstoff bzw. des Metallkerns ohne Sauerstoff. Vorzugsweise besteht das Metall des metallischen Substrats bzw. der Metallkern zu mindestens 95 Gew.-%, weiter bevorzugt zu mindestens 99 Gew.-% aus dem spezifizierten Metall oder den spezifizierten Metallen, jeweils bezogen auf das Gewicht des Metalls des metallischen Substrats ohne Sauerstoff bzw. des Metallkerns ohne Sauerstoff.

Bei weiteren Ausführungsformen ist es bevorzugt, dass sich die vorgenannten sowie nachfolgenden Angaben der vorliegenden Erfindung nicht auf das Metall des metallischen Substrats und das Gewicht des Metalls des metallischen

Substrats beziehen, sondern auf den Metallkern und das Gewicht des Metallkerns.

Bei weiteren Ausführungsformen ist es bevorzugt, dass das Metall des metallischen Substrats zu mindestens 95 Gew.-% aus einem Metall besteht das ausgewählt wird aus der Gruppe bestehend aus Aluminium, Eisen, Zink, Zinn, Silber, Kupfer, Chrom, Titan und Mischungen davon, bezogen auf das Gewicht des Metalls des metallischen Substrats ohne Sauerstoff.

Bevorzugte Mischungen der Metalle sind Messing (Goldbronze), Zink-Magnesium-Legierungen und Stahl.

Besonders bevorzugt sind Metallkerne, die zu mindestens 95 Gew.-% aus Aluminium, Eisen, Zink, Stahl, Kupfer oder Messing, weiter bevorzugt Aluminium, Kupfer, Eisen oder Messing, bestehen, bezogen auf das Gewicht des Metallkerns ohne Sauerstoff.

Eine besonders bevorzugte Gruppe von metallischen Substraten sind Metallkerne ausgewählt aus Aluminiumpigmenten. Insbesondere bevorzugt sind Metallkerne ausgewählt aus Aluminiumpigmenten. Vorzugsweise besteht bei weiteren Ausführungsformen das Metall des metallischen Substrats zu mindestens 95 Gew.-% aus Aluminium, bezogen auf das Gewicht des Metalls des metallischen Substrats ohne Sauerstoff. Ferner ist es bei weiteren Ausführungsformen bevorzugt, dass der Anteil an anderen Metallen in den metallischen Substraten weniger als 1 Gew.-%, mehr bevorzugt weniger als 0,1 Gew.-% beträgt, bezogen auf das Gewicht des Metalls des metallischen Substrats ohne Sauerstoff.

Eine weitere bevorzugte Gruppe von metallischen Substraten sind kupferhaltige metallische Substrate. Diese weisen einen Gehalt an elementarem Kupfer von wenigstens 50 Gew.-%, bevorzugt von wenigstens 70 Gew.-% auf, jeweils bezogen auf das Gewicht des Metalls des metallischen Substrats ohne Sauerstoff. Insbesondere ist es bevorzugt, dass kupferhaltige Metallkerne eingesetzt werden. Im Sinne der Erfindung wird unter dem vorgenannten Gehalt an elementarem Kupfer auch der in einer Legierung enthaltene Anteil an Kupfer verstanden. Besonders bevorzugt ist der Einsatz von plättchenförmigen kupferhaltigen Pigmenten, nachfolgend auch Kupfereffektpigmente genannt.

Gemäß weiteren Ausführungsformen werden Kupferpigmente, insbesondere Kupfereffektpigmente, als metallische Substrate eingesetzt. "Kupferpigmente" im Sinne der vorliegenden Erfindung weisen vorzugsweise einen Gehalt an elementarem Kupfer von 98 bis 100 Gew.-%, mehr bevorzugt von 99 bis 99,999 Gew.-%, auf, jeweils bezogen auf das Gewicht des Metalls des metallischen Substrats. Insbesondere ist es bei weiteren Ausführungsformen bevorzugt, dass die Kupferpigmente Metallkerne sind. Es muss verstanden werden, dass der Fachmann bei der Angabe 100 Gew.-% Kupfer auch gegebenenfalls in Spurenmengen enthaltene übliche Fremdmetalle mitliest. Der Begriff "Spurenmenge" im Sinne der vorliegenden Erfindung bezeichnet Mengen von höchstens 0,01 Gew.-%, bezogen auf das Gesamtgewicht des Metalls.

Gemäß weiteren Ausführungsformen werden in der vorliegenden Erfindung Messingpigmente, insbesondere plättchenförmige Messingpigmente, nachfolgend auch Messingeffektpigmente genannt, als metallische Substrate eingesetzt. Der Begriff "Messingpigment" bezeichnet im Sinne der vorliegenden Erfindung metallische Pigmente, bei denen das Metall ausgewählt wird aus einer Legierung bestehend zumindest weitgehend aus Zink und Kupfer. Derartige Pigmente werden auch als Goldbronzepigmente bezeichnet. Vorzugsweise weisen die erfindungsgemäß eingesetzten Messingpigmente, insbesondere Messingeffektpigmente, einen Kupfergehalt von 70 bis weniger als 98 Gew.-%, weiter bevorzugt von 75 bis 90 Gew.-%, auf, jeweils bezogen auf das Gewicht des Metalls des metallischen Substrats ohne Sauerstoff. Insbesondere ist es bei weiteren Ausführungsformen bevorzugt, dass die Messingpigmente Metallkerne sind.

Zink bildet neben Kupfer einen weiteren Hauptbestandteil des Metalls der Messingpigmente, wobei die Gesamtmenge an Kupfer und Zink bei weiteren Ausführungsformen vorzugsweise mindestens 95 Gew.-%, weiter bevorzugt mindestens 99 Gew.-%, noch weiter bevorzugt mindestens 99,9 Gew.-% darstellt, jeweils bezogen auf das Gewicht des Metalls des kupferhaltigen metallischen Substrats ohne Sauerstoff.

Eine spezielle Aufgabe der vorliegenden Erfindung wird durch die Kombination einer erfindungsgemäß aufzubringenden Beschichtung mit ferromagnetischen metallischen Substraten, insbesondere ferromagnetischen Metallkernen, gelöst.

Überraschenderweise zeigte sich, dass die erfindungsgemäß aufzubringende Beschichtung besondere Vorteile bei der Applikation als Pulverlack bot. So zeigten entsprechend beschichtete ferromagnetische Pigmente beispielsweise eine besonders gute Applizierbarkeit, konnten deckend lackiert werden und waren nach Aushärten des Lackes abriebbeständig. Als besonders vorteilhaft für die Applizierbarkeit hat es sich erwiesen, wenn das vorkondensierte Heteropolysiloxan Bestandteil der äußersten Beschichtungsschicht ist oder die äußerste Beschichtungsschicht darstellt.

Ferner ist es mit den erfindungsgemäß beschichteten ferromagnetischen Pigmenten möglich, eine besondere Haptik mittels spezifischer Verfahrensschritte zu erhalten. So kann beispielsweise ein Magnet bei Applikation eines ferromagnetische Pigmente enthaltenden Pulverlackes auf der Rückseite eines zu beschichtenden Stoffes angeordnet, beispielsweise angebracht, und vor Aushärten des Lackes wieder entfernt werden. Hierdurch können überraschenderweise Bilder mit merklicher Haptik erzielt werden, wobei eine Verformung der Lackoberfläche beobachtet wird. Ähnlich einer Blindenschrift wird das erzeugte Bild damit ertastbar. Ohne dass es als Einschränkung der Erfindung verstanden werden darf, scheinen die erfindungsgemäßen beschichteten Metallpigmente merkliche Mengen an Lack mitzureißen, wodurch es zu entsprechenden Verformungen kommt. Der hierbei zu erwartende größere Widerstand würde die oft beobachtete geringfügig verringerte Linienschärfe der ferromagnetischen Metallpigmente erklären. Insbesondere wird

dies beobachtet, wenn das vorkondensierte Heteropolysiloxan sich an der Beschichtungsoberfläche befindet und mit dem Lack wechselwirken kann. Bei weiteren bevorzugten Ausführungsformen stellt daher das vorkondensierte Heteropolysiloxan die äußerste Schicht der erfindungsgemäßen Metallpigmente dar.

Bei weiteren besonders bevorzugten Ausführungsformen besteht das Metall des Metallkerns, zu mindestens 60 Gew.-% aus mindestens einem bei Raumtemperatur (25 °C) ferromagnetischen Metall, bezogen auf der Gewicht des metallischen Substrats ohne Sauerstoff. Neben den ferromagnetischen Metalle, welche bereits in ihrer Reinform ferromagnetische Eigenschaften zeigen, wie Eisen, Kobalt und Nickel, können auch Legierungen eingesetzt werden wie AlNiCo, SmCo, $Nd_2Fe_{14}B$, $Ni_{80}Fe_{20}$ und NiFeCo-Legierungen. Besonders bevorzugt ist jedoch die Verwendung von Eisen, Kobalt und/oder Nickel, insbesondere von Eisen. Ein besonders vorteilhaftes Eisen ist das sogenannte Carbonyleisen. Die Herstellung plättchenförmiger Effektpigmente aus Carbonyleisen ist in der EP 1 251 152 B1 beschrieben. Dieses wird durch die Zersetzung von Eisenpentacarbonyl erhalten und zeichnet sich durch seine besonders hohe Reinheit und große Duktilität aus. Eine weitere Steigerung dieser Eigenschaften wird durch die weitere Reduktion des Carbonyleisens erzielt. Das Verfahren einer solchen Reduktion ist beispielsweise in der US 6,645,286 B2 offenbart.

Bei bevorzugten Ausführungsformen besteht das Metall des metallischen Substrats zu mindestens 50 Gew.-%, weiter bevorzugt zu mindestens 60 Gew.-%, aus Eisen, bezogen auf das Gewicht des Metalls des metallischen Substrats. Erfindungsgemäß ist das metallische Substrat ein Metallkern. Das Eisen kann hierbei in elementarer Form oder auch beispielsweise als Oxid in Form einer oberflächlichen Oxidschicht vorliegen. Der Begriff "elementares Metall" im Sinne der vorliegenden Erfindung bedeutet, dass das betreffende Metall im Oxidationszustand 0 vorliegt, d.h. dass es weder oxidiert noch reduziert vorliegt. Hierbei kann das elementare Metall auch als Legierungsbestandteil vorliegen. Effekte, beispielsweise infolge unterschiedlicher Elektronegativitäten verschiedener Metalle in einer Legierung, bleiben außer Acht.

Ferner kann es bevorzugt sein, dass das Metall des Metallkerns, zu mindestens 90 Gew.-%, vorzugsweise zu mindestens 97 Gew.-%, weiter bevorzugt zu mindestens 99 Gew.-% und noch weiter bevorzugt zu mindesten 99,9 Gew.-% aus ferromagnetischen Metall, insbesondere Eisen, besteht, jeweils bezogen auf der Gewicht des Metalls des metallischen Substrats ohne Sauerstoff. Das Eisen kann hierbei in elementarer Form oder auch beispielsweise als Oxid in Form einer oberflächlichen Oxidschicht vorliegen. Durch den hohen Anteil an ferromagnetischem Metall können auch mit schwachen Magnetfeldern deutliche Effekte oder mit starken Magneten extrem kontrastreiche Effekte erzielt werden. Insbesondere ist es bevorzugt, dass der Metallkern vollständig aus Eisen besteht, wobei nur Spurenmengen weiterer Bestandteile enthalten sind. Der Begriff "Spurenmenge" im Sinne der vorliegenden Erfindung bezeichnet Mengen von insgesamt höchstens 0,01 Gew.-%, bezogen auf das Metall.

Bei weiteren Ausführungsformen der Erfindung ist es bevorzugt, spezifische Legierungen, insbesondere Stahllegierungen, einzusetzen, wobei durch das gezielte Zulegieren von Bestandteilen spezifische Eigenschaften erzielt werden. Beispielsweise kann unter Einsatz von Chrom die Korrosionsbeständigkeit von eisenhaltigen Pigmenten erhöht werden. Dies ermöglicht beispielsweise die drastische Verringerung der Oxidation des Pigments vor der Aufbringung der erfindungsgemäßen Beschichtung. Infolge des geringeren Anteils an ferromagnetischem Metall sinkt jedoch die Kontraststärke bei angelegtem Magnetfeld mit identischer Magnetfeldstärke, so dass derartige Pigmente beispielsweise besonders geeignet sind für weniger kontrastreiche Motive, bei denen ein größerer Wert auf beispielsweise einen besonders starken Glanz der einzelnen Pigmente gelegt wird. Besonders bevorzugte Beispiele entsprechender Legierungspigmente sind Stahlpigmente.

Bei weiteren bevorzugten Ausführungsformen der vorliegenden Erfindung werden eisenhaltige Metallkerne verwendet. Eisenhaltige Pigmente im Sinne der vorliegenden Erfindung bezeichnen Pigmente, welche mindestens 60 Gew.-% Eisen umfassen, bezogen auf der Gewicht des Metallkerns ohne Sauerstoff. Hierbei ist es besonders bevorzugt, entweder Eisenpigmente oder ferromagnetische Stahlpigmente zu verwenden. Der Begriff "Eisenpigment" im Sinne der vorliegenden Erfindung bedeutet, dass der Metallkern zu mindestens 90 Gew.-% aus Eisen besteht. Insbesondere ist es bevorzugt, dass die Eisenpigmente zu mindestens 97 Gew.-%, weiter bevorzugt zu mindestens 99 Gew.-%, noch weiter bevorzugt zu mindesten 99,5 Gew.-% aus Eisen bestehen. Der Begriff "Stahlpigment" im Sinne der vorliegenden Erfindung bedeutet, dass der Metallkern zu mindestens 70 Gew.-% aus Eisen besteht und zu mindestens 80 Gew.- % aus Eisen sowie den weiteren Komponenten Kobalt, Nickel oder Mischungen hiervon besteht und mindestens 2, vorzugsweise mindestens 3, Metalle als Legierungsbestandteile neben Eisen mit einem Anteil von mehr als 1 Gew.-% umfasst. Die vorgenannten Gewichtsprozente beziehen sich jeweils auf das Gewicht des Metallkerns ohne Sauerstoff, welcher beispielsweise in Form einer oberflächlichen Oxidationsschicht vorhanden sein kann. Beispiele von Metallen, welche als Legierungsbestandteile eingesetzt werden können sind Wolfram, Molybdän, Vanadium, Kobalt, Nickel, Niob, Chrom, Silizium, Mangan oder Mischungen davon.

Der Begriff "ferromagnetisch" im Sinne der vorliegenden Erfindung entspricht dem dem Fachmann geläufigen Begriff. Beispiele ferromagnetischer Metalle sind Eisen, Kobalt und Nickel. In derartigen Metallen bilden sich Weissche Bezirke aus, welche Einfluss auf die magnetischen Eigenschaften der entsprechenden Stoffe ausüben. Die Weisschen Bezirke sind ferner gekennzeichnet durch die Curie Temperatur, welche die Temperatur beschreibt, über der die ferromagnetischen Eigenschaften verloren gehen. Insbesondere ist es bevorzugt, dass die erfindungsgemäßen ferromagnetischen Metalle eine Curie Temperatur von mindestens 100 °C, vorzugsweise von mindestens 150 °C, noch weiter bevorzugt von mindestens 250 °C und noch weiter bevorzugt von mindestens 400 °C aufweisen.

Ein weiteres Merkmal ferromagnetischer Metalle ist eine hohe relative Permeabilität ($\mu_r$>> 1). Die relative Permeabilität ist naturgemäß von der zur Messung eingesetzten Magnetfeldstärke abhängig, weshalb Bereiche dieses Wertes angegeben werden. Theoretisch wird hierbei durch ein kontinuierliches Erhöhen des angelegten Magnetfeldes eine Sättigungsmagnetisierung erreicht, was in einer Annäherung der relativen Permeabilität an 1 resultiert. Vorzugsweise liegt die Obergrenze der relativen Permeabilität des betreffenden Metalles $\mu_r$ bei > 75, weiter bevorzugt bei > 150, noch weiter bevorzugt bei > 250 und noch weiter bevorzugt bei > 350, jeweils gemessen bei 20 °C. Die Messung der Permeabiltät kann beispielsweise mittels der Gouy-Waage oder mittels SQUIDs (Abkürzung für: Superconducting QUantum Interference Device) erfolgen.

Die erfindungsgemäßen Eisenpigmente sind gekennzeichnet durch einen sehr hohen Anteil an Eisen. Beispielsweise ist es bevorzugt, sehr reines Eisen einzusetzen, welches durch die Zersetzung von dampfförmigen Eisenpentacarbonyl $Fe(CO)_5$ in Hohlraumzersetzern hergestellt wird. Dieses weist einen Eisengehalt von ca. 97 Gew.-% auf und enthält noch ca. 1,5 Gew.-% Kohlenstoff und ca. 1 Gew.-% Sauerstoff. Durch weitere Reduktion dieses Eisenpulvers können die Verunreinigungen weiter entfernt werden, so dass ein Eisengehalt von mindestens 99,5 Gew.-% erreicht wird. Die Verwendung derartiger Pigmente ist besonders bevorzugt, da dieses hochreine Eisen ein hohe Duktilität aufweist und daher besonders leicht zu besonders hochwertigen Eiseneffektpigmenten vermahlen bzw. verformt werden kann.

Erfindungsgemäße Stahlpigmente zeigen zwar typischerweise eine schlechtere Magnetisierung als erfindungsgemäße Eisenpigmente, jedoch ermöglicht das Zulegieren weiterer Legierungsbestandteile das Maßschneidern gewünschter Stoffeigenschaften, um gewünschten Anforderungen gerecht zu werden. Insbesondere ist es bevorzugt, Edelstahllegierungen zu verwenden, um eine erhöhte Stabilität des metallischen Kerns, zu erzielen. Dies ermöglicht beispielsweise die Vereinfachung der Prozessführung, da reines Eisen in feinteiliger Form pyrophor ist und zur Selbstentzündung neigt. Aus diesen Gründen ist eine Sättigung der Oberfläche beispielsweise in Form einer definierten oberflächlichen Oxidation erforderlich und/oder es müssen bis zur Aufbringung der erfindungsgemäß zu verwendenden Beschichtung erhöhte sicherheitstechnische Anforderungen erfüllt werden. Der Einsatz von Edelstahlpigmenten ermöglicht daher beispielsweise die verfahrenstechnisch deutlich vereinfachte Bereitstellung von eisenhaltigen Pigmenten mit verringerter oder sogar ohne oberflächliche Oxidationsschicht. Insbesondere ist es bevorzugt, dass die erfindungsgemäßen Stahlpigmente mindestens 7 Gew.-%, vorzugsweise mindestens 10 Gew.-%, weiter bevorzugt mindestens 12 Gew.-% Chrom umfassen, jeweils bezogen auf das Gewicht des Metalls des metallischen Substrats ohne Sauerstoff.

Die erfindungsgemäßen Stahlpigmente sind ferner vorzugsweise dadurch gekennzeichnet, dass sie höchstens 1,8 Gew.-%, weiter bevorzugt höchstens 1,5 Gew.-%, Kohlenstoff enthalten, bezogen auf das Gewichts des Metalls des metallischen Substrats ohne Sauerstoff.

Generell können plättchenförmige Metallpigmente, insbesondere die oben explizit aufgeführten, mittels verschiedener dem Fachmann geläufiger Verfahren gewonnen werden. Beispiele hierfür sind die Vermahlung von Metallgrieß, insbesondere Aluminiumgrieß, kupferhaltiger Grieß und ferromagnetischer Grieß, oder die Gasphasenabscheidung von Metall, insbesondere von Aluminium, im PVD-Verfahren. Die beiden vorgenannten Herstellverfahren unterscheiden sich nicht allein in der typischerweise erreichten oder erreichbaren Qualität der Pigmente, sondern auch in den Anforderungen hinsichtlich der weiteren Prozessierung, deren Handhabung und deren spezifischen Eigenschaften.

Ein weit verbreitetes Verfahren zur Gewinnung eines breiten Spektrums an Metalleffektpigmenten mit sehr unterschiedlichen Eigenschaften ist die Vermahlung von Metallgrieß. Hierbei wird typischerweise flüssiges Metall verdüst zur Gewinnung eines feinen Metallgrießes. In der Metallschmelze können auch verschiedene Metalle miteinander legiert werden. Ein Beispiel ist die Herstellung von Messinggrieß. Der gewonnene Grieß wird nachfolgend gegebenenfalls klassiert oder nachbehandelt, bevor er vermahlen wird.

Die Vermahlung kann nass oder trocken erfolgen. Die Auswahl der entsprechenden Verfahrensvariante erfolgt basierend auf unter anderem den gewünschten Rahmenbedingungen, den gewünschten Produkten und den eingesetzten Edukten. So erwies sich beispielsweise die Nassvermahlung als sicherheitstechnisch vorteilhaft und erbrachte eine gleichmäßigere und schonendere Verformung auch bei weniger optimierten Verfahrensparametern. Beispielsweise bei der Vermahlung von Aluminium wird typischerweise die Nassvermahlung bevorzugt. Die Trockenvermahlung bietet hingegen eine vereinfachte Prozessierung, da beispielsweise eine nachfolgende Umnetzung auf ein anderes Lösungsmittel entfällt. Sie findet Anwendung beispielsweise bei der Vermahlung von Kupfer- bzw. Messinggrieß zu plättchenförmigen Kupfer bzw. Messingpigmenten. Der Begriff "Nassvermahlung" beschreibt eine Vermahlung der Pigmente in Gegenwart eines Lösungsmittels.

Bei der Vermahlung wird der Metallgrieß in Kugelmühlen in mehreren Mahlstufen bei unterschiedlichen Mahlbedingungen, wie beispielsweise Mühlengröße, -durchmesser, - drehgeschwindigkeit, Kugelgröße, Mahldauer unter Zugabe von Schmiermittel, wie beispielsweise Stearin- oder Ölsäure, zur Verhinderung einer Kaltverschweißung der Metallpartikel und mit Mahlkörpern, wie z. B. Stahlkugeln, vermahlen. Die plättchenförmigen Metallpigmente werden nach dem Vermahlen und optionalen Klassieren in verschiedenen Behältnissen gesammelt und anschließenden homogenisiert bzw. gemischt.

Weitere Informationen zu einem hierbei einsetzbaren Vermahlungsverfahren finden sich in der WO 2009/152941 A2, auf deren Offenbarung hiermit in ihrer Gesamtheit Bezug genommen wird.

Eine spezielle Aufgabe der vorliegenden Erfindung wird durch die Kombination der erfindungsgemäß aufzubringenden Beschichtung mit PVD-Pigmenten und besonders hochwertigen mittels Vermahlung erhaltenen Pigmenten, welche durch eine besonders gleichmäßige Ausformung gekennzeichnet sind, gelöst. Überraschenderweise wurde hierbei beobachtet, dass deutlich höhere Konzentrationen an Pigmentsuspensionen genutzt werden können, ohne dass merkliche Agglomerationen auftreten. Besonders überraschend war, dass mit der erfindungsgemäßen Beschichtung sogar ein Pulver ohne Zusatz von Bindemitteln erhalten werden konnte.

Die vorgenannten mittels Vermahlung hergestellten Metalleffektpigmente können beispielsweise gemäß dem in der US 2007/0199478 A1 oder US 2010/0047199 A1 beschriebenen Verfahren hergestellt werden.

Gemäß einer weiteren Ausführungsform werden daher mittels Vermahlung erhaltener Metallpigmente mit einem $h_{50}$-Wert im Bereich von 20 bis 100 nm, einem Formfaktor von mindestens 200 und einer relativen Dickenverteilung $\Delta$h-Wert im Bereich von 30 bis 140 % als Metallkerne verwendet. Der $\Delta$h-Wert wird gemäß Formel VII berechnet:

$$\Delta h = (h_{90}-h_{10})/h_{50} \qquad \text{(VII)}$$

Die Herstellung derartiger Metallpigmente werden in den EP 1 613 702 B1, EP 2 102 294 B1 und der EP 2 128 203 A1 beschrieben.

PVD-Metalleffektpigmente weisen eine absolut plane Oberfläche und hervorragende optische Eigenschaften auf. Insbesondere ist der Aufbau von mittels physikalischer Dampfabscheidung hergestellter Pigmente nahezu ideal für optische Effekte. Die resultierenden herausragenden optischen Eigenschaften machen diese Pigmente für höchstqualitative Anwendungen besonders interessant.

Ein Problem der vorgenannten Pigmente, insbesondere der PVD-Pigmente, war bislang deren starke Agglomerationsneigung, welche ein Konzentrieren schwierig und ein Trocknen unmöglich machten, ohne die vorteilhaften Eigenschaften, insbesondere die optischen Eigenschaften, signifikant zu verschlechtern.

Unter Verwendung von mittels Vermahlung erhaltener Metallpigmente mit einem $h_{50}$-Wert im Bereich von 20 bis 100 nm, einem Formfaktor von mindestens 200 und einen $\Delta$h-Wert im Bereich von 30 bis 140 %, oder von PVD-Metallpigmenten als metallische Substrate für die erfindungsgemäßen Metalleffektpigmente, werden hochbrillante Pigmente zur Verwendung in Farben, Druckfarben, Lacken und Kosmetika erhalten. Sowohl bei durch Vermahlung erhaltenen Metallpigmenten als auch bei PVD-Pigmenten werden insbesondere von Aluminium- , Kupfer-, Messing- (Goldbronze) und Eisenpigmente, vorzugsweise Aluminiumpigmente, bevorzugt.

Bei weiteren Ausführungsformen ist es bevorzugt, dass sowohl die mittels PVD-Verfahren als auch die mittels Vermahlung erhaltenen Pigmente einen $h_{50}$-Wert im Bereich von 20 bis 100 nm, einen Formfaktor von mindestens 200 und einen $\Delta$h-Wert im Bereich von 20 bis unter 70 %, vorzugsweise von 25 bis 65 %, noch weiter bevorzugt von 30 bis 60 %, aufweisen. Vorzugsweise liegt der $h_{50}$-Wert im Bereich von 23 bis 50 nm, der Formfaktor bei mindestens 250 und der $\Delta$h-Wert im Bereich von 20 bis unter 70 %, vorzugsweise von 25 bis 65 %, noch weiter bevorzugt von 30 bis 60 %.

Die Herstellung derartiger Aluminiumpigmente durch Naßmahlung ist in der EP 2 102 294 B1 beschrieben.

Die Herstellung der PVD-Pigmente umfasst beispielsweise die folgenden Schritte:

a) Bedampfen eines, vorzugsweise beweglichen, Trägermaterials in einer Vakuumkammer mittels physikalische Gasphasenabscheidung (PVD) mit wenigstens einem Metall M(A) unter Bildung einer Schicht A auf dem Trägermaterial,

b) optional Bedampfen der Schicht A in einer Vakuumkammer mittels physikalischer Gasphasenabscheidung (PVD) mit wenigstens einem Metall M(B) unter Bildung einer Schicht B,

d) Ablösen der metallischen Schicht vom Trägermaterial,

e) Zerkleinern der metallischen Schicht zu Metalleffektpigmenten,

f) optional Überführen der Metalleffektpigmente in eine Dispersion oder Paste.

Typischerweise liegen die Metalleffektpigmente nach der Herstellung in einem organischen Lösungsmittel vor. Vor der Aufbringung der erfindungsgemäß zu verwendenden Beschichtung liegt der Anteil an organischem Lösungsmittel der Metalleffektpigmentdispersion vorzugsweise bei mindestens 80 Gew.-%, weiter bevorzugt bei mindestens 85 Gew.-%, jeweils bezogen auf das Gesamtgewicht der Dispersion.

Sollen anstelle einheitlicher Metalle Legierungen auf dem Trägermaterial abgeschieden werden, so kann dies beispielsweise mittels separater Verdampfer, beispielsweise durch Flashverdampfung oder Springstrahlverdampfern erfolgen. Das Verdampfen einer fertigen Legierung hat den Nachteil, dass infolge der unterschiedlichen Eigenschaften der Legierungsbestandteile die leichtflüchtigere Komponente zunächst in stärkerem Maße verdampft, wodurch keine

homogene Legierung auf dem Trägermaterial abgeschieden werden kann. Eine gleichmäßige Beschichtung wird erst durch spezielle Verfahren ermöglicht, wie beispielsweise Sputtern oder dem Einsatz eines Elektronenstrahls.

Als Trägermaterial kommen insbesondere Polymerfolien beispielsweise aus Polyterephthalat, Polyethylenterephthalaten oder Metallbänder in Frage. Als besonders vorteilhaft hat sich der Einsatz von Polymerfolien erwiesen. Gemäß bevorzugten Ausführungsformen ist das bewegte Trägermaterial mit einer Trennschicht ("Release Coat") versehen, die das Abtrennen oder Ablösen der aufgedampften PVD-Schicht erleichtert bzw. erst ermöglicht.

Als Trennschicht kann beispielsweise ein in einem Lösemittel wie Aceton oder Ethylacetat löslicher Lack oder ein wasserlösliches Salz verwendet werden.

Beispielsweise machen die Verwendung der Polymerfolien oder auch die hohen Energiemengen, die zum Verdampfen der Metalle benötigt werden, die Herstellung von PVD-Pigmenten sehr kostspielig. Werden besonders hochwertige Pigmente mit herausragender Brillanz benötigt, so sind bei weiteren Ausführungsformen die mittels PVD-Verfahren hergestellten Metallpigmente bevorzugt. Werden hingegen sehr hochwertige Pigmente mit hervorragender Brillanz und geringen Kosten benötigt, so werden die mittels Vermahlung hergestellten Metallpigmente bevorzugt.

Die Metallpigmente der vorliegenden Erfindung sind gekennzeichnet durch mindestens eine umhüllende Beschichtungsschicht, umfassend mindestens ein Metalloxid, und mindestens eine Beschichtungsschicht, umfassend mindestens ein Heteropolysiloxan, wobei der Begriff Metalloxid auch Oxidhydrate und Hydroxide umfasst, und wobei das mindestens eine Heteropolysiloxan mindestens eine Aminosilankomponente und mindestens ein Silankomponente, die ausgewählt wird aus der Gruppe, bestehend aus Alkylsilanen, Vinylsilanen und Arylsilanen, umfasst. Das Heteropolysiloxan weist mindestens eine Aminosilankomponente und mindestens ein Alkylsilankomponente auf. Hierbei wird das vorgenannte Heteropolysiloxan in vorkondensierter Form auf die umhüllende Beschichtungsschicht, umfassend mindestens ein Metalloxid, aufgebracht.

Insbesondere ist es hierbei bevorzugt, dass die umhüllende Beschichtungsschicht, umfassend mindestens ein Metalloxid, kein Oxidationsprodukt des Metallpigments darstellt, und dünner ist als 40 nm, weiter bevorzugt weniger als 30 nm, noch weiter bevorzugt wenigstens 25 nm. Die Mindestdicke der umhüllenden Beschichtungsschicht, die mindestens ein Metalloxid umfasst, beträgt dabei wenigstens 5 nm, weiter bevorzugt wenigstens 10 nm, noch weiter bevorzugt wenigstens 15 nm. Vorzugsweise stellt die umhüllende Beschichtungsschicht, umfassend mindestens ein Metalloxid, kein Oxidationsprodukt des Metallpigments dar. So weisen die meisten Metallpigmente typischerweise eine sehr dünne oberflächliche Metalloxidschicht auf. Ferner kann durch eine gezielte oberflächliche Oxidation ein besonderer Effekt, meist hinsichtlich der Farbe, hervorgerufen werden, siehe beispielsweise WO 1996/038505 A1 und WO 2012/130680 A1.

Zwischen metallischem Substrat und der erfindungsgemäßen Kombination der Beschichtungsschichten können die Pigmente durch weitere Beschichtungsschichten modifiziert werden. Beispiele solcher Beschichtungen sind Polymerbeschichtungen, Beschichtungen bestehend im Wesentlichen aus einem Metalloxid, insbesondere Siliziumoxid, anorganisch/organische Beschichtungen oder metallpigmentgeeignete Nachbeschichtungen. Hierfür geeignete Polymerbeschichtungen sind beispielsweise in der WO 2008/095697 offenbart. Geeignete im Wesentlichen aus Metalloxid bestehende Beschichtungen sind beispielsweise in der WO 2005/118722 A1 offenbart. Eine Offenbarung anorganisch/organischer Mischschichten welche besonders geeignet für die erfindungsgemäßen Pigmente sind und deren Herstellung findet sich zum Beispiel in der WO 2007/017195. Beispiele für Metallpigmente geeigneter Nachbeschichtungen sind beispielsweise in der WO 1999/057204 offenbart.

Bei weiteren Ausführungsformen ist es bevorzugt, dass die erfindungsgemäßen Pigmente keine Beschichtungsschicht aufweisen, die thermoresponsives Polymer enthält oder daraus besteht. Der Begriff "thermoresponsives Polymer" bedeutet im Sinne der vorliegenden Erfindung, dass sich die Löslichkeit des Polymers in Abhängigkeit von der Temperatur stark ändert. Die thermoresponsiven Polymere werden unterschieden in LCST- und UCST-Polymere. Bei LCST-Polymeren liegt das Polymer unterhalb der LCST-Temperatur gelöst vor. Bei UCST-Polymeren liegt das Polymer oberhalb der betreffenden Temperatur gelöst vor.

Bei weiteren Ausführungsformen ist es insbesondere bevorzugt, dass die erfindungsgemäßen Pigmente keine Beschichtungsschicht aufweisen, die vollständig, vorzugsweise im Wesentlichen, aus organischem Polymer besteht. Weiter bevorzugt weisen die erfindungsgemäßen Pigmente bei weiteren Ausführungsformen keine Beschichtungsschicht auf, die im Wesentlichen aus organischem Polymer besteht.

Erfindungsgemäß liegt der Anteil der Beschichtung bei den erfindungsgemäß beschichteten Metallpigmenten in einem Bereich von 2 bis 30 Gew.-%, vorzugsweise im Bereich von 3 bis 27 Gew.-%, weiter bevorzugt im Bereich von 4 bis 25 Gew.-%, jeweils bezogen auf das Gewicht des beschichteten Metallpigments.

Der Begriff "Metalloxidschicht" beziehungsweise "Metalloxid" im Sinne der vorliegenden Erfindung umfasst, soweit nicht anderweitig spezifiziert, auch oxidierte Formen der Metalle wie Hydroxide und Oxidhydrate.

Die erfindungsgemäß in der ersten oder als erste Beschichtungsschicht aufgebrachten Metalloxide werden gemäß einer bevorzugten Variante der Erfindung im Wesentlichen, vorzugsweise vollständig, ausgewählt aus der Gruppe, bestehend aus Siliziumoxid, Aluminiumoxid, Boroxid, Zirkoniumoxid, Ceroxid, Eisenoxid, Titanoxid, Chromoxid, Zinnoxid, Molybdänoxid, Vanadiumoxid deren Oxidhydraten, deren Hydroxiden und Mischungen davon. Besonders

bevorzugt werden die erfindungsgemäß aufzubringenden Metalloxide im Wesentlichen, vorzugsweise vollständig, aus der Gruppe, bestehend aus Siliziumoxid, Aluminiumoxid und Mischungen davon ausgewählt, wobei die vorgenannten Metalloxide auch deren Oxidhydrate und Hydroxide umfassen. Insbesondere hat sich die Verwendung von Siliziumoxide wie Siliziumdioxid, Siliziumhydroxid und/oder Siliziumoxidhydrat als vorteilhaft erwiesen.

Bei weiteren bevorzugten Ausführungsformen besteht der Metallkern im Wesentlichen aus Aluminium und das erfindungsgemäße Metallpigment, insbesondere Metalleffektpigment, umfasst mindestens eine Beschichtungsschicht, die im Wesentlichen aus Siliziumoxid, Siliziumhydroxid, Siliziumoxidhydrat oder deren Mischungen besteht.

Bei Pigmenten, bei denen der optische Effekt nicht durch Interferenzeffekte infolge der Beschichtung beeinflusst werden soll, ist die Verwendung niedrigbrechender Metalloxide bevorzugt. Der Begriff "niedrigbrechend" im Sinne der vorliegenden Erfindung bedeutet, dass deren Brechungsindex höchstens 1,7 beträgt. Hierbei bezieht sich die Angabe auf den Brechungsindex des betreffenden Metalloxids in makroskopischer Form. Dieser kann mittels geläufiger Verfahren bestimmt werden, beispielsweise mittels eines Refraktometers. Bei weiteren Ausführungsformen werden daher die Metalloxide der Beschichtung zu mindestens 95 Gew.-%, vorzugsweise zu mindestens 99 Gew.-%, aus der Gruppe der niedrigbrechenden Metalloxide ausgewählt, jeweils bezogen auf das Gesamtgewicht der Beschichtung. Weiter bevorzugt sind lediglich Spuren nicht niedrigbrechender Metalloxide, vorzugsweise weniger als 10 Gew.-% in der Beschichtung enthalten. Ein besonders bevorzugtes niedrigbrechendes Metalloxid ist Siliziumoxid, umfassend Siliziumdioxid, Siliziumhydroxid und/oder Siliziumoxidhydrat.

Im Rahmen dieser Erfindung wird unter dem Begriff "im Wesentlichen bestehend aus Metalloxid" oder beispielsweise unter "im Wesentlichen bestehend aus Siliziumoxid, Siliziumhydroxid, Siliziumoxidhydrat oder deren Mischungen" verstanden, dass die Schicht überwiegend, vorzugsweise zu mindestens 90 Gew.-%, weiter bevorzugt zu mindestens 95 Gew.-%,noch weiter bevorzugt zu mindestens 99 Gew.-%, aus Metalloxid bzw. beispielsweise aus Siliziumoxid, Siliziumhydroxid, Siliziumoxidhydrat oder deren Mischungen besteht. Beispielsweise können betreffende Schichten, welche mittels des Sol-Gel-Verfahrens hergestellt und nicht calciniert wurden, noch Alkoxygruppen enthalten. Vorzugsweise handelt es sich bei der erfindungsgemäß aufzubringenden mindestens einen Beschichtungsschicht, umfassend mindestens ein Metalloxid, um (eine) nichtcalcinierte Beschichtung(en). "Nichtcalciniert" im Sinne der vorliegenden Erfindung bedeutet, dass keine Erhitzung erfolgte, um eine im Wesentlichen vollständige Entfernung des in der durch Sol-Gel-Verfahren aufgebrachten Schicht vorhandenen Wassers zu bewirken. Dies kann beispielsweise durch ein Erhitzen über 400 °C erfolgen. Hiermit können Pigmente erhalten werden, deren "Wassergehalt" in der betreffenden Schicht weniger als 3 Gew.-% beträgt.

Bei weiteren Ausführungsformen besteht die mindestens eine Beschichtungsschicht, umfassend mindestens ein Metalloxid, auf welche das mindestens eine vorkondensierte Heteropolysiloxan aufgebracht wird, im Wesentlichen aus einem Metalloxid. Insbesondere ist es typischerweise bevorzugt, dass die vorgenannte Beschichtungsschicht im Wesentlichen aus Siliziumoxid, Siliziumhydroxid, Siliziumoxidhydrat oder deren Mischungen besteht.

Bei weiteren Ausführungsformen bestehen sämtliche Beschichtungsschichten, welche im Wesentlichen aus Metalloxid bestehen, im Wesentlichen aus Siliziumoxid, Siliziumhydroxid, Siliziumoxidhydrat oder deren Mischungen. Ausgenommen hiervon sind Beschichtungsschichten, welche aus einer oberflächlichen Oxidation des Metalls des metallischen Substrats bzw. des Metallkerns entstanden sind.

Typischerweise hat es sich als vorteilhaft erwiesen, wenn der Gehalt an Metalloxid in der Beschichtung bei mindestens 43 Gew.-%, vorzugsweise bei mindestens 65 Gew.-%, noch weiter bevorzugt bei mindestens 82 Gew.-%, liegt, jeweils bezogen auf das Gesamtgewicht der gesamten Beschichtung umfassend Metalloxid und Heteropolysiloxan, liegt.

Die Bestimmung des Gewichtsanteils des Metalloxids in der Beschichtung erfolgt hierbei durch Bestimmung der Gesamtmenge des enthaltenen oxidierten Metalls auch in der Form von beispielsweise Hydroxiden, Oxidhydraten, etc. mithilfe dem Fachmann geläufiger Verfahren. Beispiele hierfür sind Atomabsorptionsspektroskopie, Elementaranalyse, induktiv gekoppeltes Plasma mit Atomemmisionsspektroskopie (ICP-AES / Inductively coupled plasma atomic emission spectroscopy) und insbesondere Kombinationen solcher Verfahren. Die Berechnung des Wertes erfolgt über die entsprechende Menge an Metall. Sofern die Bestimmung des genauen Metalls oder der in einer Metalloxid enthaltenen Mischung nicht mithilfe dem Fachmann geläufiger Verfahren wie beispielsweise XPS erfolgen kann, wird das höchstoxidierte unter Normbedingungen stabile Oxid des Metalls als Referenz genommen. Normbedingungen im Sinne der vorliegenden Erfindung sind eine Temperatur von 0 °C und ein Druck von 1,01325 bar. Beispielsweise wird für Siliziumoxid $SiO_2$ als Referenz angenommen.

Ebenfalls geeignet zur Beschichtung der erfindungsgemäßen Pigmente sind anorganisch/organische Mischschichten. Der Begriff "anorganisch/organische Mischschicht" oder "Mischschicht" im Sinne der vorliegenden Erfindung bezeichnet eine Schicht umfassend anorganische und organische Bestandteile dadurch gekennzeichnet, dass die Mischschicht mindestens ein anorganisches Netzwerk, das eine oder mehrere anorganische Oxidkomponente(n) aufweist, und mindestens eine organische Komponente aufweist. Die organische Komponente ist zumindest teilweise mit dem anorganischen Netzwerk über kovalente Bindungen verbunden. Beispiele hierfür sind Siliziumoxidnetzwerke, welche organofunktionelle Silane als Bestandteile aufweisen. Ferner ist es bei weiteren Ausführungsformen bevorzugt, dass

die organische Komponente zumindest teilweise ein organisches Oligomer und/oder Polymer ist, welches wenigstens teilweise mit dem anorganischen Netzwerk über einen oder mehrere organische Netzwerkbildner kovalent verbunden ist.

Ferner ist es bei weiteren Ausführungsformen bevorzugt, dass die vorgenannte Mischschicht mindestens teilweise eine kovalente Bindung von anorganischer Oxidkomponente und organischem Oligomer und/oder Polymer mindestens teilweise durch einen oder mehrere organische Netzwerkbildner erfolgt ist, welcher die allgemeine Formel (NI) oder Formel (NII)

$$R^{an1}{}_{xn1}R^{bn1}{}_{yn1}SiX_{(4-xn1-yn1)} \qquad (NI)$$

$$(R^{an1}O)_{xn2}(R^{bn1}O)_{yn2}MX_{(zn2-xn2-yn2)} \qquad (NII)$$

aufweist,

wobei die X unabhängig voneinander ausgewählt werden aus hydrolysierbaren Gruppen, nach deren Hydrolyse eine kovalente Bindung von organischem Netzwerkbildner mit dem anorganischen Netzwerk ausgebildet werden kann,
die $R^{an1}$ unabhängig voneinander ausgewählt werden aus reaktiven organischen Gruppen, die mit dem organischen Oligomer und/oder Polymer kovalent verbindbar ist,
die $R^{bn1}$ unabhängig voneinander ausgewählt werden aus organischen Gruppen, die mit dem organischen Oligomer und/oder Polymer kovalent verbindbar sein können,
M ausgewählt wird aus der Gruppe bestehend aus Al, Zr und Ti,
xn1 eine ganze Zahl von 1 bis 3 ist, yn1 eine ganze Zahl von 0 bis (3-xn1) ist,
zn2 die formale Oxidationszahl von M ist, xn2 eine ganze Zahl von 1 bis (zn2-1) ist,
yn2 eine ganze Zahl von 0 bis (zn2-2) ist, und
$xn2+yn2 \leq zn2-1$ ist.

Bei weiteren Ausführungsformen werden bei dem organischen Netzwerkbildner gemäß Formel (NI) und Formel (NII) die X unabhängig voneinander ausgewählt aus der Gruppe, bestehend aus Halogengruppen, vorzugsweise Br, Cl und I, bevorzugt Cl, der Hydroxygruppe und C1-C20 Alkoxygruppen, welche auch Heteroatome, vorzugsweise O, S und/oder N, in der Kohlenstoffkette aufweisen können. Vorzugsweise werden die X unabhängig voneinander ausgewählt aus der Gruppe bestehend aus Halogengruppen, der Hydroxygruppe und C1-C4 Alkoxygruppen.

Bei weiteren Ausführungsformen werden die gegebenenfalls vorhandenen Substituenten von $R^{an1}$ ausgewählt aus der Gruppe, bestehend aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-,Carbamatgruppen und Mischungen davon.

Bei weiteren Ausführungsformen werden die $R^{bn1}$ unabhängig voneinander ausgewählt aus der Gruppe, bestehend aus H-, C1-C40 Alkyl-, C2-C40 Alkenyl-, C2-C40 Alkinyl-, C6-C36-Aryl-, fluorierte C6-C36 Aryl-, teilfluorierte C6-C36 Aryl-; C7-C40 Alkylaryl-, C7-C40 Arylalkyl-, C8-C40 Alkenylaryl-,C8-C40 Arylalkenyl-, C8-C40 Arylalkinyl-, C8-C40 Alkinylaryl-; C5-C40 Cycloalkyl-, C6-C40 Alkylcycloalkyl-, C6-C40 Cycloalkylalkylsilane, wobei gegebenenfalls enthaltene Substituenten ausgewählt werden aus der Gruppe bestehend aus Amino-, Hydroxy-, Thiol- ,Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und Estergruppen und in den Kohlenstoffketten und Kohlenstoffringsystemen gegebenenfalls enthaltene Heteroatome ausgewählt werden aus der Gruppe bestehend aus O, N und S.

Bei weiteren Ausführungsformen ist das organische Oligomer und/oder Polymer aus Monomeren aufgebaut, die mit Funktionalitäten ausgestattet sind, die ausgewählt wird aus der Gruppe bestehend aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido- und Carbamatgruppe und Mischungen davon.

Bei weiteren Ausführungsformen ist die organische Komponente aus reaktiven organischen Oligomeren und/oder Polymeren aufgebaut, welche reaktionsfähige Gruppen aufweisen, die an das anorganische Netzwerk und/oder mindestens an die Gruppe $R^{an1}$ der organischen Netzwerkbildner anbinden können.

Bei weiteren Ausführungsformen wird das reaktive organische Oligomer und/oder Polymer ausgewählt aus der Gruppe bestehend aus Silanol- und/oder Methoxy-terminierten Siliconen, Trialkoxysilan-modifizierten Polyethyleniminen, Polyarylalkylsilsesquioxanen, Aminosilanmodifizierten Polyethylenoxidurethanen und Mischungen davon.

Bei weiteren Ausführungsformen wird das reaktive organische Oligomer und/oder Polymer ausgewählt aus der Gruppe bestehend aus Polyacrylaten, Polymethacrylaten, Polyethern, Polyestern, Polyaminen, Polyamiden, Polyolen, Polyurethanen und Polyolefinen, wobei diese Oligomere und/oder Polymere reaktive funktionelle Gruppen aufweisen, die an das anorganische Netzwerk oder einen organischen Netzwerkbildner binden können.

Bei weiteren Ausführungsformen ist das organische Oligomer und/oder Polymer über die funktionellen Gruppe $R^{an1}$ eines oder mehrerer organischer Netzwerkbildner in der anorganisch/organischen Mischschicht kovalent gebunden.

Bei weiteren Ausführungsformen umfasst die anorganisch/organische Mischschicht mindestens einen organischen Netzwerkwandler gemäß Formel (NIII) oder (NIV)

$$R^{an3}_{xn3}SiX_{(4-xn3)} \qquad (NIII)$$

$$(R^{an3}O)_{xn4}MX_{(yn4-xn4)} \qquad (NIV)$$

modifiziert ist, wobei die X unabhängig voneinander ausgewählt werden aus hydrolysierbaren Gruppen, nach deren Hydrolyse eine kovalente Bindung von organischem Netzwerkbildner mit dem anorganischen Netzwerk ausgebildet werden kann, die $R^{an3}$ unabhängig voneinander ausgewählt werden aus der Gruppe der nicht-reaktiven organischen Gruppen, M ausgewählt wird aus der Gruppe bestehend aus Al, Zr und Ti, xn3 1, 2 oder 3 ist, yn4 die formale Oxidationszahl von M ist, xn4 eine ganze Zahl von 1 bis (yn4-1) ist.

Bei weiteren Ausführungsformen ist zwischen metallischem Substrat und anorganisch/organischer Mischschicht mindestens eine diskrete im Wesentlichen rein anorganische Schicht, mindestens eine diskrete Schicht aus im Wesentlichen rein organischem Polymer oder eine Kombination solcher Schichten angeordnet.

Bei weiteren Ausführungsformen ist auf der anorganisch/organischen Mischschicht mindestens eine diskrete Beschichtungsschicht angeordnet, die eine im Wesentlichen rein anorganische Schicht darstellt oder im Wesentlichen aus organischem Polymer besteht.

Bei weiteren Ausführungsformen besteht die mindestens eine diskrete im Wesentlichen rein anorganische Schicht aus einem Metalloxid eines Elements, das ausgewählt wird aus der Gruppe bestehend aus Silizium, Titan, Aluminium, Zirkonium, Eisen, Kupfer, Zinn, Kobalt, Chrom, Cer, Zink, Antimon, Mangan, Nickel, Yttrium, Molybdän, Vanadium, Tantal, Wolfram und Mischungen davon, wobei das vorgenannte Metalloxid auch Hydroxide und Oxidhydrate einschließt.

Bei weiteren Ausführungsformen wird die mindestens eine separate im Wesentlichen rein organische Polymerschicht ausgewählt aus der Gruppe bestehend aus Polyacrylat, Polymethacrylat, Polyether, Polyester, Polyamin, Polyamid, Polyol, Polyurethan, Polyphenolformaldehyd, Polyolefin und Mischungen davon.

Bei weiteren Ausführungsformen wird die mindestens eine separate im Wesentlichen rein organische Polymerschicht ausgewählt wird aus der Gruppe bestehend aus Polyacrylat, Polymethacrylat oder Mischungen davon.

Vorzugsweise wird hierbei das Metalloxid ausgewählt aus den Oxiden der Metalle ausgewählt aus der Gruppe bestehend aus Silizium, Titan, Aluminium, Zirkonium, Eisen, Zinn, Chrom, Cer, Zink, Mangan, Antimon, und Mischungen davon.

Das erfindungsgemäß verwendete vorkondensierte Heteropolysiloxan kann auf verschiedenen Weisen aufgetragen werden. Besonders vorteilhaft hat sich die Zugabe des Polysiloxans, vorzugsweise in gelöster bzw. dispergierter Form, zu einer Suspension, umfassend die zu beschichtenden Metallpigmente, erwiesen. Hierbei kann für die Bereitstellung der Suspension, umfassend die zu beschichteten Metallpigmente, beispielsweise ein Reaktionsprodukt erhalten aus einem vorhergehenden Beschichtungsschritt mit einem Metalloxid, insbesondere mit Siliziumoxid, eingesetzt werden.

Die Struktur der erfindungsgemäßen vorkondensierten Heteropolysiloxane kann insbesondere kettenförmig, cyclisch, vernetzt oder Mischungen davon sein.

Ferner ist es bei weiteren Ausführungsformen bevorzugt, dass das Heteropolysiloxan mindestens zu 87 Gew-%, vorzugsweise mindestens zu 93 Gew-%, weiter bevorzugt mindestens zu 97 Gew-%, bezogen auf das Gesamtgewicht des Heteropolysiloxans aus Silanmonomerkomponenten aufgebaut ist, die ausgewählt werden aus der Gruppe, bestehend aus Aminosilanen, Alkylsilanen, Vinylsilanen, Arylsilanen und Mischungen davon. Insbesondere ist es bevorzugt, dass das Heteropolysiloxan aus den Aminosilankomponenten und Alkylsilankomponenten in den vorgenannten Mengen aufgebaut ist.

Die Silanmonomere werden beispielsweise als Alkoxide eingesetzt. Diese Alkoxidbindung wird zur Polymerisation gespalten, und infolge eines Kondensationsschrittes werden die Silanmonomere zu dem jeweiligen Heteropolysiloxan umgesetzt bzw. vernetzt. Vorzugsweise werden als Alkoxide für die vorliegende Erfindung Methoxide und Ethoxide eingesetzt. Sofern es nicht anders spezifiziert ist, basieren die Gew.-% der Silanmonomerkomponenten in dem Heteropolysiloxan im Sinne der vorliegenden Erfindung auf dem Gewicht der Silanmonomere ohne die Bestandteile, welche infolge der Kondensation zum Heteropolysiloxan abgespalten werden, wie beispielsweise Alkoxygruppen. Die Herstellung derartiger Polysiloxane ist in der Literatur beschrieben. Beispielsweise finden sich entsprechende Herstellverfahren in der US 5,808,125 A, US 5,679,147 A und US 5,629,400 A.

Als besonders vorteilhafte Aminosilane, welche für den Aufbau der erfindungsgemäß verwendbaren Heteropolysiloxane eingesetzt werden können, haben sich Aminosilane mit 1 oder 2 Aminogruppen pro Si-Atom erwiesen. Bei weiteren Ausführungsformen werden die im Heteropolysiloxan enthaltenen Aminosilankomponenten zu mindestens 92 Gew.-%, vorzugsweise zu mindestens 97 Gew.-% ausgewählt aus Aminosilanen mit 1 oder 2 Aminogruppen, jeweils bezogen auf das Gesamtgewicht der in dem Heteropolysiloxan enthaltenen Aminosilankomponenten.

Beispielsweise haben sich $(H_2N(CH_2)_3)Si(OCH_3)_3$ ((3-Aminopropyl)(trimethoxy)silan, AMMO),$(H_2N(CH_2)_3)Si(OC_2H_5)_3$ ((3-Aminopropyl)(triethoxy)silan, AMEO), $(H_2N(CH_2)_2NH(CH_2)_3)Si(OCH_3)_3$ ((N-(2-Aminoethyl)-3-aminopropyl)(trimethoxy)silan), (DAMO)),$(H_2N(CH_2)_2NH(CH_2)_3)Si(OC_2H_5)_3$ ((N-(2-Aminoethyl)-3-aminopropyl)(triethoxy)silan) und deren Mischungen als vorteilhaft erwiesen. Bei weiteren Ausführungsformen werden die im Heteropolysiloxan enthaltenen Aminosilankomponenten zu mindestens 92 Gew.-%, vorzugsweise zu mindestens 97 Gew.-%, aus der vorgenannten Gruppe und deren Mischungen ausgewählt, jeweils bezogen auf das Gesamtgewicht der in dem Heteropolysiloxan enthaltenen Aminosilankomponenten.

Bei weiteren Ausführungsformen ist es bevorzugt, dass das erfindungsgemäß verwendete Heteropolysiloxan nur geringe oder gar keine Mengen an Epoxysilanen enthält. So zeigten entsprechende Heteropolysiloxane in gebräuchlichen Nasslacksystemen typischerweise eine bessere Anhaftung. Insbesondere ist es bei weiteren Ausführungsformen bevorzugt, dass das Heteropolysiloxan höchstens 10 Gew.-%, vorzugsweise höchstens 6 Gew.-%, mehr bevorzugt höchstens 4 Gew.-% und noch mehr bevorzugt höchstens Spuren von Epoxysilankomponenten umfasst, jeweils bezogen auf das Gesamtgewicht des Heteropolysiloxans.

Ferner hat sich gezeigt, dass bereits geringe Mengen an Heteropolysiloxan typischerweise ausreichend sind. Bei weiteren Ausführungsformen weist die Beschichtungsschicht, umfassend das wenigstens eine, vorzugsweise eine, Heteropolysiloxan, eine mittlere Dicke von höchstens 20 nm, weiter bevorzugt höchstens 10 nm auf. Insbesondere ist es hierbei bevorzugt, wenn das wenigstens eine, vorzugsweise eine, Heteropolysiloxan im Wesentlichen als Monolage vorliegt.

Als besonders vorteilhaft hat es sich erwiesen, wenn mindestens ein Heteropolysiloxan auf eine umhüllende Beschichtungsschicht umfassend Siliziumoxid aufgebracht ist.

Die Aufbringung von Beschichtungsschichten, bestehend im Wesentlichen aus mindestens einem Metalloxid, erfolgt vorzugsweise mittels des Sol-Gel-Verfahrens.

Die erfindungsgemäß eingesetzten Heteropolysiloxane können durch Kondensation von beispielsweise Alkylsilanen und Aminosilanen hergestellt werden. Dem Fachmann ist jedoch bewusst, dass identische Heteropolysiloxane auch auf anderem Wege, beispielsweise durch Reaktion mindestens eines Alkylsilans, mindestens eines Halogenalkylsilans und mindestens eines Amins hergestellt werden können. Derartige Heteropolysiloxane, welche formal auch als Kondensationsprodukte entsprechender Alkylsilane und Aminosilane betrachtet werden könnten, sind vorliegend erfindungsgemäß umfasst. Der Fachmann kann in Kenntnis der vorliegenden Erfindung und im Hinblick auf das bekannte Fachwissen unter verschiedenen retrosynthetischen Routen auswählen.

Bei weiteren Ausführungsformen ist es ferner bevorzugt, dass höchstens 1 Gew.-% der Silanmonomerkomponenten fluorhaltige Silane sind, bezogen auf das Gesamtgewicht des Heteropolysiloxans. Vorzugsweise sind fluorhaltige Silankomponenten lediglich Spurenbestandteile oder weiter bevorzugt nicht in der aufgebrachten Heteropolysiloxanschicht enthalten.

Der Begriff "Aminosilan" bedeutet im Sinne der vorliegenden Erfindung, dass das betreffende Silan mindestens eine Aminogruppe aufweist. Diese Aminogruppe muss nicht direkt an das Siliziumatom der Silylgruppe gebunden sein. Beispiele von erfindungsgemäß verwendbaren Aminosilanen bei der Herstellung des Heteropolysiloxans sind (6-Amino-n-hexyl)(triethoxy)silan, (6-Amino-n-hexyl)(trimethoxy)silan, (4-Amino-3,3-dimethylbutyl)(trimethoxy)silan,$(H_2N(CH_2)_3)Si(OCH_3)_3$ ((3-Aminopropyl)(trimethoxy)silan, AMMO), $(H_2N(CH_2)_3)Si(OC_2H_5)_3$ ((3-Aminopropyl)(triethoxy)silan, AMEO), (3-Aminoisobutyl)(trimethoxy)silan, (3-Aminoisobutyl)(triethoxy)silan, (2-Aminoethyl)(trimethoxy)silan, (2-Aminoethyl)(triethoxy)silan, (Aminomethyl)(trimethoxy)silan,(Aminomethyl)(triethoxy)silan, (N-Cyclohexylaminomethyl)(triethoxy)silan (GENIOSIL XL 926), (N-Phenylaminomethyl)(trimethoxy)silan,(6-Amino-n-hexyl)(methyl)(dimethoxy)silan, (3-Aminopropyl)(methyl)(dimethoxy)silan, (3-Aminopropyl)(methyl)(diethoxy)silan, (2-Aminoethyl)(phenyl)(dimethoxy)silan, (2-Aminoethylamino)(ethyl)(triethoxy)silan (2-Aminoethyl)(methyl)(diethoxy)silan, (2-Aminoethyl)(methyl)(dimethoxy)silan,(1-Aminomethyl)(methyl)(diethoxy)silan, (N-Cyclohexyl-aminomethyl)(methyl)(dieethoxy)silan (GENIOSIL XL 924),(N-Ethylamino-i-butyl)(trimethoxy)silan, (N-n-Butyl-3-aminopropyl)(trimethoxy)silan, (N-n-Butyl-3-aminopropyl)(triethoxy)silan, (N-n-Butyl-1-aminomethyl)(triethoxy)silan, (N-n-Butyl-1-aminomethyl)(trimethoxy)silan, (Benzyl-3-aminopropyl)(trimethoxy)silan, (Benzyl-3-aminopropyl)(triethoxy)silan, (N-Phenylaminomethyl)(trimethoxy)silan (GENIOSIL XL 973), (N-Phenylaminopropyl)-(trimethoxy)silan (N-Formyl-3-aminopropyl)(triethoxy)silan, (N-Formyl-3-aminopropyl)(trimethoxy)silan, (N-Formyl-1-aminomethyl)(methyl)(dimethoxy)silan, (N-Formyl-1-aminomethyl)(methyl)(diethoxy)silan,(N-n-Butyl-3-aminopropyl)(methyl)(diethoxy)silan, (N-n-Butyl-3-aminopropyl)(methyl)(dimethoxy)silan, (N-n-Butyl-1-aminomethyl)(methyl)-(dimethoxy)silan, (N-Butyl-1-aminomethyl)(methyl)(diethoxy)silan,(Diaminoethylen-3-propyl)(triethoxy)silan, (N-(2-Aminoethyl)aminoethyl)(trimethoxy)silan, (2-Aminoethylaminoethyl)(triethoxy)silan, (N-(1-Aminoethyl)aminomethyl)(trimethoxy)silan, (N-(1-Aminoethyl)aminomethyl)(triethoxy)silan, $(H_2N(CH_2)_2NH(CH_2)_3)Si(OCH_3)_3$ ((N-(2-Aminoethyl)-3-aminopropyl)(trimethoxy)silan, (DAMO)), (2-Aminoethylaminopropyl)(triethoxy)silan (Silquest A-1130), (2-Aminoethylaminoethyl)(trimethoxy)silan, (2-Aminoethylaminoethyl)(triethoxy)silan, (1-Aminoethylaminopropyl)(trimethoxy)silan, (1-Aminoethylaminopropyl)(triethoxy)silan, (1-Aminoethylaminomethyl)(trimethoxy)silan, (1-Aminoethylaminomethyl)(triethoxy)silan,(N-Cyclohexyl-3-aminopropyl)(trimethoxy)silan, (N-(N-Benzylaminoethyl)aminopropyl)(trimethoxy)silan,(3-Ureidopropyl)(trimethoxy)silan, (3-Ureidopropyl)(triethoxy)silan, (N-(2-Aminoethyl)-3-aminopropyl)(methyl)(dimethoxy)silan, (N-(2-Aminoethyl)-3-aminopropyl)(methyl)(diethoxy)silan, $H_2N(CH_2)_2NH(CH_2)_2NH(CH_2)_3Si(OCH_3)_3$ ((Triaminodiethylen-3-propyl)(trimethoxy)silan, TRIAMO), (Triaminodiethylen-3-propyl)(triethoxy)silan, (Triaminodiethylen-3-propyl)(trimethoxy)silan, (Triaminodiethylen-3-propyl)(triethoxy)silan, (((Aminoethyl)aminoethyl)aminopropyl)(trimethoxy)silan, (((Aminoethyl)aminoethyl)aminopropyl)(triethoxy)silan, Bis(trimethoxysilan)amin, Bis(triethoxysilan)amin, Bis(trimethoxysilylethyl)amin, Bis(triethoxysilylmethyl)amin, Bis(triethoxysilylethyl)amin, Bis(tri-methoxysilylpropyl)amin, Bis(triethoxysilylpropyl)amin, Bis(trimethoxysilylisopropyl)amin, Bis(triethoxysilylisopropyl)amin, (3-Trimethoxy)silylmethyl-O-methylcarbamat, N-Dimethoxy-(methyl)silylmethyl-O-methylcarbamat, Triethoxysilylpropyl)-t-butylcarbamate, Triethoxysilyl-propylethylcarbamate, Tris(trimethoxysilylmethyl)amine, Tris(trimethoxysilylethyl)amin, Tris(trimethoxysilyl-n-propyl)amin, Tris(trimethoxysilyl-i-propyl)amin, $N[CH_2)_3Si(OC_2H_5)_3]_3$ (Tris(triethoxysilylmethyl)amin, Tris-AMEO), Tris(triethoxysilylmethyl)amin, Tris(triethoxysilylethyl)amin, Tris(triethoxysilyl-n-propyl)amin, Tris(triethoxysilyl-i-propyl)amin, $N[CH_2)_3Si(OCH_3)_3]_3$ (Tris-AMMO), $((H_5C_2O)_3Si(CH_2)_3NH(CH_2)_3Si(OC_2H_5)_3$, (Bis(triethoxysilylpropyl)amin, Bis-AMEO), $(H_3CO)_3Si(CH_2)_3NH(CH_2)_3Si(OCH_3)_3$ (Bis(trimethoxysilylpropyl)amin. Bis-AMMO), $(H_3CO)_3Si(CH_2)_3NH(CH_2)_2NH(CH_2)_3Si(OCH_3)_3$ (Bis-DAMO), $(H_3CO)_3Si(CH_2)_3NH(CH_2)_2NH(CH_2)_2NH(CH_2)_3Si(OCH_3)_3$ (Bis-TRIAMO), $(H_3CO)_2(CH_3)Si(CH_2)_3NH(CH_2)_2NH(CH_2)_3Si(OCH_3)_2(CH_3)$, $(H_3CO)_3(CH_3)Si(CH_2)SiNH(CH_2)_2NH(CH_2)_2NH(CH_2)_3Si(OCH_3)_2(CH_3)$, $(H_3CO)_3Si(CH_2)_3NH(CH_2)_2NH(CH_2)_2NH(CH_2)_3Si(OCH_3)_3$ (Bis-DAMO), $(H_3CO)_3Si(CH_2)_3NH(CH_2)_2NH(CH_2)_2NH(CH_2)_2NH(CH_2)_2NH(CH_2)_3Si(OCH_3)_3$ (BiS-TRIAMO), (3-(Trimethoxysilyl)methyl)(O-methyl)carbamat, (N-(Dimethoxy)(methyl)silyl)methyl)(O-methyl)carbamat, (3-(Triethoxysilyl)propyl)(t-butyl)carbamat, ((Triethoxysilyl)propyl)(ethyl)carbamat. Vorzugsweise wird mindestens ein Aminosilan, vorzugsweise mindestens 95 Gew.-% der Aminosilane, bezogen auf das Gesamtgewicht der in dem Heteropolysiloxans enthaltenen Aminosilankomponenten, weiter bevorzugt sämtliche Aminosilane, aus den vorgenannten Beispielen ausgewählt.

Insbesondere ist es bevorzugt, dass das mindestens eine Aminosilan ausgewählt wird aus der Gruppe der Aminosilane gemäß Formel (I):

$$R^{a1}{}_{x1}R^{b1}{}_{y1}R^{c1}{}_{(4\text{-}x1\text{-}y1)}Si \qquad (I)$$

, wobei die $R^{a1}$ unabhängig voneinander ausgewählt werden aus mit mindestens einer Stickstoffgruppe substituierten funktionellen Gruppen, wobei die funktionelle Gruppe ausgewählt wird aus der Gruppe, bestehend aus C1-C16 Alkylgruppen, C2-C8 Alkenylgruppen, C2-C8 Alkinylgruppen und Phenylgruppen, C7-C12 Alkylarylgruppen, und C7-C12 Arylalkylgruppen und Mischungen davon,
die $R^{b1}$ unabhängig voneinander ausgewählt werden aus der Gruppe, bestehend aus unsubstituierten verzweigten oder unverzweigten C1-C18 Alkylgruppen, vorzugsweise C1-C16 Alkylgruppen, C2-C8 Alkenylgruppen, C2-C8 Alkinylgruppen, Phenylgruppen, C7-C12 Arylalkylgruppen, C7-C12 Alkylarylgruppen und Mischungen hiervon,
die $R^{c1}$ unabhängig voneinander ausgewählt werden aus der Gruppe der Alkoxygruppen,
x1 = 1, 2 oder 3 ist, und
y1 aus der Gruppe der ganzen Zahlen von 0 bis (3-x1) ausgewählt wird.

Vorzugsweise werden mindestens 95 Gew.-% der Aminosilane, bezogen auf das Gesamtgewicht der in dem Heteropolysiloxan enthaltenen Aminosilankomponenten, weiter bevorzugt sämtliche Aminosilane, aus den vorgenannten Silanen ausgewählt. Ferner ist es bevorzugt, dass x1 = 1 oder 2 ist und y1 aus der Gruppe der ganzen Zahlen von 0 bis (2-x1) ausgewählt wird.

Wird in den Ausführungsformen der vorliegenden Erfindung eine Variable aus einem Bereich ganzer Zahlen ausgewählt, so sind die genannten Endpunkte des Zahlenbereichs mit eingeschlossen.

Soweit es in der vorliegenden Anmeldung nicht anderweitig spezifiziert ist, können die genannten Alkylgruppen, Alkenylgruppen, Alkinylgruppen und Alkoxygruppen in dieser oder in den anderen Ausführungsformen der vorliegenden Anmeldung verzweigt oder unverzweigt vorliegen.

Bei weiteren Ausführungsformen werden die $R^{a1}$ unabhängig voneinander ausgewählt aus mit mindestens einer Stickstoffgruppe substituierten funktionellen Gruppen, wobei die funktionelle Gruppe ausgewählt wird aus der Gruppe, bestehend aus C1-C5 Alkylgruppen, C2-C5 Alkenylgruppen und C2-C5 Alkinylgruppen und Mischungen davon, die $R^{b1}$ unabhängig voneinander ausgewählt werden aus der Gruppe, bestehend aus unsubstituierten verzweigten oder unverzweigten C1-C4 Alkylgruppen, C2-C4 Alkenylgruppen, C2-C4 Alkinylgruppen, Phenylgruppen und Mischungen davon, und die $R^{c1}$ unabhängig voneinander ausgewählt werden aus der Gruppe der C1-C4 Alkoxygruppen.

Insbesondere ist es bevorzugt, dass die $R^{c1}$ ausgewählt werden aus der Gruppe bestehend aus Methoxy und Ethoxy.

Bei weiteren Ausführungsformen ist es bevorzugt, dass die mindestens eine Stickstoffgruppe von $R^{a1}$ ausgewählt wird aus der Gruppe, bestehend aus $-NH_{(2-r1)}R^{d1}_{r1}$ und $-(NH_{(3-s1)}R^{d1}_{s1})^{+}$, wobei r1 aus den ganzen Zahlen von 0 bis 2 und s1 aus den ganzen Zahlen von 0 bis 3 ausgewählt wird und die $R^{d1}$ unabhängig voneinander ausgewählt werden aus der Gruppe, bestehend aus C1-C16 Alkylgruppen, C2-C8 Alkenylgruppen, C2-C8 Alkinylgruppen, Phenylringen, C7-C12 Alkylarylgruppen, C7-C12 Alkoxyalkylgruppen, Dialkylendiamingruppen und Trialkylentriamingruppen, sowie gesättigten und ungesättigten Alkylenen und Heteroalkylenen wie $-(CH_2)_3-$, $-(CH_3)_4-$, $-(CH_2)_5-$, -CH=CH-CH=CH- oder $-CH=N-(CH_2)_2-$ falls r1 oder s1 $\geq$ 2 ist, wobei die Heteroatome in den Heteroalkylenen aus N und O ausgewählt werden. Vorzugsweise sind die Heteroatome der Heteroalkylene Stickstoffatome. Gegebenenfalls vorhandenen Substituenten der vorgenannten Gruppen werden vorzugsweise ausgewählt werden aus stickstoffhaltigen Substituenten wie $-NH_{(2-t1)}R^{e1}_{t1}$ und $-(NH_{(2-u1)}R^{e1}_{u1})^{+}$, wobei t1 aus den ganzen Zahlen von 0 bis 2 ausgewählt wird, u1 aus den ganzen Zahlen von 0 bis 3 ausgewählt wird, und die $R^{e1}$ ausgewählt werden aus der Gruppe, bestehend aus C1-C4 Alkylgruppen. Insbesondere ist es bevorzugt, dass die vorgenannten $R^{d1}$ unsubstituiert sind.

Bei weiteren Ausführungsformen werden die $R^{d1}$ ausgewählt aus der Gruppe, bestehend aus aus C1-C4 Alkylgruppen, C2-C4 Alkenylgruppen, C2-C4 Alkinylgruppen, Phenylringen, C7-C8 Alkylarylgruppen, C7-C8 Alkoxyalkylgruppen, Dialkylendiamingruppen und Trialkylentriamingruppen, sowie gesättigten und ungesättigten C4-C7 Alkylenen und C3-C6 Heteroalkylenen wie $-(CH_2)_3-$, $-(CH_3)_4-$, $-(CH_2)_5-$, -CH=CH-CH=CH- oder $-CH=N-(CH_2)_2-$ falls r1 oder s1 $\geq$ 2 ist, wobei die Heteroatome in den Heteroalkylenen aus N und O ausgewählt werden.

Ferner ist es bei weiteren Ausführungsformen bevorzugt, dass die mindestens eine Stickstoffgruppe von $R^{a1}$ ausgewählt wird aus der Gruppe, bestehend aus $-NH_{(2-r1)}R^{d1}_{r1}$ und - $(NH_{(3-s1)}R^{d1}_{s1})^{+}$, wobei r1 aus den ganzen Zahlen von 0 bis 2 und s1 aus den ganzen Zahlen von 0 bis 3 ausgewählt wird und die $R^{d1}$ unabhängig voneinander ausgewählt werden aus der Gruppe, bestehend aus unsubstituierten und substituierten C1-C8 Alkylgruppen, vorzugsweise C1-C4 Alkylgruppen, wobei die Substituenten ausgewählt werden aus der Gruppe, bestehend aus $-NH_{(2-t1)}R^{e1}_{t1}$ und $-(NH_{(3-u1)}R^{e1}_{u1})^{+}$, wobei t1 aus den ganzen Zahlen von 0 bis 2 und u1 aus den ganzen Zahlen von 0 bis 3 ausgewählt wird und die $R^{e1}$ unabhängig voneinander ausgewählt werden aus der Gruppe, bestehend aus unsubstituierten C1-C4 Alkylgruppen und C1-C4 Aminoalkylgruppen.

Bei weiteren Ausführungsformen ist es bevorzugt, dass mindestens ein Aminosilan ausgewählt wird aus der Gruppe, bestehend aus Aminoalkyltrialkoxysilanen, Bis(aminoalkyl)dialkoxysilanen, (Alkyl)(aminoalkyl)(dialkoxy)silan, ((Aminoalkyl)aminoalkyl)(trialkoxy)silanen, Bis(trialkoxysilylalkyl)aminen, Tris(trialkoxylalkyl)aminen, Bis-N,N'-(trialkoxysilylalkyl)alkylendiaminen, Bis- N,N'-(trialkoxysilylalkyl)dialkylentriaminen, wobei die Alkylgruppen unabhängig voneinander ausgewählt werden aus der Gruppe, bestehend aus Methylgruppe, Ethylgruppe, Propylgruppen und Butylgruppen, und die Alkoxygruppen unabhängig voneinander ausgewählt werden aus der Gruppe, bestehend aus Methoxygruppe und Ethoxygruppe. Besonders bevorzugt wird mindestens ein Aminosilan ausgewählt aus der Gruppe, bestehend aus Aminoalkyltrialkoxysilanen, ((Aminoalkyl)aminoalkyl)(trialkoxy)silanen und Bis(trialkoxysilylalkyl)aminen.

Gemäß der vorliegenden Erfindung wird zwischen Alkylsilanen und den in verschiedenster Weise funktionalisierten Silanen wie Aminosilanen unterschieden. Der Begriff "Alkylsilan" im Sinne der vorliegenden Erfindung umfasst keine funktionalisierten Silane wie Aminosilane, auch wenn diese beispielsweise zusätzlich zu einer Aminoalkylgruppe eine unsubstituierte Alkylgruppe aufweisen können. Beispiele des mindestens einen Alkylsilans sind (Methyl)(trialkoxy)silan, (Ethyl)(trialkoxy)silan, (n-Propyl)(trialkoxy)silan, (i-Propyl)(trialkoxy)silan, (n-Butyl)(trialkoxy)silan, (i- Butyl)(trialkoxy)silan, (n-Octyl)(trialkoxy)silan, (i-Octyl)(trialkoxy)silan, (Decyl)(trialkoxy)silan, (Dodecyl)(trialkoxy)silan, (Hexadecyl)(trialkoxy)silan, (Dimethyl)(dialkoxy)silan, wobei alkoxy für methoxy, ethoxy und Mischungen davon steht. Vorzugsweise wird mindestens ein Alkylsilan, vorzugsweise mindestens 95 Gew.-% der Alkylsilane, bezogen auf das Gesamtgewicht der in dem Heteropolysiloxan enthaltenen Alkylsilankomponenten, weiter bevorzugt sämtliche Alkylsilane, aus den vorgenannten Beispielen ausgewählt.

Bei weiteren Ausführungsformen ist es bevorzugt, dass das mindestens eine Alkylsilan eine Struktur gemäß Formel (II) aufweist

$$R^{a2}_{x2}R^{b2}_{(4-x2)}Si \qquad (II),$$

wobei die $R^{a2}$ unabhängig voneinander ausgewählt werden aus der Gruppe der unsubstituierten C1-C18 Alkylgruppen, bevorzugt C1-C16 Alkylgruppen, die $R^{b2}$ unabhängig voneinander ausgewählt werden aus der Gruppe der Alkoxygruppen und x2 aus 1 und 2 ausgewählt wird. Vorzugsweise werden mindestens 95 Gew.-% der Alkylsilane, bezogen auf das Gesamtgewicht der in dem Heteropolysiloxan enthaltenen Alkylsilankomponenten, weiter bevorzugt sämtliche Alkylsilane, aus den vorgenannten Silanen ausgewählt.

Bei weiteren Ausführungsformen ist es bevorzugt, dass die $R^{a2}$ unabhängig voneinander ausgewählt werden aus der Gruppe der unsubstituierten C1-C8 Alkylgruppen, und die $R^{b2}$ unabhängig voneinander ausgewählt werden aus der Gruppe der C1-C4 Alkoxygruppen.

Bei weiteren Ausführungsformen ist es bevorzugt, dass mindestens ein $R^{a2}$ des mindestens einem Alkylsilans gemäß Formel (II) ausgewählt wird aus der Gruppe der unsubstituierten C1-C3 Alkylgruppen.

Insbesondere ist es bevorzugt, dass die $R^{c2}$ ausgewählt werden aus der Gruppe bestehend aus Methoxy und

Ethoxy.

Bei weiteren Ausführungsformen ist es bevorzugt, dass die $R^{a2}$ ausgewählt werden aus der Gruppe der verzweigten oder unverzweigten, unsubstituierten C1-C8 Alkylgruppen, weiter bevorzugt der C1-C6 Alkylgruppen und noch weiter bevorzugt der C1-C4 Alkylgruppen. Beispiele solcher Alkylketten sind Methyl, Ethyl, i-Propyl, n-Propyl, n-Butyl, i-Butyl, t-Butyl, Hexyl und Octyl.

Bei weiteren Ausführungsformen ist es bevorzugt, dass die mindestens eine Vinylsilankomponente ausgewählt wird aus der Gruppe, bestehend aus (Vinyl)(trialkoxy)silan,(Vinyl)(methyl)(dialkoxy)silan, (Vinyl)(tris(methoxyethoxy))silan, (Vinyl)tris(2-methoxyethoxy)silan, (Vinyl)(triacetoxy)silan, (((Vinylbenzylamino)ethylamino)propyl)(trialkoxy)silan, (Allyl)(trialkoxy)silan und (Allyl)(triethoxy)silan, wobei alkoxy für methoxy, ethoxy und Mischungen davon steht, vorzugsweise für methoxy. Vorzugsweise wird mindestens ein Vinylsilan, vorzugsweise mindestens 95 Gew.-% der Vinylsilane, bezogen auf das Gesamtgewicht der in dem Heteropolysiloxan enthaltenen Vinylsilankomponenten, weiter bevorzugt sämtliche Vinylsilane, aus den vorgenannten Beispielen ausgewählt.

Bei weiteren Ausführungsformen ist es bevorzugt, dass das mindestens eine Vinylsilan eine Struktur gemäß Formel (III) aufweist

$$R^{a3}_{x3}R^{b3}_{y3}R^{c3}_{(4-x3-y3)}Si \qquad (III),$$

wobei die $R^{a3}$ unabhängig voneinander ausgewählt werden aus der Gruppe der unsubstituierten C2-C16 Vinylgruppen,
die $R^{b3}$ unabhängig voneinander ausgewählt werden aus der Gruppe der unsubstituierten C1-C18 Alkylgruppen, vorzugsweise C1-C16 Alkylgruppen,
die $R^{c3}$ unabhängig voneinander ausgewählt werden aus der Gruppe der Alkoxygruppen,
x3 ausgewählt wird aus 1 und 2, und
y3 aus der Gruppe der ganzen Zahlen von 0 bis (2-x3) ausgewählt wird.

Vorzugsweise werden mindestens 95 Gew.-% der Vinylsilane, bezogen auf das Gesamtgewicht der in dem Heteropolysiloxan enthaltenen Vinylsilankomponenten, weiter bevorzugt sämtliche Vinylsilane, aus den vorgenannten Silanen ausgewählt.

Bei weiteren Ausführungsformen ist es bevorzugt, dass die $R^{a3}$ unabhängig voneinander ausgewählt werden aus der Gruppe der unsubstituierten C2-C7 Vinylgruppen, $R^{b3}$ unabhängig voneinander ausgewählt werden aus der Gruppe der unsubstituierten C1-C8 Alkylgruppen, die $R^{c3}$ unabhängig voneinander ausgewählt werden aus der Gruppe der C1-C4 Alkoxygruppen.

Insbesondere ist es bevorzugt, dass die $R^{b3}$ ausgewählt werden aus der Gruppe bestehend aus Methoxy und Ethoxy.

Bei weiteren Ausführungsformen ist es bevorzugt, dass das mindestens ein Arylsilan ausgewählt wird aus der Gruppe, bestehend aus (Phenyl)(trialkoxy)silan, (Phenyl)(methyl)(dialkoxy)silan, (Diphenyl)(dialkoxy)silan, (Phenyl)(methyl)(dialkoxy)silan und (Benzyl-2-aminoethyl-3-aminopropyl)(trialkoxy)silan, wobei alkoxy für methoxy, ethoxy und Mischungen davon, vorzugsweise für methoxy, steht.

Bei weiteren Ausführungsformen ist es bevorzugt, dass das mindestens eine Arylsilan eine Struktur gemäß Formel (IV) aufweist

$$R^{a4}_{x4}R^{b4}_{y4}R^{c4}_{(4-x4-y4)}Si \qquad (IV),$$

wobei die $R^{a4}$ unabhängig voneinander ausgewählt werden aus der Gruppe, bestehend aus Phenylgruppen, unsubstituierten C7-C12 Alkylarylgruppen und unsubstituierten C7-C12 Arylalkylgruppen,
die $R^{b4}$ unabhängig voneinander ausgewählt werden aus der Gruppe der unsubstituierten C1-C18 Alkylgruppen, vorzugsweise C1-C16 Alkylgruppen,
die $R^{c4}$ unabhängig voneinander ausgewählt werden aus der Gruppe der Alkoxygruppen,
x4 ausgewählt wird aus 1 und 2, und
y4 aus der Gruppe der ganzen Zahlen von 0 bis (2-x4) ausgewählt wird.

Vorzugsweise werden mindestens 95 Gew.-% der Arylsilane, bezogen auf das Gesamtgewicht der in dem Heteropolysiloxan enthaltenen Arylsilankomponenten, weiter bevorzugt sämtliche Arylsilane, aus den vorgenannten Silanen ausgewählt.

Bei weiteren Ausführungsformen ist es bevorzugt, dass die $R^{a4}$ ausgewählt werden aus der Gruppe bestehend aus Phenylgruppen, C7-C10 unsubstituierten Alkylarylgruppen und unsubstituierten C7-C10 Arylalkylgruppen, $R^{b4}$ ausgewählt werden aus der Gruppe der unsubstituierten C1-C8 Alkylgruppen, und die $R^{c4}$ unabhängig voneinander ausgewählt werden aus der Gruppe der C1-C4 Alkoxygruppen.

Insbesondere ist es bevorzugt, dass die $R^{c4}$ ausgewählt werden aus der Gruppe bestehend aus Methoxy und Ethoxy.

Beispiele von Acrylsilanen sind (Methacryloxymethyl)(methyl)(dialkoxy)silan, (Methacryloxymethyl)(trialkoxy)silan, (3-Methacryloxypropyl)(trialkoxy)silan, (3-Methacryloxyisobutyl)(trialkoxy)silan, (3-Methacryloxypropyl)(methyl)(dialkoxy)silan, (1-Methacryloxymethyl)(trialkoxy)silan, (3-Acryloxypropyl)(trialkoxy)silan und (Acryloxymethyl)(trialkoxy)silan, wobei alkoxy für methoxy oder ethoxy steht. Ein besonders bevorzugtes Beispiel ist (Methacryloxypropyl)(trimethoxy)silan (MEMO).

Bei weiteren Ausführungsformen ist es bevorzugt, dass mindestens eine Acrylsilan eine Struktur gemäß Formel (V) aufweist

$$R^{a5}{}_{x5}R^{b5}{}_{y5}R^{c5}{}_{(4-x5-y5)}Si \qquad (V),$$

wobei die $R^{a5}$ ausgewählt werden aus der Gruppe, bestehend aus unsubstituierten C3-C10 Acrylgruppen und unsubstituierten ((C3-C7-Acryloxy)C1-C5-alkyl)trialkoxy,
die $R^{b5}$ ausgewählt werden aus der Gruppe der unsubstituierten C1-C18 Alkylgruppen, vorzugsweise C1-C16 Alkylgruppen,
die $R^{c5}$ ausgewählt werden aus der Gruppe der Alkoxygruppen,
x5 ausgewählt wird aus 1 und 2, und
y5 aus der Gruppe der ganzen Zahlen von 0 bis (2-x5) ausgewählt wird.

Vorzugsweise werden mindestens 95 Gew.-% der Acrylsilane, bezogen auf das Gesamtgewicht der in dem Heteropolysiloxan enthaltenen Acrylsilankomponenten, weiter bevorzugt sämtliche Acrylsilane, aus den vorgenannten Silanen ausgewählt.

Bei weiteren Ausführungsformen werden die $R^{a5}$ ausgewählt werden aus der Gruppe der unsubstituierten C3-C7 Acrylgruppen, die $R^{b5}$ ausgewählt werden aus der Gruppe der unsubstituierten C1-C8 Alkylgruppen, die $R^{c5}$ ausgewählt werden aus der Gruppe der unsubstituierten C1-C4 Alkoxygruppen.

Insbesondere ist es bevorzugt, dass die $R^{c5}$ ausgewählt werden aus der Gruppe bestehend aus Methoxy und Ethoxy.

Beispiele von Epoxysilanen sind 3-Glycidoxypropyltrialkoxysilan, 3-Glycidoxypropyltrialkoxysilan Glycidoxypropyl-methyldialkoxysilan und (Beta-(3,4-Epoxycyclohexyl)ethyl)(trialkoxy)silan, wobei alkoxy für methoxy, ethoxy oder propoxy steht.

Es zeigte sich, dass die Verwendung größerer Mengen an Epoxysilankomponenten, beispielsweise in typischerweise genutzten Nasslacksystemen wie Melaminsystemen, nachteilig ist. Hingegen erwies es sich in beispielsweise Pulverlacksystemen nicht als merklich nachteilig oder gar als vorteilhaft. Insbesondere im Zusammenhang mit ferromagnetischen Pigmenten ist der Einsatz eines Heteropolysiloxans umfassend merkliche Mengen an Epoxysilanen nicht problematisch oder sogar wünschenswert. Bei weiteren Ausführungsformen ist es jedoch bevorzugt, dass das Heteropolysiloxan weniger als 10 Gew.-%, weiter bevorzugt weniger als 3 Gew.-%, noch weiter bevorzugt weniger als 1 Gew.-% an Epoxysilankomponenten umfasst. Letzteres gilt insbesondere dann, wenn ferromagnetische Pigmente, welche primär für den Einsatz in Pulverlacksystemen gedacht sind, für ein breiteres Anwendungsfeld bereitgestellt werden sollen.

Bei weiteren Ausführungsformen ist es bevorzugt, dass das vorkondensierte Heteropolysiloxan mindestens ein weiteres Monomer umfasst, das ausgewählt wird aus der Gruppe, bestehend aus Tetramethoxysilan, Tetraethoxysilan, Tetrapropoxysilan und Mischungen davon.

Bei weiteren Ausführungsformen umfasst das Heteropolysiloxan vorzugsweise mindestens ein Silan gemäß Formel (VI)

$$R^{a6}{}_{4}Si \qquad (VI),$$

wobei die $R^{a6}$ unabhängig voneinander ausgewählt werden aus der Gruppe der Alkoxygruppen. Vorzugsweise werden die $R^{a}$ unabhängig voneinander ausgewählt aus der Gruppe der C1-C4 Alkoxygruppen.

Bei weiteren Ausführungsformen ist es bevorzugt, dass mindestens 32 Gew.-% der Monomerkomponenten, vorzugsweise mindestens 36 Gew.-% der Monomerkomponenten, noch weiter bevorzugt mindestens 41 Gew.-% der Monomerkomponenten, die das vorkondensierte Heteropolysiloxan aufbauen, aus den Aminosilanen ausgewählt werden, jeweils bezogen auf das Gesamtgewicht des Heteropolysiloxans.

Zudem ist es bei weiteren Ausführungsformen bevorzugt, dass der Anteil an Aminosilankomponenten im vorkondensierten Heteropolysiloxan höchstens 95 Gew.-%, weiter bevorzugt höchstens 89 Gew.-%, noch weiter bevorzugt

höchstens 86 Gew.-%, beträgt, jeweils bezogen auf das Gesamtgewicht des Heteropolysiloxans.

Insbesondere ist es bei weiteren Ausführungsformen bevorzugt, dass der Anteil an Aminosilankomponenten im vorkondensierten Heteropolysiloxan im Bereich von 32 Gw.-% bis 95 Gew.-%, weiter bevorzugt im Bereich von 36 Gew.-% bis 89 Gew.-%, noch weiter bevorzugt im Bereich von 41 Gew.-% bis 86 Gew.-%, liegt, jeweils bezogen auf das Gesamtgewicht des Heteropolysiloxans.

Bei weiteren Ausführungsformen ist es bevorzugt, dass mindestens 12 Gew.-% der Monomerkomponenten, weiter bevorzugt mindestens 17 Gew.-% der Monomerkomponenten, noch weiter bevorzugt mindestens 23 Gew.-% der Monomerkomponenten des vorkondensierten Heteropolysiloxans aus den Alkylsilanen ausgewählt werden, jeweils bezogen auf das Gesamtgewicht des Heteropolysiloxans.

Ferner ist es bei weiteren Ausführungsformen bevorzugt, dass höchstens 76 Gew.-% der Monomerkomponten, mehr bevorzugt höchstens 72 Gew.-% der Monomerkomponenten, noch weiter bevorzugt höchstens 69 Gew.-% der Monomerkomponenten des vorkondensierten Heteropolysiloxans aus Alkylsilanen ausgewählt werden, jeweils bezogen auf das Gesamtgewicht des Heteropolysiloxans.

Insbesondere ist es bei weiteren Ausführungsformen bevorzugt, dass der Anteil an Alkylsilankomponenten im vorkondensierten Heteropolysiloxan im Bereich von 12 Gew.-% bis 76 Gew.-%, weiter bevorzugt im Bereich von 17 Gew.-% bis 72 Gew.-%, noch weiter bevorzugt im Bereich von 23 Gew.-% bis 69 Gew.-%, liegt, jeweils bezogen auf das Gesamtgewicht des Heteropolysiloxans.

Bei weiteren Ausführungsformen ist es bevorzugt, dass das vorkondensierte Heteropolysiloxan zu mindestens 87 Gew.-%, weiter bevorzugt zu mindestens 93 Gew.-%, noch weiter bevorzugt zu mindestens 97 Gew.-% aus Monomerkomponenten besteht, die ausgewählt werden aus Aminosilanen und Alkylsilanen.

Bei weiteren bevorzugten Ausführungsformen beziehen sich die vorgenannten Mengenangaben bezüglich der Alkylsilankomponenten und Aminosilankomponenten auf die spezifischen Gruppen an Alkylsilanen und Aminosilanen, wie voranstehend aufgeführt. Dies gilt beispielsweise, wenn mindestens 95 Gew.-% der Alkylsilane eine Struktur gemäß Formel (II) aufweisen

$$R^{a2}{}_{x2}R^{b2}{}_{(4-x2)}Si \qquad (II),$$

wobei die $R^{a2}$ unabhängig voneinander ausgewählt werden aus der Gruppe der unsubstituierten C1-C18 Alkylgruppen, vorzugsweise C1-C16 Alkylgruppen,

die $R^{b2}$ unabhängig voneinander ausgewählt werden aus der Gruppe der Alkoxygruppen und x2 aus 1 und 2 ausgewählt wird. Vorzugsweise werden mindestens 95 Gew.-% der Alkylsilane, bezogen auf das Gesamtgewicht der in dem Heteropolysiloxan enthaltenen Alkylsilankomponenten, weiter bevorzugt sämtliche Alkylsilane, aus den vorgenannten Silanen ausgewählt.

Bei weiteren Ausführungsformen weist die Beschichtung der erfindungsgemäßen Metallpigmente, insbesondere der Metalleffektpigmente, vorzugsweise eine mittlere Dicke in einem Bereich von 20 nm bis 160 nm, mehr bevorzugt in einem Bereich von 25 nm bis 135 nm, auf, bestimmt unter Einsatz von Rasterelektronenmikroskopie.

Der Schichtdicken der Metalloxidschichten und der Kunststoffschichten auf den Metallpigmenten werden beispielsweise mittels REM-Aufnahmen an geeigneten Querschliffen ermittelt. Hierbei werden die Pigmente in einem Lack appliziert und dieser ausgehärtet. Hierbei ist auf eine möglichst gute Orientierung der Plättchen im Anwendungsmedium zu achten. Anschließend wird der ausgehärtete Lack angeschliffen und nach üblicher Probenpräparation der Querschliff im REM betrachtet. Für die Zählung werden nur Teilchen ausgewählt, die eine gute planparallele Orientierung aufweisen. Schlecht orientierte Plättchen ergeben bei dieser Methode einen hohen Fehler aufgrund des unbekannten Betrachtungswinkels. Die Beschichtungen weisen einen sehr guten Kontrast zum Metallkern auf. Sollte man die Schichtdicken der Metalloxid- und der Kunststoffschicht nicht gut unterscheiden können, so kann man örtlich aufgelöste EDX-Analysen verwenden, bevor die Schichtdicken vermessen werden. Der Begriff "mittlere Schichtdicke" im Sinne der Erfindung bezeichnet das arithmetische Mittel der Schichtdicken der Schichten von mindestens 30 Metallpigmenten, vorzugsweise 40 Metallpigmenten. Sofern die Beschichtung ungleichmäßig ist, so wird das arithmetische Mittel der dünnsten und der dicksten Stelle der Beschichtung des jeweiligen Partikels gebildet. Einzelne gravierende Abweichungen, die beispielsweise auf dem Einschluss bereits beschichteter Feinteilpigmente in die Beschichtung beruhen, werden nicht bei der Berechnung der mittleren Schichtdicke berücksichtigt.

Die erfindungsgemäßen Metallpigmente können als Trockenpräparat, Paste oder Suspension vorliegen. Trockenpräparate im Sinne der vorliegenden Erfindung sind beispielsweise Pulver und Granulate. Insbesondere können die erfindungsgemäßen Pigmente in Beschichtungsmittel eingearbeitet werden, welche beispielsweise ausgewählt werden aus der Gruppe, bestehend aus Nasslacken wie wasserbasierenden Lacken und lösemittelhaltigen Lacken, Pulverlacken, Coil Coating Formulierungen und Druckfarben. Ferner sind die erfindungsgemäßen Pigmente hervorragend geeignet zur Verwendung in Kunststoffen oder Kosmetika. Eine besonders bevorzugte Gruppe von Beschichtungsmitteln stellen Farben wie Druckfarben und Tinten, Nasslacke und Pulverlacke dar. Ein besonderes Anwendungsfeld der Druckfarben und Tinten ist das Gebiet der Sicherheitsdruckfarben.

Ferner betrifft die vorliegende Erfindung die Verwendung der erfindungsgemäßen Pigmente in wasserbasierenden sowie lösemittelbasierenden Lacken. Derartige Lacke werden beispielsweise in Automobilsektor und Industriesektor eingesetzt. Bei der Anwendung in wasserbasierenden Systemen kann das erfindungsgemäße Pigment in Wasser oder üblichen Colösern, wie zum Beispiel Butylglycol, angeschlämmt werden. Zudem kann das erfindungsgemäße Pigment auch direkt in das wasserbasierende Anwendungsmedium eingearbeitet werden. Analoges gilt für den Einsatz in lösemittelbasierenden Lacken. Die erfindungsgemäßen Pigmente zeichnen sich hierbei durch ein hervorragendes Dispergierverhalten aus.

Bei konventionellen Metallpigmenten, insbesondere Metalleffektpigmenten, können bei längerer Lagerung Veränderungen eintreten. Diese kann beispielsweise auf einer Agglomeration der Pigmente und/oder der Korrosion von beispielsweise Aluminiumpigmenten beruhen. Dies wiederum resultiert in einer Verminderung der Deckfähigkeit. Infolge der verminderten Agglomerationsneigung der erfindungsgemäßen Pigmente werden hingegen besonders vorteilhafte Ergebnisse erzielt.

Ferner zeigen die erfindungsgemäßen beschichteten Pigmente überraschenderweise eine verbesserte Orientierung in Nasslacken, wodurch bessere Helligkeitsflops erzielt werden.

Des Weiteren betrifft die Erfindung die Verwendung der erfindungsgemäßen Pigmente in Pulverlacken. Pulverlacke werden beispielsweise in der industriellen Serienfertigung zur Beschichtung von elektrisch leitfähigen und temperaturbeständigen Werkstoffen verwendet. Der zu applizierende Pulverlack liegt hierbei als festes und lösungsmittelfreies Pulver vor. Ferner sind die als Grundierung oder Einschichtdecklack eingesetzten Pulverlacke fast vollständig recycelbar. Die umweltfreundlichen und vielseitig einsetzbaren Pulverlacke enthalten Bindemittel, Pigmente, Füllstoffe und Vernetzer sowie optional Additive. Unter einem Bindemittel wird die dem Fachmann geläufige Definition verstanden. D.h., das Bindemittel umfasst sowohl den Filmbildner wie auch nicht flüchtige Hilfsstoffe wie beispielsweise Weichmacher, Füllstoffe und/oder Härter. Eine Auftragung der feinpulvrigen Pulverlacke erfolgt in der Regel elektrostatisch, bevor sie durch Einbrennen oder durch Strahlungsenergie gehärtet werden.

Zur Pigmentierung der Pulverlacke können unter anderem Metalleffektpigmente eingesetzt werden. Bei mittels Mischverfahren hergestellten Pulverlacken kann es sich jedoch als problematisch erweisen, dass durch die beim Extrusions- und Vermahlungsprozess auf die Pigmentplättchen einwirkenden Scherkräfte eine Beschädigung oder Zerstörung der Pigmentplättchen auftreten kann. Hierdurch kann insbesondere der Glanz und somit auch die Optik derart pigmentierter Anwendungen negativ beeinträchtigt werden.

Aus diesem Grund werden beispielsweise im Dry-blend-Verfahren die Metalleffektpigmente dem Basispulverlack erst nach der Vermahlung zugemischt. Dies hat jedoch den Nachteil, dass während der Lackapplikation eine mögliche Separation von Pigment und Pulverlack durch das unterschiedliche Aufladeverhalten der einzelnen Lackbestandteile auftritt. Hieraus folgt ein unregelmäßiger optischer Effekt in Folge einer Ab- oder Anreicherung von Pigment im Pulverlack während der Pulverlackapplikation. Ferner führt die Separierung von Pigment und Bindemittel zu einer veränderten Zusammensetzung des "Oversprays", d.h. des Anteils an Pulverlack, der an dem zu beschichtenden Gegenstand vorbeigesprüht wird und aus Kostengründen recycelt werden sollte. Alternativ wird das sogenannte Bonding-Verfahren eingesetzt, bei dem das Pigment unter Erwärmen an den Partikeln des Basislackes fixiert wird. Die Herstellung derartiger Bonding-Pulverlacken ist jedoch verhältnismäßig kostenaufwendig. Die Herstellung der zurzeit kostengünstigsten Pulverlacke erfolgt mittels Mischverfahren. Hierbei werden die Pigmente zusammen mit allen anderen Rohstoffen vermischt, extrudiert und vermahlen.

Ferner können die erfindungsgemäßen Pigmente im Coil-Coating-Verfahren eingesetzt werden. Dieses Verfahren zeichnet sich durch seine große Umweltfreundlichkeit aus. Beschichtung und Trocknung finden hierbei kontinuierlich in einem geschlossenen System statt, wobei im no-rinse Verfahren zudem das Abspülen von Chemikalienresten entfällt. Ferner kann durch eine optimierte Prozessführung ein Auftragswirkungsgrad von nahezu 100 % erreicht werden, während ansonsten bei den meisten Lackierverfahren beispielsweise größere Verluste durch das over spraying vorhanden sind. Da jedoch der Lack beim Coil-Coating bei Temperaturen von 240 bis 280°C eingebrannt wird, können für dieses Verfahren nur besonders stabile Pigmente eingesetzt werden.

Ferner können die erfindungsgemäßen Pigmente in Druckfarben eingesetzt werden. Beispiele solcher Druckfarben sind Tiefdruck-, Sieb oder Flexodruckfarben. Die erfindungsgemäßen Pigmente sind auch besonders geeignet für wasserbasierende Lacke (Wasserlacke) und Außenanwendungen.

Tief-, Flexo- oder Siebdruckfarben enthalten Lösemittel bzw. Lösemittelgemische. Diese dienen unter Anderem zum Lösen der Bindemittel, aber auch zur Einstellung wichtiger Anwendungseigenschaften der Druckfarben, wie beispielsweise der Viskosität oder der Trocknungsgeschwindigkeit. Typischerweise werden niedrig siedende Lösemittel eingesetzt, während höher siedende in kleineren Mengen zur Einstellung der Trocknungsgeschwindigkeit dienen.

Neben Lösemittel können verschiedene weitere Bestandteile in einer Farbe enthalten sein, wie beispielsweise Reaktivverdünner und Fotoinitiatoren bei strahlungshärtbaren Druckfarben; Bindemittel wie beispielsweise Nitrocellulose, Ethylcellulose, Hydroxyethylcellulose, Acrylate, Polyvinylbutyrale, aliphatische und aromatische Polyurethane und Polyharnstoffe; Füllstoffe wie Calciumcarbonat, Aluminiumoxidhydrat, Aluminiumsilikat und Magnesiumsilikat, Wachse wie Polyethylenwachse, oxidierte Polyethylenwachse, Petroleumwachse und Ceresinwachse; Fettsäureamide, Weichmacher; Dispergierhilfsmittel, Fettsäuren und Antiabsetzmittel.

Ferner betrifft die vorliegende Erfindung die Verwendung der erfindungsgemäßen Pigmente in Polymeren. Neben dem zusätzlichen Schutz infolge der erfindungsgemäßen Beschichtung lassen sich die Pigmente gut in die Polymere, beispielsweise thermoplastische Polymere, einarbeiten und dispergieren.

Beispiele thermoplastischer Polymere sind Polyoxyalkylene, Polycarbonate (PC), Polyester wie Polybutylenterephthalat (PBT) oder Polyethylenterephthalat (PET), Polyolefine wie Polyethylen (PE) oder Polypropylen (PP), Poly(meth)acrylate, Polyamide, vinylaromatische (Co)polymere wie Polystyrol, schlagzähmodifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Silicon-Polymere oder thermoplastische Elastomere. Es können auch Mischungen unterschiedlicher Thermoplaste eingesetzt werden.

Bei weiteren Ausführungsformen wird das Kosmetikum ausgewählt aus der Gruppe bestehend aus Körperpuder, Gesichtspuder, gepresstem und losem Puder, Gesichtsmakeup, Pudercreme, Crememakeup, Emulsionsmakeup, Wachsmakeup, Foundation, Moussemakeup, Wangenrouge, Augenmakeup wie Lidschatten, Mascara, Eyeliner, flüssige Eyeliner, Augenbrauenstift, Lippenpflegestift, Lippenstift, Lip Gloss, Lip Liner, Haarstylingkompositionen wie Haarspray, Haarmousse, Haargel, Haarwachs, Haarmascara, permanente oder semipermanente Haarfarben, temporäre Haarfarben, Hautpflegekompositionen wie Lotions, Gele, Emulsionen und Nagellackkompositionen.

Ferner betrifft die Erfindung die Verwendung mindestens eines vorkondensierten Heteropolysiloxans zur Erhöhung der Stabilität von Metallpigmenten, der Verbesserung von Anwendungseigenschaften von Metallpigmenten, die aus der Gruppe, die aus der Verbesserung der Stabilität von Metallpigmenten, der Applizierbarkeit und Ausrichtbarkeit von Metallpigmenten im Nasslack oder Pulverlack, insbesondere im Pulverlack, der Verringerung der Agglomerationsneigung von Metallpigmenten, der Verbesserung der Orientierung von Metallpigmenten in Lacksystemen und Kombinationen hiervon, besteht, wobei die Metallpigmente mindestens eine erste Beschichtungsschicht aufweisen, die mindestens ein Metalloxid umfasst, wobei der Begriff Metalloxid auch Oxidhydrate und Hydroxide umfasst, und wobei das Heteropolysiloxan mindestens eine Aminosilankomponente und mindestens eine Silankomponente, die ausgewählt wird aus der Gruppe, bestehend aus Alkylsilanen, Vinylsilanen und Arylsilanen, umfasst. Vorzugsweise umfasst das Heteropolysiloxan mindestens eine Aminosilankomponente und mindestens eine Alkylsilankomponente. Insbesondere ist es bevorzugt, dass die Wahl der Silanmonomeren zum Aufbau des Heteropolysiloxans gemäß den voranstehenden Ausführungsformen erfolgt.

Bei weiteren Ausführungsformen wird das Heteropolysiloxan als äußerste Schicht auf eine umhüllende Beschichtungsschicht umfassend mindestens ein Metalloxid aufgetragen.

Bei weiteren Ausführungsformen umfasst das Metallpigment mindestens eine anorganisch/organische Mischschicht.

Bei weiteren Ausführungsformen wird das Heteropolysiloxan auf eine Beschichtungsschicht aufgetragen, die im Wesentlichen aus Metalloxid, vorzugsweise Siliziumoxid, besteht.

Ferner betrifft die Erfindung ein Verfahren zur Herstellung eines erfindungsgemäßen Pigmentes gemäß Anspruch 12.

Insbesondere ist es bevorzugt, dass das Heteropolysiloxan mindestens eine Aminosilankomponente und ein mindestens ein Alkylsilankomponente umfasst. Der Begriff "vorkondensiert" im Zusammenhang mit dem Heteropolysiloxan bedeutet im Sinne der vorliegenden Erfindung, dass die betreffenden Silanmonomere in einem separaten Schritt vor der Aufbringung des Heteropolysiloxans bereits kondensiert wurden. Somit findet die Polykondensation der Silanmonomere nicht in Gegenwart der zu beschichtenden Metallpigmente statt. Vorzugsweise weisen die erfindungsgemäß eingesetzten vorkondensierten Heteropolysiloxane höchstens 25 %, weiter bevorzugt höchstens 19 %, noch weiter bevorzugt höchstens 16 % unkondensierte Gruppen auf. Die Bestimmung der unkondensierten Gruppen, insbesondere Hydroxylgruppen, erfolgt mithilfe dem Fachmann geläufiger Verfahren. Hierbei wird die Menge der hydrolysierten und/oder hydrolysierbaren kondensierbaren Gruppen in Relation zur der Gesamtmenge der bereits kondensierten und unkondensierten Gruppen gesetzt.

Bei weiteren Ausführungsformen umfasst das Verfahren vorzugsweise die folgenden Schritte zur Vorbeschichtung der Metallpigmente:

- Umsetzen mindestens eines anorganischen Netzwerkbildners und mindestens eines organischen Netzwerkbildners und mindestens einer reaktiven organischen Komponente in einer Flüssigphase unter Ausbildung einer Beschichtungszusammensetzung,
- Aufbringen der Beschichtungszusammensetzung auf Metallpigmente als Mischschicht,
  wobei die Metallpigmente vor, während oder nach dem Zugeben oder Umsetzen des mindestens einen anorganischen Netzwerkbildners und des mindestens einen organischen Netzwerkbildners und der mindestens einen reaktiven organischen Komponente zu der Flüssigphase zugegeben werden,
  wobei die Mischschicht mindestens teilweise ein anorganisches Netzwerk, das eine oder mehrere anorganische Oxidkomponente(n) aufweist, und mindestens eine organische Komponente aufweist, wobei die organische Komponente mindestens teilweise ein organisches Oligomer und/oder Polymer ist, welches mindestens teilweise mit dem anorganischen Netzwerk kovalent verbunden ist.

Bei weiteren Ausführungsformen umfasst das Verfahren die folgenden Schritte:

(a) Bereitstellen einer Reaktionsmischung von Metallpigmenten in einer Flüssigphase,
(b1) Zugeben mindestens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben mindestens eines reaktiven organischen Netzwerkbildners und mindestens einer reaktiven organischen Komponente startend vor oder während und endend während oder nach der Hydrolyse und/oder Kondensation von Schritt (c1),
oder
(b2) Zugeben mindestens eines reaktiven organischen Netzwerkbildners und mindestens einer reaktiven organischen Komponente zu der Reaktionsmischung von Schritt (a),
(c2) Zugeben mindestens eines anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden der anorganisch/organischen Mischschicht,
(f) optional Abtrennen der in Schritt (e) beschichteten Metallpigmente von der Reaktionsmischung.

Bei weiteren Ausführungsformen wird die reaktive organische Komponente in Form von reaktiven polymerisierbaren organischen Monomeren, Oligomeren und/oder Polymeren zugegeben.

Die reaktive organische Komponente kann in Form von Monomeren, Oligomeren, Polymeren und Mischungen hiervon zugegeben werden. Bei weiteren Ausführungsformen wird als reaktive organische Komponente mindestens ein reaktives Oligomer oder Polymer zugegeben.

Bei weiteren Ausführungsformen wird mindestens Polymerisationsinitiator zugesetzt, wie Azo- oder Peroxoinitiatoren. Beispiele entsprechender Polymerisationsinitiatoren sind AIBN, V601, Fentons Reagenz oder Benzoylperoxid.

Sofern das nach der Vorbeschichtung erhaltene Metallpigment eine umhüllende Beschichtungsschicht aufweist, die Metalloxid, vorzugsweise das oder die erwünschten Metalloxid(e), aufweist, kann auf diese erste Beschichtungsschicht sogleich die zweite Beschichtungsschicht mit oder aus dem Heteropolysiloxan aufgebracht werden.

Selbstverständlich kann auch auf ein vorbeschichtetes Metallpigment, das beispielsweise als äußere Schicht eine anorganisch-organische Mischschicht aufweist, zunächst eine wenigstens erste ein Metalloxid enthaltende Beschichtungsschicht und daran anschließend eine zweite Heteropolysiloxan enthaltende Beschichtungsschicht aufgebracht werden.

Das erfindungsgemäß eingesetzte vorkondensierte Heteropolysiloxan umfasst mindestens eine Aminosilankomponente und mindestens eine Silankomponente, die ausgewählt wird aus der Gruppe, bestehend aus Alkylsilanen, Vinylsilanen und Arylsilanen. Die Kondensation entsprechender Monomere, Oligomere und/oder Polymere zur Herstellung der eingesetzten Heteropolysiloxane erfolgt mithilfe dem Fachmann bekannter Methoden, wie sie beispielsweise in US 5808125 A, US 5679147 A und US 5629400 A offenbart sind. Ferner sind verschiedene Heteropolysiloxane auch käuflich erhältlich.

Vorzugsweise wird das Heteropolysiloxan in der Form einer wässrigen Formulierung eingesetzt. Insbesondere weisen Formulierungen vorzugsweise eine Konzentration an Heteropolysiloxan im Bereich von 5 bis 50 Gew.-% auf, bezogen auf das Gesamtgewicht der Formulierung.

Die Aufbringung des Heteropolysiloxans kann mithilfe dem Fachmann bekannter Verfahren erfolgen. Ein bevorzugtes Verfahren, da insbesondere mit sehr geringem Aufwand und hervorragenden Ergebnissen verbunden, ist das Einwirken lassen einer wässrigen Lösung des Heteropolysiloxans auf das zu beschichtende Pigment. Hierbei sollte die Einwirkzeit zwischen 15 Minuten und 240 Minuten liegen.

Bei weiteren Ausführungsformen ist es insbesondere bevorzugt, dass der Aufbringung der Heteropolysiloxanschicht kein Schritt der Härtung, insbesondere thermische Härtung, der Siloxanschicht folgt.

Bei weiteren Ausführungsformen weist das Heteropolysiloxan weniger als 0,5 Gew.-% an Alkoholen auf, die während der Herstellung des Heteropolysiloxans infolge Hydrolyse und/oder Kondensation freigesetzt werden.

Überraschenderweise zeigte sich ferner, dass vorzugsweise das Heteropolysiloxan im Wesentlichen vollständig, vorzugsweise vollständig hydrolysiert ist. Trotz der verringerten Möglichkeit einer weiteren Reaktion oder Vernetzung erzielen derartige Heteropolysiloxane überwiegend bessere Resultate.

Vorzugsweise weisen die erfindungsgemäß eingesetzten Heteropolysiloxane einen Gehalt an leichtflüchtigen organischen Lösungsmitteln von weniger als 0,3 Gew.-% auf, bezogen auf das Gesamtgewicht des Heteropolysiloxans.

Vorzugsweise wird das Heteropolysiloxan in Form einer wässrigen Formulierung eingesetzt. Typischerweise ist es bei den meisten Anwendungen bevorzugt, dass die wässrige Formulierung umfassend das Heteropolysiloxan möglichst geringe Mengen an VOCs (volatile organic compounds = flüchtige organische Verbindungen) wie des normalerweise bei der Umsetzung der Silanmonomere entstehenden Alkohols enthält. Bei weiteren Ausführungsformen ist es bevorzugt, dass die wässrigen Formulierungen weniger als 5 Gew.-%, vorzugsweise weniger als 1 Gew.-%, weiter bevorzugt weniger als 0,5 Gew.-%, noch weiter bevorzugt weniger als 0,1 Gew.-%, an VOCs enthält, jeweils bezogen auf das Gewicht der wässrigen Formulierung. Idealerweise werden wässrige Formulierungen eingesetzt, bei denen keine VOCs enthalten sind.

Vorzugsweise wird der bei der Kondensation der Silanmonomere entstehende Alkohol kontinuierlich aus dem Reaktionsgemisch entfernt.

Die Herstellung der erfindungsgemäß umhüllenden Beschichtungsschicht, umfassend mindestens ein Metalloxid, kann beispielsweise mittels des Sol-Gel-Verfahrens erfolgen.

Bei weiteren Ausführungsformen wird das Metalloxid der mindestens einen umhüllenden Beschichtungsschicht, umfassend mindestens ein Metalloxid, im Wesentlichen, vorzugsweise vollständig, ausgewählt aus der Gruppe, bestehend aus Siliziumoxid, Aluminiumoxid, Boroxid, Zirkoniumoxid, Ceroxid, Eisenoxid, Titanoxid, Chromoxid, Zinnoxid, Molybdänoxid, deren Oxidhydraten, deren Hydroxiden und Mischungen davon. Besonders bevorzugt werden die erfindungsgemäßen Metalloxide aus der Gruppe, bestehend aus Siliziumoxid, Aluminiumoxid und Mischungen davon, ausgewählt, wobei die vorgenannten Metalloxide auch deren Oxidhydrate und Hydroxide umfassen. Insbesondere hat sich die Verwendung von Siliziumoxiden wie Siliziumdioxid, Siliziumhydroxid und/oder Siliziumoxidhydrat als vorteilhaft erwiesen.

Ferner hat sich gezeigt, dass mittels der erfindungsgemäßen Kombination der Aufbringung des vorkondensierten Heteropolysiloxans auf die umhüllende Metalloxid-haltige Beschichtungsschicht bereits bei Verwendung einer einfachen im Wesentlichen aus Metalloxid bestehenden Schicht sehr gute Ergebnisse erzielt werden. Bei weiteren Ausführungsformen besteht daher die mindestens eine Beschichtungsschicht, auf die das mindestens eine vorkondensierte Heteropolysiloxan aufgebracht wird, im Wesentlichen aus Metalloxid, vorzugsweise aus Siliziumoxid.

Besonders hochwertige Eigenschaften, beispielsweise hinsichtlich der Stabilität, werden hingegen durch den Einsatz einer komplexeren anorganisch/organischen Mischschicht erzielt. Bei weiteren Ausführungsformen besteht daher die aufgebrachte Beschichtungsschicht umfassend mindestens ein Metalloxid aus einer anorganisch/organischen Mischschicht. Insbesondere ist es bevorzugt, dass die vorgenannte anorganisch/organische Mischschicht Siliziumoxid umfasst. Vorzugsweise besteht das in der anorganisch/organischen Mischschicht enthaltene Metalloxid im Wesentlichen aus Siliziumoxid, Siliziumhydroxid, Siliziumoxidhydrat oder deren Mischungen.

Bei weiteren Ausführungsformen umfasst das Verfahren die Aufbringung von mindestens einer weiteren Beschichtungsschicht umfassend mindestens ein Metalloxid.

Bei weiteren Ausführungsformen umfasst das Verfahren die Aufbringung mindestens einer weiteren Beschichtungsschicht, die im Wesentlichen aus mindestens einem organischen Polymer besteht. Die betreffende Schicht ist zwischen der mindestens einen umhüllenden Beschichtungsschicht umfassend mindestens ein Metalloxid und dem metallischen Substrat angeordnet.

Gemäß weiteren bevorzugten Ausführungsformen besteht das mindestens eine organische Polymer im Wesentlichen aus einem Polymer, das ausgewählt wird aus der Gruppe bestehend aus Polyacrylat, Polymethacrylat, Polyacrylamid, Polyacrylnitril, Polyvinylchlorid, Polyvinylacetat, Polyamid, Polyalken, Polydien, Polyalkin, Polyalkylenglycol, Epoxidharz, Polyester, Polyether, Polyol, Polyurethan, Polycarbonat, Polyethylenterephthalat und Mischungen hiervon. Als besonders vorteilhaft haben sich Polymerschichten erwiesen, bei denen das organische Polymer im Wesentlichen ausgewählt wird aus der Gruppe, bestehend aus Polyacrylat, Polymethacrylat, Polyurethan, Polyester und Mischungen davon, weiter bevorzugt aus der Gruppe bestehend aus Polyacrylat, Polymethacrylat und Mischungen hiervon.

Bei weiteren Ausführungsformen werden die spezifizierten Beschichtungsschichten in einer Ein-Topf-Reaktion aufgebracht.

Bei weiteren Ausführungsformen ist die Herstellung der umhüllenden Beschichtungsschicht, umfassend mindestens ein Metalloxid, zumindest weitgehend beendet, bevor die Beschichtung mit der mindestens einen Beschichtungsschicht, umfassend mindestens ein Heteropolysiloxan, aufgebracht wird. Unter der "weitgehend beendeten" Herstellung der Beschichtungsschicht wird im Sinne der vorliegenden Erfindung verstanden, dass höchstens 30 Gew.-% der Edukte der Beschichtung noch reaktiv sind. Vorzugsweise sind weniger als 15 Gew.-%, weiter bevorzugt weniger als 5 Gew.-% der Edukte noch reaktiv. Die Bestimmung der Menge erfolgt anhand der noch in Lösung befindlichen, reaktiven Eduktmengen.

Bei weiteren Ausführungsformen wird mindestens ein Tetraalkoxysilan oder das Oligomer von mindestens einem Tetraalkoxysilan bei der Herstellung von mindestens einer Beschichtungsschicht umfassend mindestens ein Metalloxid eingesetzt. Die Alkoxygruppen des Tetraalkoxysilans können unabhängig voneinander ausgewählt werden, beispielsweise aus der Gruppe der C1-C4 Alkoxygruppen. Jedoch stellen Tetraalkoxygruppen mit mindestens 3, vorzugsweise mindestens 4, identischen Alkoxygruppen besonders bevorzugte Tetraalkoxysilane dar. Vorzugsweise werden die Tetraalkoxysilane ausgewählt aus der Gruppe bestehend aus Tetraethoxysilan und Oligomeren von Tetraethoxysilan.

Bei weiteren Ausführungsformen wird ein organofunktionelles Silan bei der Herstellung mindestens einer Beschichtungsschicht umfassend mindestens ein Metalloxid eingesetzt.

Bei weiteren Ausführungsformen wird als Flüssigphase ein Lösungsmittel ausgewählt aus der Gruppe bestehend aus Wasser, Alkoholen, Glykolethern, Ketonen, Acetatestern, Testbenzin und Mischungen davon.

Bei weiteren Ausführungsformen liegt die Reaktionstemperatur bei den Schritten (b) bis (e) in einem Bereich von 0°C bis 180°C, bevorzugt von 40°C bis 120°C, weiter bevorzugt in einem Bereich von 60°C bis 100°C.

Bei weiteren Ausführungsformen liegt der pH-Wert bei den Schritten (c1) oder (d2) in einem Bereich von 2 bis 4 und bei dem Schritt (e) in einem Bereich von 8 bis 9.

Insbesondere ist es bei weiteren Ausführungsformen bevorzugt, dass die erfindungsgemäßen beschichteten Metallpigmente, insbesondere die in den Ansprüchen beschriebenen, nach dem vorgenannten Verfahren und vorzugsweise dessen spezifischen Ausführungsformen hergestellt wurde. Besonders bevorzugt sind hierbei die in den Ansprüchen und nachstehenden Aspekten angeführten Verfahrensvarianten.

Ferner betrifft die Erfindung Beschichtungsmittel, welche beschichtete Metallpigmente enthält, die ausgewählt werden aus der Gruppe, bestehend aus beschichteten Metallpigmente gemäß einem der Ansprüche oder der Aspekte, sowie Metallpigmente, welche nach einem Verfahren gemäß einem der Ansprüche oder Aspekte hergestellt wurden.

Bei weiteren Ausführungsformen wird das Beschichtungsmittel ausgewählt aus der Gruppe, bestehend aus Wasserlacken, lösemittelhaltigen Lacken und Pulverlacken. Ein besonders bevorzugtes Beschichtungsmittel für die erfindungsgemäß beschichteten ferromagnetischen Pigmente sind Pulverlacke.

Ferner betrifft die Erfindung einen Gegenstand der Metallpigmente mit Beschichtung, auch als beschichtete Metallpigmente bezeichnet, gemäß einem der Ansprüche oder Aspekte aufweist.

Gemäß einem Aspekt 1 betrifft die vorliegende Erfindung ein Metallpigment gemäß Anspruch 1.

Vorzugsweise handelt es sich bei den Metallpigmenten um plättchenförmige Metallpigmente.

Gemäß einem Aspekt 2 der vorliegenden Erfindung ist vorzugsweise das beschichtete Metallpigment gemäß Aspekt 1 plättchenförmig.

Gemäß einem Aspekt 3 der vorliegenden Erfindung weist vorzugsweise das beschichtete Metallpigment gemäß einem der Aspekte 1 bis 2 eine Beschichtung mit einer mittleren Dicke in einem Bereich von 20 nm bis 160 nm auf. Die Bestimmung der Dicke der Beschichtung erfolgt unter Einsatz von Rasterelektronenmikroskopie.

Gemäß einem Aspekt 4 der vorliegenden Erfindung weist vorzugsweise das beschichtete Metallpigment gemäß einem der Aspekte 1 bis 3 keine Beschichtungsschicht auf, die aus thermoresponsiven Polymer, vorzugsweise organischem Polymer, besteht. Weiter bevorzugt weist das beschichtete Metallpigment keine Beschichtungsschicht auf, die im Wesentlichen aus mindestens einem thermoresponsiven Polymer, vorzugsweise mindestens einem organischem Polymer, besteht.

Gemäß einem Aspekt 5 der vorliegenden Erfindung ist vorzugsweise bei dem gemäß einem der Aspekte 1 bis 4 beschichteten Metallpigment das vorkondensierte Heteropolysiloxan nicht auf eine umhüllende Beschichtungsschicht, umfassend mindestens ein Metalloxid aufgebracht, die ein Oxidationsprodukt des Metallpigments darstellt und dünner als 20 nm ist. Vorzugsweise stellt die umhüllende erste Beschichtungsschicht, umfassend mindestens ein Metalloxid, kein Oxidationsprodukt des Metallpigments dar.

Gemäß der vorliegenden Erfindung ist das metallische Substrat des beschichteten Metallpigments gemäß einem der Aspekte 1 bis 5 ein Metallkern.

Gemäß einem Aspekt 7 der vorliegenden Erfindung weist vorzugsweise das beschichtete Metallpigment gemäß einem der Aspekte 1 bis 6 einen Methanolgehalt von weniger als 1 Gew.-% auf, bezogen auf das Gesamtgewicht des Pigments. Insbesondere ist es bevorzugt, dass die erfindungsgemäßen Metallpigmente nur Spurenbestandteile an Methanol aufweisen.

Gemäß einem Aspekt 8 der vorliegenden Erfindung weist vorzugsweise die Beschichtung des beschichteten Metallpigments gemäß einem der Aspekte 1 bis 7 einen Gehalt an Metalloxid von mindestens 43 Gew.-%, vorzugsweise von mindestens 65 Gew.-%, weiter bevorzugt von mindestens 82 Gew.-%, auf, jeweils bezogen auf das Gesamtgewicht der Beschichtung.

Gemäß einem Aspekt 9 der vorliegenden Erfindung werden vorzugsweise bei dem beschichteten Metallpigment gemäß einem der Aspekte 1 bis 8 mindestens 87 Gew-%, vorzugsweise mindestens 93 Gew-%, weiter bevorzugt mindestens 97 Gew-% der Silanmonomerkomponenten des vorkondensierten Heteropolysiloxans ausgewählt aus der Gruppe, bestehend aus Aminosilanen, Alkylsilanen und Mischungen davon, jeweils bezogen auf das Gesamtgewicht des Heteropolysiloxans.

Gemäß einem Aspekt 10 der vorliegenden Erfindung wird vorzugsweise bei dem beschichteten Metallpigment gemäß einem der Aspekte 1 bis 9 die mindestens eine Aminosilankomponente zu mindestens 92 Gew.-% , bezogen auf das Gesamtgewicht der in dem Heteropolysiloxan enthaltenen Aminosilankomponenten, vorzugsweise vollständig, ausgewählt aus der Gruppe, bestehend aus sich $(H_2N(CH_2)_3)Si(OCH_3)_3$ ((3-Aminopropyl)(trimethoxy)silan, AMMO),

$(H_2N(CH_2)_3Si(OC_2H_5)_3$ ((3-Aminopropyl)(triethoxy)silan, AMEO), $(H_2N(CH_2)_2)NH(CH_2)_3)Si(OCH_3)_3$ ((N-(2-Aminoethyl)-3-aminopropyl)(trimethoxy)silan, (DAMO)), (N-(2-Aminoethyl)-3-aminopropyl)(triethoxy)silan und Mischungen hiervon.

Gemäß einem Aspekt 11 der vorliegenden Erfindung wird vorzugsweise bei dem beschichteten Metallpigment gemäß einem der Aspekte 1 bis 10 das mindestens eine Aminosilan ausgewählt aus der Gruppe der Aminosilane gemäß Formel (I):

$$R^{a1}_{x1}R^{b1}_{y1}R^{c1}_{(4-x1-y1)}\,Si \qquad (I),$$

wobei die $R^{a1}$ unabhängig voneinander ausgewählt werden aus mit mindestens einer Stickstoffgruppe substituierten funktionellen Gruppen, wobei die funktionelle Gruppe ausgewählt wird aus der Gruppe, bestehend aus C1-C16 Alkylgruppen, C2-C8 Alkenylgruppen, C2-C8 Alkinylgruppen und Phenylgruppen, C7-C12 Alkylarylgruppen, und C7-C12 Arylalkylgruppen, die $R^{b1}$ unabhängig voneinander ausgewählt werden aus der Gruppe, bestehend aus unsubstituierten verzweigten oder unverzweigten C1-C18 Alkylgruppen, vorzugsweise C1-C16 Alkylgruppen, C2-C8 Alkenylgruppen, C2-C8 Alkinylgruppen, Phenylgruppen, C7-C12 Arylalkylgruppen, C7-C12 Alkylarylgruppen und Mischungen hiervon, die $R^{c1}$ unabhängig voneinander ausgewählt werden aus der Gruppe der Alkoxygruppen,
x1 1, 2 oder 3 ist, und
y1 aus der Gruppe der ganzen Zahlen von 0 bis (3-x1) ausgewählt wird.

Vorzugsweise werden mindestens 95 Gew.-% der Aminosilankomponenten, bezogen auf das Gesamtgewicht der in dem Heteropolysiloxan enthaltenen Aminosilankomponenten, weiter bevorzugt sämtliche Aminosilankomponenten, aus den vorgenannten Silanen ausgewählt. Ferner ist es bevorzugt, dass x1 aus 1 und 2 ausgewählt wird und y1 aus der Gruppe der ganzen Zahlen von 0 bis (2-x1) ausgewählt wird.

Gemäß einem Aspekt 12 der vorliegenden Erfindung werden vorzugsweise bei dem beschichteten Metallpigment gemäß einem der Aspekte 1 bis 11
die $R^{a1}$ unabhängig voneinander ausgewählt aus mit mindestens einer Stickstoffgruppe substituierten funktionellen Gruppen, wobei die funktionelle Gruppe ausgewählt wird aus der Gruppe, bestehend aus C1-C5 Alkylgruppen, C2-C5 Alkenylgruppen und C2-C5 Alkinylgruppen, die $R^{b1}$ unabhängig voneinander ausgewählt werden aus der Gruppe bestehend aus unsubstituierten verzweigten oder unverzweigten C1-C4 Alkylgruppen, C2-C4 Alkenylgruppen, C2-C4 Alkinylgruppen, Phenylgruppen, und
die $R^{c1}$ unabhängig voneinander ausgewählt werden aus der Gruppe der C1-C4 Alkoxygruppen. Vorzugsweise werden die $R^{c1}$ ausgewählt aus der Gruppe bestehend aus Methoxy und Ethoxy.

Gemäß einem Aspekt 13 der vorliegenden Erfindung wird vorzugsweise bei dem beschichteten Metallpigment gemäß einem der Aspekte 1 bis 12 die mindestens eine Stickstoffgruppe von $R^{a1}$ ausgewählt aus der Gruppe, bestehend aus $-NH_{(2-r1)}R^{d1}{}_{r1}$ und $-(NH_{(3-s1)}R^{d1}{}_{s1})^+$, wobei r1 aus den ganzen Zahlen von 0 bis 2 und s1 aus den ganzen Zahlen von 0 bis 3 ausgewählt wird, und die $R^{d1}$ unabhängig voneinander ausgewählt werden aus der Gruppe bestehend aus C1-C16 Alkylgruppen, C2-C8 Alkenylgruppen, C2-C8 Alkinylgruppen, Phenylringen, C7-C12 Alkylarylgruppen, C7-C12 Alkoxyalkylgruppen, Dialkylendiamingruppen und Trialkylentriamingruppen, sowie gesättigten und ungesättigten Alkylenen und Heteroalkylenen wie $-(CH_2)_3-$, $-(CH_3)_4-$, $-(CH_2)_5-$, -CH=CH-CH=CH- oder $-CH=N-(CH_2)_2-$, falls r1 oder s1 $\geq$ 2 ist, wobei die Heteroatome in den Heteroalkylenen aus N und O ausgewählt werden. Vorzugsweise sind die Heteroatome der Heteroalkylene Stickstoffatome. Gegebenenfalls vorhandene Substituenten der vorgenannten Gruppen werden vorzugsweise ausgewählt aus stickstoffhaltigen Substituenten wie $-NH_{(2-t1)}R^{e1}{}_{t1}$ und $-(NH_{(2-u1)}R^{e1}{}_{u1})^+$, wobei t1 aus den ganzen Zahlen von 0 bis 2 ausgewählt wird, u1 aus den ganzen Zahlen von 0 bis 3 ausgewählt wird und die $R^{e1}$ ausgewählt werden aus der Gruppe, bestehend aus C1-C4 Alkylgruppen. Insbesondere ist es bevorzugt, dass die vorgenannten $R^{d1}$ unsubstituiert sind.

Gemäß einem Aspekt 14 der vorliegenden Erfindung werden vorzugsweise bei dem beschichteten Metallpigment gemäß einem der Aspekte 1 bis 13 die $R^{d1}$ unabhängig voneinander ausgewählt aus der Gruppe, bestehend aus C1-C4 Alkylgruppen, C2-C4 Alkenylgruppen, C2-C4 Alkinylgruppen, Phenylringen, C7-C8 Alkylarylgruppen, C7-C8 Alkoxyalkylgruppen, Dialkylendiamingruppe, Trialkylentriamingruppe, sowie gesättigten und ungesättigten C4-C7 Alkylenen und C3-C6 Heteroalkylenen wie $-(CH_2)_3-$, $-(CH_3)_4-$, $-(CH_2)_5-$, - CH=CH-CH=CH- oder $-CH=N-(CH_2)_2-$, falls r1 oder s1 $\geq$ 2 ist, wobei die Heteroatome in den Heteroalkylenen aus N und O ausgewählt werden.

Gemäß einem Aspekt 15 der vorliegenden Erfindung wird vorzugsweise bei dem beschichteten Metallpigment gemäß einem der Aspekte 1 bis 14 die mindestens eine Stickstoffgruppe von $R^{a1}$ ausgewählt aus der Gruppe, bestehend aus $-NH_{(2-r1)}R^{d1}{}_{r1}$ und $-(NH_{(3-s1)}R^{d1}{}_{s1})^+$, wobei r1 aus den ganzen Zahlen von 0 bis 2 und s1 aus den ganzen Zahlen von 0 bis 3 ausgewählt wird, und die $R^{d1}$ unabhängig voneinander ausgewählt werden aus der Gruppe, bestehend aus unsubstituierten und substituierten C1-C8 Alkylgruppen, vorzugsweise C1-C4 Alkylgruppen, wobei die Substituenten ausgewählt werden aus der Gruppe, bestehend aus $-NH_{(2-t1)}R^{e1}{}_{t1}$ und - $(NH_{(3-u1)}R^{e1}{}_{u1})^+$, wobei t1 aus den ganzen Zahlen von 0 bis 2 und u1 aus den ganzen Zahlen von 0 bis 3 ausgewählt wird, und die $R^{e1}$ unabhängig voneinander ausgewählt werden aus der Gruppe, bestehend aus unsubstituierten C1-C4 Alkylgruppen und C1-C4 Aminoalkylgruppen.

Gemäß einem Aspekt 16 der vorliegenden Erfindung wird vorzugsweise bei dem beschichteten Metallpigment gemäß einem der Aspekte 1 bis 15 das mindestens eine Alkylsilan ausgewählt aus der Gruppe, bestehend aus (Methyl)(trialkoxy)silan, (Ethyl)(trialkoxy)silan, (n-Propyl)(trialkoxy)silan, (i-Propyl)(trialkoxy)silan, (n-Butyl)(trialkoxy)silan, (i-Butyl)(trialkoxy)silan, (n-Octyl)(trialkoxy)silan, (i-Octyl)(trialkoxy)silan, (Decyl)(trialkoxy)silan, (Dodecyl)(trialkoxy)silan, (Hexadecyl)(trialkoxy)silan und (Dimethyl)(dialkoxy)silan, wobei alkoxy für methoxy, ethoxy und Mischungen davon steht.

Gemäß einem Aspekt 17 der vorliegenden Erfindung weist vorzugsweise bei dem beschichteten Metallpigment gemäß einem der Aspekte 1 bis 16 das mindestens eine Alkylsilan eine Struktur gemäß Formel (II) auf

$$R^{a2}{}_{x2}R^{b2}{}_{(4-x2)}Si \qquad (II),$$

wobei die $R^{a2}$ unabhängig voneinander ausgewählt werden aus der Gruppe der unsubstituierten C1-C18 Alkylgruppen, bevorzugt C1-C16 Alkylgruppen, die $R^{b2}$ unabhängig voneinander ausgewählt werden aus der Gruppe der Alkoxygruppen und x2 aus 1 und 2 ausgewählt wird. Vorzugsweise werden mindestens 95 Gew.-% der Alkylsilankompnenten, bezogen auf das Gesamtgewicht der in dem Heteropolysiloxan enthaltenen Alkylsilankomponenten, weiter bevorzugt sämtliche Alkylsilane, aus den vorgenannten Silanen ausgewählt.

Gemäß einem Aspekt 18 der vorliegenden Erfindung umfassen vorzugsweise die Silanmonomerkomponenten des Heteropolysiloxans des beschichteten Metallpigments gemäß einem der Aspekte 1 bis 17 höchstens 10 Gew.-%, weiter bevorzugt höchstens 6 Gew.-%, noch weiter bevorzugt höchstens 4 Gew.-%, noch weiter bevorzugt höchstens Spuren von Epoxysilankomponenten, bezogen auf das Gesamtgewicht des Heteropolysiloxans.

Gemäß einem Aspekt 19 der vorliegenden Erfindung ist vorzugsweise das Heteropolysiloxan des beschichteten Metallpigments gemäß einem der Aspekte 1 bis 18 gemäß einem der voranstehenden Aspekte vollständig hydrolysiert.

Gemäß einem Aspekt 20 der vorliegenden Erfindung besteht vorzugsweise die mindestens eine erste Beschichtungsschicht, weiter bevorzugt sämtliche erste Beschichtungsschichten, die Metalloxid enthalten, des beschichteten Metallpigments gemäß einem der Aspekte 1 bis 19 aus mindestens einem Metalloxid, das vorzugsweise niedrigbrechend ist.

Gemäß einem Aspekt 21 der vorliegenden Erfindung wird vorzugsweise das Metalloxid der mindestens einen ersten umhüllenden Beschichtungsschicht, umfassend mindestens ein Metalloxid, des beschichteten Metallpigments gemäß einem der Aspekte 1 bis 20 ausgewählt aus der Gruppe, bestehend aus Siliziumoxid, Aluminiumoxid, Boroxid, Zirkoniumoxid, Ceroxid, Eisenoxid, Titanoxid, Chromoxid, Zinnoxid, Molybdänoxid und Mischungen davon, wobei die vorgenannten Metalloxide auch deren Oxidhydrate und Hydroxide umfassen. Vorzugsweise wird das Metalloxid ausgewählt aus der Gruppe, bestehend aus Siliziumoxid, Aluminiumoxid und Mischungen davon, wobei die vorgenannten Metalloxide auch deren Oxidhydrate und Hydroxide umfassen.

Gemäß einem Aspekt 22 der vorliegenden Erfindung wird vorzugsweise das Metalloxid der umhüllenden mindestens einen ersten Beschichtungsschicht, umfassend mindestens ein Metalloxid, des beschichteten Metallpigments gemäß einem der Aspekte 1 bis 21 im Wesentlichen ausgewählt aus der Gruppe, bestehend aus Siliziumoxid, Siliziumhydroxid, Siliziumoxidhydrat und Mischungen davon.

Gemäß einem Aspekt 23 der vorliegenden Erfindung besteht vorzugsweise der Metallkern des beschichteten Metallpigments gemäß einem der Aspekte 1 bis 22 im Wesentlichen aus Aluminium und die Beschichtung umfasst mindestens eine erste Beschichtungsschicht, die im Wesentlichen aus Siliziumoxid, Siliziumhydroxid, Siliziumoxidhydrat oder deren Mischungen besteht.

Gemäß einem Aspekt 24 der vorliegenden Erfindung besteht vorzugsweise die mindestens eine erste Beschichtungsschicht des beschichteten Metallpigments gemäß einem der Aspekte 1 bis 23, auf die das mindestens eine Heteropolysiloxan aufgebracht wird, im Wesentlichen aus mindestens einem Metalloxid. Vorzugsweise besteht die betreffende Schicht aus mindestens einem Metalloxid.

Gemäß einem Aspekt 25 der vorliegenden Erfindung wird vorzugsweise die mindestens eine separate im Wesentlichen rein organische Polymerschicht des beschichteten Metallpigments gemäß einem der Aspekte 1 bis 24 ausgewählt aus der Gruppe bestehend aus Polyacrylat, Polymethacrylat oder Mischungen davon. Diese im Wesentlichen rein organische Polymerschicht ist zwischen Metallpigment und der mindestens einen ersten Beschichtungsschicht, die mindestens ein Metalloxid enthält, auf die die zweite Beschichtungsschicht mit oder aus Heteropolysiloxan aufgebracht ist, angeordnet.

Gemäß einem Aspekt 26 der vorliegenden Erfindung besteht vorzugsweise das Metall des metallischen Substrats des beschichteten Metallpigments gemäß einem der Aspekte 1 bis 25 weitgehend aus einem Metall, das ausgewählt wird aus der Gruppe, bestehend aus Aluminium, Kupfer, Eisen, Zink, Zinn, Titan, Chrom, Kobalt, Silber, Edelstahl, Nickel, Antimon, Magnesium, Zirkonium, Silizium und Bor und Mischungen davon.

Gemäß einem Aspekt 27 der vorliegenden Erfindung besteht vorzugsweise das Metall des metallischen Substrats des beschichteten Metallpigments gemäß einem der Aspekte 1 bis 26 zu mindestens 60 Gew.-% aus einem ferromagnetischen Metall, bezogen auf das Gewicht des Metalls des metallischen Substrats ohne Sauerstoff. Vorzugsweise besteht das Metall des metallischen Substrats des Metallpigments gemäß einem der Aspekte 1 bis 26 zu mindestens 60 Gew.-% aus Eisen, Kobalt, Nickel und Mischungen hiervon.

Gemäß einem Aspekt 28 der vorliegenden Erfindung wird vorzugsweise das ferromagnetische Metall des beschichteten Metallpigments gemäß Aspekt 27 ausgewählt aus der Gruppe bestehend aus Eisen, Kobalt, Nickel und Mischungen hiervon.

Gemäß einem Aspekt 29 der vorliegenden Erfindung besteht vorzugsweise das Metall des metallischen Substrats des beschichteten Metallpigments gemäß einem der Aspekte 1 bis 28 zu mindestens 60 Gew.-% aus Eisen, bezogen auf das Gewicht des Metalls des metallischen Substrats ohne Sauerstoff.

Gemäß einem Aspekt 30 der vorliegenden Erfindung besteht vorzugsweise das Metall des metallischen Substrats des Metallpigments gemäß einem der Aspekte 1 bis 29 zu mindestens 95 Gew.-% aus einem Metall, das ausgewählt wird aus der Gruppe bestehend aus Aluminium, Eisen, Zink, Zinn, Silber, Gold, Kupfer, Chrom, Titan und Mischungen davon, vorzugsweise aus der Gruppe, bestehend aus Aluminium, Eisen, Kupfer, Zink und Mischungen davon, bezogen auf das Gewicht des Metalls des metallischen Substrats ohne Sauerstoff.

Gemäß einem Aspekt 31 der vorliegenden Erfindung werden vorzugsweise die Mischungen der Metalle des beschichteten Metallpigments gemäß einem der Aspekte 1 bis 30 ausgewählt aus der Gruppe, bestehend aus Messing (Goldbronze), Zink-Magnesium-Legierungen und Stahl.

Gemäß einem Aspekt 32 der vorliegenden Erfindung besteht vorzugsweise das Metall des metallischen Substrats des beschichteten Metallpigments gemäß einem der Aspekte 1 bis 31 zu mindestens 95 Gew.-% aus einem Metall, das ausgewählt wird aus der Gruppe, bestehend aus Aluminium, Eisen, Zink, Stahl, Kupfer und Messing, bezogen auf das Gewicht des Metalls des metallischen Substrats ohne Sauerstoff.

Gemäß einem Aspekt 33 der vorliegenden Erfindung besteht vorzugsweise der Metallkern des beschichteten Metallpigments gemäß einem der Aspekte 1 bis 32 aus plättchenförmigen Carbonyleisen, vorzugsweise aus reduziertem Carbonyleisen.

Gemäß einem Aspekt 34 der vorliegenden Erfindung besteht vorzugsweise das Metall des metallischen Substrats des beschichteten Metallpigments gemäß einem der Aspekte 1 bis 33 zu mindestens 95 Gew.-% aus einem Metall, das ausgewählt wird aus der Gruppe, bestehend aus Aluminium, Kupfer und Messing, bezogen auf das Gewicht des Metalls des metallischen Substrats ohne Sauerstoff.

Gemäß einem Aspekt 35 der vorliegenden Erfindung besteht vorzugsweise das Metall des metallischen Substrats des Metallpigments gemäß einem der Aspekte 1 bis 34 zu mindestens 95 Gew.-% aus Aluminium, bezogen auf das Gewicht des Metalls des metallischen Substrats ohne Sauerstoff.

Gemäß der vorliegenden Erfindung ist das metallische Substrat des Metallpigments gemäß einem der Aspekte 1 bis 35 ein Metallkern.

Gemäß einem Aspekt 37 der vorliegenden Erfindung ist vorzugsweise der Metallkern des beschichteten Metallpigments gemäß einem der Aspekte 1 bis 36 ein mittels Vermahlung erhaltenes Metallpigment mit einem $h_{50}$-Wert im Bereich von 20 bis 100 nm, einem Formfaktor von mindestens 200 und einer relativen Dickenverteilung $\Delta$H-Wert im Bereich von 30 bis 140 %, vorzugsweise von 70 bis 130 %, oder ein mittels PVD-Verfahren erhaltenes Metallpigment.

Gemäß einem Aspekt 38 der vorliegenden Erfindung wurde vorzugsweise mindestens eine umhüllende erste Beschichtungsschicht des beschichteten Metallpigments gemäß einem der Aspekte 1 bis 37, umfassend mindestens ein Metalloxid, mittels eines Sol-Gel-Prozesses aufgebracht.

Gemäß einem Aspekt 39 der vorliegenden Erfindung liegt vorzugsweise eine Mehrzahl an beschichteten Metallpigmenten gemäß einem der Aspekte 1 bis 38 vor.

Gemäß einem Aspekt 40 der vorliegenden Erfindung weisen vorzugsweise die beschichteten Metallpigmente gemäß einem der Aspekte 1 bis 39 einen $D_{50}$-Wert in einem Bereich von 2 $\mu$m bis 66 $\mu$m, vorzugsweise von 4 $\mu$m bis 50 $\mu$m, mehr bevorzugt von 8 $\mu$m bis 47 $\mu$m, auf.

Gemäß einem Aspekt 41 der vorliegenden Erfindung weisen vorzugsweise die beschichteten Metallpigmente gemäß einem der Aspekte 1 bis 40 einen $D_{90}$-Wert in einem Bereich von 10 $\mu$m bis 81 $\mu$m, weiter bevorzugt von 16 $\mu$m bis 80 $\mu$m, noch weiter bevorzugt von 21 $\mu$m bis 79 $\mu$m, auf.

Gemäß einem Aspekt 42 der vorliegenden Erfindung weisen vorzugsweise die beschichteten Metallpigmente gemäß einem der Aspekte 1 bis 41 einen $D_{10}$-Wert in einem Bereich von 0,5 $\mu$m bis 34 $\mu$m, weiter bevorzugt in einem Bereich von 1 $\mu$m bis 29 $\mu$m, noch weiter bevorzugt in einem Bereich von 2 $\mu$m bis 27 $\mu$m, auf.

Gemäß einem Aspekt 43 der vorliegenden Erfindung weisen vorzugsweise die beschichteten Metallpigmente gemäß einem der Aspekte 1 bis 42 einen $D_{10}$-Wert in einem Bereich von 0,5 $\mu$m bis 34 $\mu$m, einen $D_{50}$-Wert in einem Bereich von 2 $\mu$m bis 66 $\mu$m und einen $D_{90}$-Wert in einem Bereich von 10 $\mu$m bis 81$\mu$m auf.

Gemäß einem Aspekt 44 der vorliegenden Erfindung weisen vorzugsweise die beschichteten Metallpigmente gemäß einem der Aspekte 1 bis 43 einen Span $\Delta$D, der folgendermaßen definiert ist: $\Delta D = (D_{90}-D_{10})/ D_{50}$, in einem Bereich von 0,6 bis 2,1, vorzugsweise von 0,7 bis 1,9, mehr bevorzugt von 0,75 bis 1,7, auf.

Gemäß einem Aspekt 45 der vorliegenden Erfindung weisen vorzugsweise die beschichteten Metallpigmente gemäß einem der Aspekte 1 bis 44 einen $h_{50}$-Wert in einem Bereich von 15 nm bis 2 $\mu$m, vorzugsweise von 20 nm bis 370 nm, weiter bevorzugt von 20 nm bis 240 nm auf, wobei die Dickenauszählung mittels Rasterelektronenmikroskopie

erfolgt.

Gemäß einem Aspekt 46 der vorliegenden Erfindung weisen vorzugsweise die beschichteten Metallpigmente gemäß einem der Aspekte 1 bis 45 ein Aspektverhältnis ($D_{50}/h_{50}$) in einem Bereich von 1500:1 bis 10:1, vorzugsweise von 1200:1 bis 15:1, weiter bevorzugt von 950:1 bis 25:1, auf.

Gemäß einem Aspekt 47 betrifft die vorliegende Erfindung ein Verfahren zur Herstellung von beschichteten Metallpigmenten gemäß Anspruch 12.

Vorzugsweise ist das Metallpigment plättchenförmig.

Gemäß einem Aspekt 48 der vorliegenden Erfindung ist vorzugsweise das in dem Verfahren gemäß Aspekt 47 erhaltene beschichtete Metallpigment plättchenförmig.

Gemäß einem Aspekt 49 der vorliegenden Erfindung besteht vorzugsweise die in dem Verfahren gemäß einem der Aspekte 47 bis 48 aufgebrachte umhüllende erste Beschichtungsschicht, umfassend mindestens ein Metalloxid, im Wesentlichen aus Metalloxid.

Gemäß einem Aspekt 50 der vorliegenden Erfindung wird in dem Verfahren gemäß einem der Aspekte 47 bis 49 vorzugsweise das Heteropolysiloxan ausgewählt aus der Gruppe der Heteropolysiloxane gemäß einem der Aspekte 9 bis 19.

Gemäß einem Aspekt 51 der vorliegenden Erfindung wird in dem Verfahren gemäß einem der Aspekte 47 bis 50 vorzugsweise das Metalloxid der mindestens einen umhüllenden ersten Beschichtungsschicht, umfassend mindestens ein Metalloxid, ausgewählt aus der Gruppe, bestehend aus Siliziumoxid, Aluminiumoxid, Boroxid, Zirkoniumoxid, Ceroxid, Eisenoxid, Titanoxid, Chromoxid, Zinnoxid, Molybdänoxid, deren Oxidhydraten, deren Hydroxiden und Mischungen davon.

Gemäß einem Aspekt 52 der vorliegenden Erfindung ist in dem Verfahren gemäß einem der Aspekte 47 bis 51 vorzugsweise die umhüllende erste Beschichtungsschicht, umfassend mindestens ein Metalloxid, mittels eines Sol-Gel-Prozesses hergestellt.

Gemäß einem Aspekt 53 der vorliegenden Erfindung umfasst vorzugsweise das Verfahren gemäß einem der Aspekte 47 bis 52 das Aufbringen mindestens einer weiteren Beschichtungsschicht, umfassend mindestens ein Metalloxid.

Gemäß einem Aspekt 54 der vorliegenden Erfindung umfasst vorzugsweise das Verfahren gemäß einem der Aspekte 47 bis 53 das Aufbringen einer Beschichtungsschicht, die im Wesentlichen aus einem organischen Polymer besteht. Die im Wesentlichen aus einem organischen Polymer bestehende Beschichtungsschicht wird dabei als Vorbeschichtung vor dem Aufbringen der mindestens einen umhüllenden ersten Beschichtungsschicht, die wenigstens ein Metalloxid umfasst, aufgebracht.

Gemäß einem Aspekt 55 der vorliegenden Erfindung ist in dem Verfahren gemäß einem der Aspekte 47 bis 54 vorzugsweise das Erzeugen der umhüllenden ersten Beschichtungsschicht, die wenigstens ein Metalloxid umfasst, zumindest weitgehend beendet, bevor die Beschichtung mit der mindestens einen zweiten Beschichtungsschicht, umfassend mindestens ein Heteropolysiloxan, aufgebracht wird.

Gemäß einem Aspekt 56 der vorliegenden Erfindung wird in dem Verfahren gemäß einem der Aspekte 47 bis 55 vorzugsweise mindestens ein Tetraalkoxysilan oder ein Oligomer von mindestens einem Tetraalkoxysilan bei der Herstellung von mindestens einer Beschichtungsschicht, umfassend mindestens ein Metalloxid, verwendet. Vorzugsweise wird das Tetraalkoxysilan ausgewählt aus der Gruppe, bestehend aus Tetraethoxysilan und Oligomeren von Tetraethoxysilan.

Gemäß einem Aspekt 57 der vorliegenden Erfindung wird in dem Verfahren gemäß einem der Aspekte 47 bis 56 vorzugsweise das Heteropolysiloxan als äußerste Schicht auf eine umhüllende Beschichtungsschicht, umfassend mindestens ein Metalloxid, aufgetragen.

Gemäß einem Aspekt 58 der vorliegenden Erfindung weist in dem Verfahren gemäß einem der Aspekte 47 bis 57 vorzugsweise das Heteropolysiloxan weniger als 0,5 Gew.-% an Alkoholen auf, die während des Herstellens des Heteropolysiloxans infolge Hydrolyse und/oder Kondensation freigesetzt werden.

Gemäß einem Aspekt 59 der vorliegenden Erfindung besteht in dem Verfahren gemäß einem der Aspekte 47 bis 58 vorzugsweise das Metall des metallischen Substrats weitgehend aus einem Metall, das ausgewählt wird aus der Gruppe, bestehend aus Aluminium, Kupfer, Eisen, Zink, Zinn, Titan, Chrom, Kobalt, Silber, Edelstahl, Nickel, Antimon, Magnesium, Zirkonium, Silizium, Bor und Mischungen davon.

Gemäß einem Aspekt 60 der vorliegenden Erfindung werden in dem Verfahren gemäß einem der Aspekte 47 bis 59 vorzugsweise die Mischungen der Metalle ausgewählt aus der Gruppe, bestehend aus Messing (Goldbronze), Zink-Magnesium-Legierungen und Stahl.

Gemäß einem Aspekt 61 der vorliegenden Erfindung liegt vorzugsweise in dem Verfahren gemäß einem der Aspekte 47 bis 60 die Reaktionstemperatur bei den Schritten (b) bis (e) in einem Bereich von 0°C bis 180°C, bevorzugt von 40°C bis 120°C, mehr bevorzugt in einem Bereich von 60°C bis 100°C.

Gemäß einem Aspekt 62 betrifft die vorliegende Erfindung ein beschichtetes Metallpigment, welches nach einem Verfahren gemäß einem der Ansprüche 47 bis 61 hergestellt ist. Bei dem beschichteten Metallpigment handelt

es sich vorzugsweise um eine Mehrzahl von beschichteten Metallpigmenten. Insbesondere ist es bevorzugt, dass die vorgenannten beschichteten Metallpigmente die Merkmale gemäß einem der Aspekte 1 bis 46 aufweisen.

Gemäß einem Aspekt 63 betrifft die vorliegende Erfindung die Verwendung mindestens eines vorkondensierten Heteropolysiloxans zur Verbesserung der Anwendungseigenschaften, wie beispielsweise der Erhöhung der Stabilität von Metallpigmenten, der Verbesserung der Applizierbarkeit und Ausrichtbarkeit von Metallpigmenten im Nasslack oder Pulverlack, insbesondere im Pulverlack, der Verringerung der Agglomerationsneigung von Metallpigmenten, der Verbesserung der Orientierung von Metallpigmenten in Lacksystemen oder Kombinationen hiervon, wobei die Metallpigmente mindestens eine Beschichtungsschicht aufweisen, die mindestens ein Metalloxid umfasst, wobei der Begriff Metalloxid auch Oxidhydrate und Hydroxide umfasst und das Heteropolysiloxan mindestens eine Aminosilankomponente und mindestens eine Silankomponente, die ausgewählt wird aus der Gruppe, bestehend aus Alkylsilanen, Vinylsilanen und Arylsilanen, umfasst. Vorzugsweise umfasst das Heteropolysiloxan mindestens eine Aminosilankomponente und mindestens eine Alkylsilankomponente. Insbesondere ist es bevorzugt, dass die Aminosilane und Alkylsilane gemäß einem der Aspekte 9 bis 17 ausgewählt werden.

Gemäß einem Aspekt 64 der vorliegenden Erfindung wird vorzugsweise bei der Verwendung gemäß Aspekt 63 das Heteropolysiloxan als äußerste Schicht auf eine umhüllende erste Beschichtungsschicht, umfassend mindestens ein Metalloxid, aufgebracht.

Gemäß einem Aspekt 65 der vorliegenden Erfindung umfasst vorzugsweise das Metallpigment gemäß einem der Aspekte 63 bis 64 mindestens eine anorganisch/organische Mischschicht.

Gemäß einem Aspekt 66 der vorliegenden Erfindung wird vorzugsweise bei der Verwendung gemäß einem der Aspekte 63 bis 65 das Heteropolysiloxan auf eine Beschichtungsschicht aufgetragen, die im Wesentlichen aus Metalloxid besteht.

Gemäß einem Aspekt 67 der vorliegenden Erfindung wird vorzugsweise bei der Verwendung gemäß einem der Aspekte 63 bis 66 das Metalloxid der mindestens einen umhüllenden Beschichtungsschicht, im Wesentlichen, weiter bevorzugt vollständig, ausgewählt aus der Gruppe, bestehend aus Siliziumoxid, Aluminiumoxid, Boroxid, Zirkoniumoxid, Ceroxid, Eisenoxid, Titanoxid, Chromoxid, Zinnoxid, Molybdänoxid, Vanadiumoxid sowie deren Oxidhydraten, deren Hydroxiden und Mischungen davon.

Gemäß einem Aspekt 68 betrifft die vorliegende Erfindung vorzugsweise die Verwendung eines beschichteten Metallpigments gemäß einem der Aspekte 63 bis 67 in einem Kosmetikum, einem Kunststoff oder einem Beschichtungsmittel.

Gemäß einem Aspekt 69 der vorliegenden Erfindung wird vorzugsweise bei der Verwendung gemäß Aspekt 68 das Beschichtungsmittel ausgewählt aus der Gruppe, bestehend aus Nasslacken, Pulverlacken und Farben wie Druckfarben und Tinten.

Gemäß einem Aspekt 70 betrifft die vorliegende Erfindung ein Beschichtungsmittel, welches beschichtete Metallpigmente enthält, die ausgewählt werden aus der Gruppe, bestehend aus beschichteten Metallpigmenten gemäß einem der Ansprüche 1 bis 46 und beschichteten Metallpigmenten, welche nach einem Verfahren gemäß einem der Ansprüche 47 bis 61 hergestellt sind. Vorzugsweise wird das Beschichtungsmittel ausgewählt aus der Gruppe, bestehend aus Wasserlacken, lösemittelhaltigen Lacken und Pulverlacken.

Gemäß einem Aspekt 71 betrifft die vorliegende Erfindung einen Gegenstand der beschichtete Metallpigmente gemäß einem der Aspekte 1 bis 46 oder beschichtete Metallpigmente, welche nach einem Verfahren gemäß einem der Ansprüche 47 bis 61 hergestellt wurden, enthält oder aufweist.

Bei weiteren bevorzugten Ausführungsformen der vorgenannten Aspekte beziehen sich die entsprechenden Angaben der abhängigen Aspekte nicht auf das Metall des metallischen Substrats und das Gewicht des Metalls des metallischen Substrats, sondern auf den Metallkern und das Gewicht des Metallkerns.

## Abbildungen

Abbildung 1 zeigt die Trocknungskurven eines erfindungsgemäß beschichteten Metallpulvers gemäß Beispiel 3-1 (A) und gemäß Vergleichsbeispiel 3-2 (B), wie in Anwendungsbeispiel 1 beschrieben. Hierbei ist die Gewichtsabnahme der Pigmente gegen die Trocknungszeit aufgetragen.

Abbildung 2 zeigt eine Prüfkarte zur Überprüfung der Deckfähigkeit einer PVD-Standardtype mit verschiedenen Beschichtungen nach deren Austrocknung bis zum Pulver. Hierbei ist A Metalure A 31510, B Beispiel 3-1 und C Vergleichsbeispiel 3-2.

## Beispiel 1

300 g Aluminiumeffektpigmentpaste (Silvershine S1500, Fa. Eckart GmbH: durch Vermahlung von Aluminiumgrieß hergestellte Aluminiumpigmente) mit einer Größenverteilung von $D_{10}$ = 9 $\mu$m, $D_{50}$ = 15 $\mu$m, $D_{90}$ = 26 $\mu$m und einem Feststoffanteil von 25 Gew.-%, bezogen auf das Gesamtgewicht der Paste, wurden in 500 g Ethanol für 10

Minuten bei Raumtemperatur dispergiert. Nachfolgend wurden 40 g Tetraethoxysilan zugegeben, die Suspension unter Rühren auf 80 °C erhitzt und 13 g Triethylamin in 120 g Wasser zugegeben. Nach 6 h wurde die in nachstehender Tabelle aufgeführte Komponente, gelöst in 20 g Wasser, zugegeben und der Ansatz weitere 2 h gerührt. Anschließend wurde das Reaktionsgemisch auf Raumtemperatur abgekühlt und die Pigmente mittels Filtration isoliert. Die Beispiele 1-5 bis 1-8 und 1-20 bis 1-22 wurden gemäß der Synthesevorschrift der vorkondensierten Heteropolysiloxane gemäß dem nachstehenden Beispiel M hergestellt. Die monomeren Silane gemäß Vergleichsbeispiel 1-19 wurden analog behandelt, jedoch ohne Zugabe von Wasser. Die monomeren Silane gemäß Beispiel 1-23 wurden analog den vorkondensierten Heteropolysiloxanen direkt zum Metallpigment gegeben und nicht vorkondensiert.

Tabelle 1: Beschichtung Silvershine S1500

| | |
|---|---|
| Beispiel 1-1 | 4 g Hydrosil 2909 (Alkylsilan, Aminosilan; Fa. Evonik Industries AG, Deutschland) |
| Beispiel 1-2 | 2 g Hydrosil 2909 |
| Beispiel 1-3 | 6 g Hydrosil 2909 |
| Vergleichsbeispiel 1-4 | 1,3 g Methyltriethoxysilan (Dynasylan MTES; Fa. Evonik Industries AG, Deutschland)<br>2,7 g 3-Aminopropyltriethoxysilan (Dynasylan AMEO; Fa. Evonik Industries AG, Deutschland) |
| Beispiel 1-5 | 3,2 g Hydrosil 2909 |
| Beispiel 1-6 | 15 mmol Heteropolysiloxan (äquimolare Menge DAMO ((N-(2-Aminoethyl)-3-aminopropyl)(trimethoxy)silan) und Hexadecyltrimethoxysilan)* |
| Beispiel 1-7 | 15 mmol Heteropolysiloxan (Stoffmengenverhältnis DAMO : Hexadecyltrimethoxysilan = 2,5 : 1)* |
| Beispiel 1-8 | 15 mmol Heteropolysiloxan (äquimolare Menge DAMO und Octyltriethoxysilan)* |
| Beispiel 1-9 | 15 mmol Heteropolysiloxan (Stoffmengenverhältnis DAMO : Octyltriethoxysilan = 2,5 : 1)* |
| Beispiel 1-10 | 15 mmol Heteropolysiloxan (äquimolare Menge DAMO und Phenyltrimethoxysilan)* |
| Beispiel 1-11 | 15 mmol Heteropolysiloxan (Stoffmengenverhältnis DAMO : Phenyltrimethoxysilan = 2,5 : 1)* |
| Beispiel 1-12 | 15 mmol Heteropolysiloxan (äquimolare Menge DAMO und Vinyltrimethoxysilan)* |
| Beispiel 1-13 | 15 mmol Heteropolysiloxan (Stoffmengenverhältnis DAMO : Isobutyltrimethoxysilan = 1 : 2,5)* |
| Beispiel 1-14 | 15 mmol Heteropolysiloxan (äquimolare Menge AMEO (((3-Aminopropyl)(triethoxy)silan) und Phenyltrimethoxysilan)* |
| Beispiel 1-15 | 15 mmol Heteropolysiloxan (äquimolare Menge DAMO und Methyltrimethoxysilan)* |
| Beispiel 1-16 | 15 mmol Heteropolysiloxan (äquimolare Menge AMEO und Octyltriethoxysilan)* |
| Beispiel 1-17 | 15 mmol Heteropolysiloxan (Stoffmengenverhältnis DAMO : Octyltriethoxysilan : Methyltrimethoxysilan = 2 : 1 : 1)* |
| Beispiel 1-18 | 15 mmol Heteropolysiloxan (Stoffmengenverhältnis DAMO : Phenyltrimethoxysilane : Methyltrimethoxysilan = 2 : 1 : 1)* |
| Vergleichsbeispiel 1-19 | 15 mmol monomere Silane (äquimolare Menge DAMO und Hexadecyltrimethoxysilan)* |
| Beispiel 1-20 | 15 mmol Heteropolysiloxan (Stoffmengenverhältnis DAMO : Methyltrimethoxysilan = 2,5 : 1)* |
| Beispiel 1-21 | 15 mmol Heteropolysiloxan (äquimolare Menge AMEO und Isobutyltrimethoxysilan)* |
| Beispiel 1-22 | 15 mmol Heteropolysiloxan (äquimolare Menge AMEO und Methyltrimethoxysilan)* |
| Vergleichsbeispiel 1-23 | 15 mmol monomere Silane (äquimolare Menge DAMO und Hexadecyltrimethoxysilan)* |
| * Die mmol Angabe bezieht sich auf die Gesamtmolmenge der enthaltenen Monomere | |

**Beispiel 2**

4000 g Aluminiumeffektpigmentpaste (Metallux 2156, Fa. Eckart GmbH: durch Vermahlung von Aluminiumgrieß hergestellte Aluminiumpigmente) mit einer Größenverteilung von $D_{10}$ = 9 µm, $D_{50}$ = 17 µm, $D_{90}$ = 28 µm und einem Feststoffanteil von 60 Gew.-%, bezogen auf das Gesamtgewicht der Paste, wurden in 7500 g Ethanol für 10 Minuten bei Raumtemperatur dispergiert. Nachfolgend wurden 800 g Tetraethoxysilan zugegeben, die Suspension unter Rühren auf 80 °C erhitzt und 260 g Triethylamin in 500 g Wasser zugegeben. Nach 6 h wurde die in nachstehender Tabelle aufgeführte Komponente, gelöst in 200 g Wasser, zugegeben und der Ansatz weitere 2 h gerührt. Anschließend wurde das Reaktionsgemisch auf Raumtemperatur abgekühlt und die Pigmente mittels Filtration isoliert.

Tabelle 2: Beschichtung Metallux 2156

| | |
|---|---|
| Beispiel 2-1 | 65 g Hydrosil 2909 (Alkylsilan, Aminosilan; Fa. Evonik Industries AG, Deutschland) |
| Vergleichsbeispiel 2-2 | 21,1 g Methyltriethoxysilan (Dynasylan MTES; Fa. Evonik Industries AG, Deutschland)<br>43,9 g 3-Aminopropyltriethoxysilan (Dynasylan AMEO; Fa. Evonik Industries AG, Deutschland) |

**Beispiel 3**

250 g PVD-Aluminiumeffektpigmentpaste (Metalure A 31510, Fa. Eckart GmbH) mit einer Größenverteilung von $D_{50}$ = 10 µm und einem Feststoffanteil von 15 Gew.-%, bezogen auf das Gesamtgewicht der Paste, wurden in 600 g Ethanol für 10 Minuten bei Raumtemperatur dispergiert. Nachfolgend wurden 18 g Tetraethoxysilan zugegeben, die Suspension unter Rühren auf 80 °C erhitzt und 110 g Triethylamin in 500 g Wasser zugegeben. Nach 6 h wurde die in nachstehender Tabelle aufgeführte Komponente, gelöst in 200 g Wasser, zugegeben und der Ansatz weitere 2 h gerührt. Anschließend wurde das Reaktionsgemisch auf Raumtemperatur abgekühlt und die Pigmente mittels Filtration isoliert.

Tabelle 3: Beschichtung Metalure A 31510

| | |
|---|---|
| Beispiel 3-1 | 2 g Hydrosil 2909 (Alkylsilan, Aminosilan; Fa. Evonik Industries AG, Deutschland) |
| Vergleichsbeispiel 3-2 | 1,5 g Octyltriethoxysilan (Dynasylan OCTEO; Fa. Evonik Industries AG, Deutschland)<br>0,5 g 3-Aminopropyltriethoxysilan (Dynasylan AMEO; Fa. Evonik Industries AG, Deutschland) |
| Vergleichsbeispiel 3-3 | 2 g 3-Methacryloxypropyltrimethoxysilan (Dynasylan MEMO; Fa. Evonik Industries AG, Deutschland) |
| Beispiel 3-4 | 2 g Hydrosil 2776 (Alkylsilan, Aminosilan; Fa. Evonik Industries AG, Deutschland) |
| Beispiel 3-5 | 2 g Hydrosil 2627 (Alkylsilan, Aminosilan; Fa. Evonik Industries AG, Deutschland) |

**Beispiel 4**

286 g Ferricon 200-Paste (Eckart GmbH, $D_{50}$ = 18 µm: durch Vermahlung von Carbonyleisengrieß hergestellte Eisenpigmente) mit einem Feststoffgehalt von 70 % wurden in 285 g Ethanol dispergiert und auf 80 °C erhitzt. Nachfolgend wurden 140 g Tetraethoxysilan und eine Mischung bestehend aus 70g Wasser und 100 g Triethylamin zugegeben. Nach 6 h wurden gegebenenfalls weitere Reaktanden zugegeben, siehe Tabelle, und weitere 6 h gerührt. Anschließend wurde das Reaktionsgemisch auf Raumtemperatur abgekühlt und die Pigmente mittels Filtration isoliert.

Tabelle 4: Beschichtung Ferricon 200

| | weitere Reaktanden |
|---|---|
| VB 4-1 | - |
| VB 4-2 | 2 g (Methacryloxypropyl)(trimethoxy)silan (MEMO) |
| VB 4-3 | 4,5 g MEMO |
| Beispiel 4-4 | 7,0 g Hydrosil 2776 (vorkondensiertes Heteropolysiloxan; Fa. Evonik Industries AG, Deutschland) |
| Beispiel 4-5 | 13,0 g Hydrosil 2776 |

(fortgesetzt)

| | weitere Reaktanden |
|---|---|
| VB 4-6 | 2,0 g (N-(2-Aminoethyl)-3-aminopropyl)(trimethoxy)silan (DAMO) |
| VB 4-7 | 4,5 g DAMO |
| Beispiel 4-8 | 3 g Hydrosil 2776 |
| Beispiel 4-9 | 13 g Hydrosil 2909 (Alkylsilan, Aminosilan; Fa. Evonik Industries AG, Deutschland) |
| Beispiel 4-10 | 3 g Hydrosil 2909 |

**Anwendungsbeispiel 1: Trocknung**

Zur Bestimmung der Trocknungskinetik wurden Metallpigmentpasten eingewogen und deren Gewichtsänderung im Verlaufe der Trocknung beobachtet. Die Messung erfolgte mittels eines Denver Instrument IR-35 Moisture Analyzer. Hiermit ergab sich nach 30 min ein extrapoliertes Gewicht des nichtflüchtigen Anteils (NFA) der Metallpigmentpasten. Die entsprechenden Messwerte und die um den NFA bereinigten prozentualen Gewichtsabnahmen sind in Tabelle 1 aufgeführt.

Tabelle 5: Gewichtsabnahme bei Trocknung

| min | Gewicht (A) | Gewicht (B) | Gewichtsabnahme (A) in % | Gewichtsabnahme (B) in % |
|---|---|---|---|---|
| 1 | 99 | 99,1 | 100% | 100% |
| 2 | 97,4 | 98,1 | 98% | 99% |
| 3 | 93,7 | 96,1 | 94% | 96% |
| 4 | 87 | 92,3 | 87% | 91% |
| 5 | 78 | 87,9 | 77% | 86% |
| 6 | 67,5 | 82,2 | 65% | 78% |
| 7 | 51,2 | 75 | 47% | 69% |
| 8 | 40,8 | 69,8 | 35% | 62% |
| 9 | 34,8 | 63,5 | 29% | 54% |
| 10 | 24,8 | 58,3 | 17% | 48% |
| 11 | 16,7 | 53 | 8% | 41% |
| 12 | 11,1 | 47,7 | 2% | 34% |
| 13 | 9,2 | 42 | 0% | 27% |
| 14 | 9,1 | 36,7 | 0% | 20% |
| 15 | 9,1 | 31,7 | 0% | 13% |
| 20 | 9,1 | 22,4 | 0% | 1% |
| 30 | 9,1 | 21,3 | 0% | 0% |
| A: Beispiel 3-1<br>B: Vergleichsbeispiel 3-2 | | | | |

Es zeigt sich somit eine deutlich verbesserte Trocknungskinetik bei den erfindungsgemäßen beschichteten Metallpigmenten.

**Anwendungsbeispiel 2: Agglomerationsverhalten**

Für die Bestimmung des Agglomerationsverhaltens wurde die entsprechende Paste getrocknet. Nachfolgend werden 100 g Aluminiumpulver auf einem Analysensieb mit einer Maschenweite von 71 µm gesiebt. Hierbei wird kein

Durchgang beispielsweise infolge von Bürsten erzwungen. Das auf dem Sieb verbleibende Material wird mit einer Waage mit einer Genauigkeit von 0,1 g bestimmt.

Tabelle 6: Agglomerationsverhalten

| | | Siebrückstand |
|---|---|---|
| Beispiel 3-1 | Hydrosil 2909 | ca. 20 % |
| Vergleichsbeispiel 3-3 | MEMO | ca. 50 % |
| Beispiel 3-4 | Hydrosil 2776 | ca. 1 % |
| Beispiel 3-5 | Hydrosil 2627 | ca. 1 % |

Die Verwendung der erfindungsgemäßen Heteropolysiloxane verringert somit deutlich die Agglomerationsneigung der PVD-Pigmente.

**Anwendungsbeispiel 3: Pulverlackapplikation**

Die erhaltenen Pasten wurden unter Vakuum mit leichtem Inertgasstrom bei 100 °C getrocknet und anschließend mit 71 μm Maschenweite gesiebt. Das jeweilige Metalleffektpigment wurde zusammen mit dem Pulverlack Tiger (Firma Tiger Coatings GmbH & Co. KG), sowie mit 0,2 Gew.-% Aeroxide Alu C (Fa. Evonik) mittels ThermoMix für 4 Minuten auf Stufe 4 eingearbeitet. Die Pigmentierungshöhe betrug 5,0 Gew.-%, bezogen auf das Gesamtgewicht des Pulverlacks. Die Gesamtmenge an Pulverlack im Mischer betrug 300 g plus 0,6 g Aeroxid Alu C.
Der ThermoMix ist ein handelsüblicher Küchenmixer (Fa. Vorwerk). Bei dem Zusatz Aeroxid Alu C handelt es sich um $Al_2O_3$-Partikel, welche in diesem Anwendungsfall die Funktion eines Rieselmittels übernahmen. Die Pulverlacke wurden mit der OptiSelect (Fa. ITWGema) in einer handelsüblichen Pulverkabine auf ein Stahlblech appliziert. Zur Beurteilung der Applikationseigenschaften wurde für 20 Sekunden gemäß den in Tabelle 1 angegebenen Parametern in die Pulverkabine gesprüht, anschließend die Beschichtung durchgeführt und dann die Anhaftungen an den Elektroden und am Prallteller vergleichend beurteilt. Dieses Verfahren lässt einen Schluss auf das Langzeitverhalten der Pigmente während der praxisgerechten Lackierung zu.

Tabelle 7: Verhalten bei Pulverlackapplikation

| | Applikation | Bemerkung |
|---|---|---|
| VB 4-1 | (-) Schlecht, Pigment fiel vom Blech | Abriebbeständigkeit nicht anwendbar, da keine ausreichende Haftung |
| VB 4-2 | + | nicht abriebbeständig |
| VB 4-3 | + | nicht abriebbeständig |
| Beispiel 4-4 | + | abriebbeständig |
| Beispiel 4-5 | + | abriebbeständig |
| VB 4-6 | + | nicht abriebbeständig |
| VB 4-7 | + | nicht abriebbeständig |

Es zeigte sich, dass die Pigmente aus dem Vergleichsbeispiel 4-1, welche nur eine Siliziumoxidschicht aufweisen bei der Pulverlackapplikation nicht auf dem Stahlblech hafteten, und stattdessen vom Blech fielen.

**Anwendungsbeispiel 4: Normaler Gasungstest**

Für einen normalen Gasungstest wurden 15 g Metallpigmentpaste mit einem Feststoffgehalt von 25 Gew.-% wird in 13,0 g Butylglykol mit einer Rührzeit von 5 min suspendiert. Zu dieser Suspension wurden 14,4 g Bindemittel farblos (ZK26-6826-402, Hersteller BASF Coatings) und 0,6 g 10 %ige Dimethylethanolaminlösung (Lösungsmittel Wasser) hinzugegeben und 5 min gerührt.
23,45 g der Suspension wurden in ein Gemisch aus 233,1 g Mischlack für Effektstoffprüfung milchig/farblos (ZW42-6008-0101, Hersteller BASF Coatings), 37,5 g Wasser-Basislack-Tönpaste Rot (ZU560-329-0001, Hersteller BASF Coatings, enthaltend Eisenoxid rot, $Fe_2O_3$) und 6,0 g Wasser-Basislack-Tönpaste Schwarz (ZU42-5943-0001,

Hersteller BASF Coatings, enthaltend Eisenoxid schwarz, $Fe_2O_3$ * FeO) eingerührt. Nachfolgend wurde der pH-Wert der Suspension mit 10 %-iger Dimethylethanolaminlösung (Lösungsmittel Wasser) auf 8,2 eingestellt.

265 g der voranstehenden Zusammensetzung wurden in eine Gasungsflasche eingefüllt und diese mit einem Doppelkammergasblasenzähler verschlossen. Die Gaswaschflasche wurde in einem Wasserbad bei 40 °C für 1 Stunde temperiert, gasdicht verschlossen und der Test über maximal 28 Tage durchgeführt. Das entstandene Gasvolumen wurde anhand des verdrängten Wasservolumens in der oberen Kammer des Gasblasenzählers abgelesen. Bei einer Entwicklung von maximal 10 ml Wasserstoff nach 28 Tagen galt der Test als bestanden.

Tabelle 8: normaler Gasungstest

| | Oberflächenmodifizierung | Gasungstest | | | |
|---|---|---|---|---|---|
| | | 7 Tage | 14 Tage | 21 Tage | 28 Tage |
| Beispiel 1-1 | Hydrosil 2909 | | 3,0 ml | 2,0 ml | 3,0 ml |
| VB 1-4 | Dynasylan MTES, Dynasylan AMEO | | 5,3 ml | 11,6 ml | ausgeg ast |
| Beispiel 1-5 | Hydrosil 2909 | 0 ml | | | 3 ml |
| Beispiel 1-6 | Heteropolysiloxan (äquimolare Menge DAMO und Hexadecyltrimethoxysilan) | 0 ml | | | 2 ml |
| Beispiel 1-7 | Heteropolysiloxan (Stoffmengenverhältnis DAMO : Hexadecyltrimethoxysilan = 2,5 : 1) | 0 ml | | | 1 ml |
| Beispiel 1-8 | Heteropolysiloxan (äquimolare Menge DAMO und Octyltriethoxysilan) | 0 ml | | | 2 ml |
| Beispiel 1-9 | Heteropolysiloxan (Stoffmengenverhältnis DAMO : Octyltriethoxysilan = 2,5 : 1) | 0 ml | | | 3 ml |
| Beispiel 1-10 | Heteropolysiloxan (äquimolare Menge DAMO und Phenyltrimethoxysilan) | 0 ml | | | 2 ml |
| Beispiel 1-11 | Heteropolysiloxan (Stoffmengenverhältnis DAMO : Phenyltrimethoxysilan = 2,5 : 1) | 0 ml | | | 1 ml |
| Beispiel 1-12 | Heteropolysiloxan (äquimolare Menge DAMO und Vinyltrimethoxysilan) | 0 ml | | | 1 ml |
| Beispiel 1-13 | Heteropolysiloxan (Stoffmengenverhältnis DAMO : Isobutyltrimethoxysilan = 2,5 : 1) | 0 ml | | | 2 ml |
| Beispiel 1-14 | Heteropolysiloxan (äquimolare Menge AMEO (((3-Aminopropyl)(triethoxy)silan) und Phenyltrimethoxysilan) | 0 ml | | | 2 ml |
| Beispiel 1-15 | Heteropolysiloxan (äquimolare Menge DAMO und Methyltrimethoxysilan) | 1 ml | | | 4 ml |
| Beispiel 1-16 | Heteropolysiloxan (äquimolare Menge AMEO und Octyltriethoxysilan) | 0 ml | | | 3 ml |
| Beispiel 1-17 | Heteropolysiloxan (Stoffmengenverhältnis DAMO : Octyltriethoxysilan : Methyltrimethoxysilan = 2 : 1 : 1) | 0 ml | | | 2 ml |
| Beispiel 1-18 | Heteropolysiloxan (Stoffmengenverhältnis DAMO : Phenyltrimethoxysilan : Methyltrimethoxysilan = 2 : 1 : 1) | 0 ml | | | 4 ml |
| Beispiel 1-20 | Heteropolysiloxan (Stoffmengenverhältnis DAMO : Methyltrimethoxysilan = 2,5 : 1) | 0 ml | | | 3 ml |
| Beispiel 1-21 | Heteropolysiloxan (äquimolare Menge AMEO und Isobutyltrimethoxysilan) | 0 ml | | | 2 ml |

(fortgesetzt)

| | Oberflächenmodifizierung | Gasungstest | | | |
|---|---|---|---|---|---|
| | | 7 Tage | 14 Tage | 21 Tage | 28 Tage |
| Beispiel 1-22 | Heteropolysiloxan (äquimolare Menge AMEO und Methyltrimethoxysilan) | 0 ml | | | 2 ml |
| VB 1-23 | monomere Silane (äquimolare Menge DAMO und Hexadecyltrimethoxysilan) | 0 ml | | | ausgegast |
| VB: Vergleichsbeispiel | | | | | |

**Anwendungsbeispiel 5: erschwerter Gasungstest**

Für einen erschwerten Gasungstest wurden 15 g Metallpigmentpaste mit einem Feststoffgehalt von 55 Gew.-% wird in 11,0 g Butylglykol mit einer Rührzeit von 5 min suspendiert. Zu dieser Suspension wurden 14,4 g Bindemittel farblos (ZK26-6826-402, Hersteller BASF Coatings) und 0,6 g 10 %-ige Dimethylethanolaminlösung (Lösungsmittel: Wasser) hinzugegeben und 5 min gerührt.

21,96 g der Suspension wurden in ein Gemisch aus 195,0 g Mischlack für Effektstoffprüfung milchig/farblos (ZW42-6008-0101, Hersteller BASF Coatings), 75,6 g Wasser-Basislack-Tönpaste Rot (ZU560-329-0001, Hersteller BASF Coatings, enthaltend Eisenoxid rot, $Fe_2O_3$) und 6,0 g Wasser-Basislack-Tönpaste Schwarz (ZU42-5943-0001, Hersteller BASF Coatings, enthaltend Eisenoxid schwarz, $Fe_2O_3$ * FeO) eingerührt. Nachfolgend wurde der pH-Wert der Suspension mit 10 %-iger Dimethylethanolaminlösung (Lösungsmittel Wasser) auf 9,0 eingestellt.

265 g der voranstehenden Zusammensetzung wurden in eine Gasungsflasche eingefüllt und diese mit einem Doppelkammergasblasenzähler verschlossen. Die Gaswaschflasche wurde in einem Wasserbad bei 40 °C für 1 Stunde temperiert, gasdicht verschlossen und der Test über maximal 30 Tage durchgeführt. Das entstandene Gasvolumen wurde anhand des verdrängten Wasservolumens in der oberen Kammer des Gasblasenzählers abgelesen. Bei einer Entwicklung von maximal 10 ml Wasserstoff nach 30 Tagen galt der Test als bestanden.

Tabelle 9: erschwerter Gasungstest

| | Oberflächenmodifizierung | Gasungstest (30 Tage) |
|---|---|---|
| Beispiel 2-1 | Hydrosil 2909 | 4,0 ml |
| Vergleichsbeispiel 2-2 | Dynasylan MTES, Dynasylan AMEO | ausgegast |

**Anwendungsbeispiel 6: Deckfähigkeit**

Nach 40 Wochen Lagerung wurden die Metallpigmente in einen Nitrocelluloselack eingearbeitet. Nachfolgend wurde der pigmentierte Lack mittels eines Spiralrakels auf eine Prüfkarte aufgebracht.

Ferner wurden die PVD-Pigmente Metalure A 31510, Beispiel 3-1 und VB 3-2 ohne Lagerung getestet, jedoch zuvor bis zur Pulverform getrocknet. Die Prüfkarte ist in Abbildung 2 dargestellt. Es zeigte sich, dass ohne oder mit konventioneller Beschichtung eine starke Agglomeration der Pigmente auftritt, wodurch die Deckfähigkeit nahezu vollständig verloren ging. Die Pigmente mit der erfindungsgemäßen Beschichtung zeigten hingegen keine merkliche Verschlechterung.

Tabelle 10: Deckfähigkeit

| | Oberflächenmodifizierung | Deckung |
|---|---|---|
| Metalure A 31510 | - | Deckungsverlust |
| Beispiel 3-1 | Hydrosil 2909 | + |
| Vergleichsbeispiel 3-2 | Dynasylan OCTEO, Dynasylan AMEO | Deckungsverlust |

**Anwendungsbeispiel 7: Flopindex**

Die Pigmentproben wurden in ein handelsübliches Wasserlacksystem (0,35 Gew.-% Metallanteil) eingearbeitet

und die Prüfapplikationen durch Spritzlackierung auf einem geprimerten Stahlblech hergestellt. Die Schichtdicke betrug hierbei 6 $\mu$m. Der Basislack wurde mit einem handelsüblichen 1K-Klarlack überlackiert und anschließend eingebrannt. Die Messungen wurden mit einem Gerät der Sorte BYK mac (Fa. Byk-Gardner) durchgeführt.

Der Flopindex ist nach Alman in der einschlägigen Literatur folgendermaßen definiert:

$$\text{Flopindex} = 2{,}69 \cdot (L_{E1} - L_{E3})^{1{,}11} / L_{E2}^{0{,}86}$$

wobei $L_{E1}$ für die Helligkeit des glanznahen Messwinkels (E1 = 15° zum Glanzwinkel), $L_{E2}$ für die Helligkeit des Messwinkels zwischen glanznahem und glanzfernen Winkel (E2 = 45° zum Glanzwinkel) und $L_{E3}$ für die Helligkeit des glanzfernen Messwinkels (E3 = 110° zum Glanzwinkel) steht.

Tabelle 11: Flopindex

| | Farbwert | | | | | Flopindex | Glanz 20° | |
|---|---|---|---|---|---|---|---|---|
| | 15° | 25° | 45° | 75° | 110° | | vor SW | nach SW 24 h |
| Beispiel 1-1 | 163,7 | 110,0 | 48,8 | 25,4 | 21,8 | 23,3 | 100,0 | 97,5 |
| VB 1-4 | 155,0 | 116,1 | 57,7 | 29,3 | 24,9 | 18,3 | 92,6 | 88,6 |
| Beispiel 1-5 | 164,6 | 110,0 | 48,6 | 25,2 | 21,6 | 23,5 | 100,0 | 90,1 |
| Beispiel 1-6 | 163,1 | 113,0 | 51,6 | 26,6 | 22,9 | 21,9 | 97,9 | 87,2 |
| Beispiel 1-7 | 163,4 | 110,3 | 49,3 | 25,7 | 22,0 | 23,0 | 100,0 | 88,6 |
| Beispiel 1-11 | 164,0 | 110,4 | 49,1 | 25,6 | 21,9 | 23,2 | 100,0 | 88,6 |
| Beispiel 1-12 | 163,8 | 110,1 | 48,9 | 25,4 | 21,8 | 23,2 | 100,0 | 87,2 |
| Beispiel 1-15 | 164,1 | 110,3 | 49,0 | 25,5 | 21,9 | 23,2 | 100,0 | 88,6 |
| Beispiel 1-18 | 163,4 | 110,6 | 49,7 | 25,9 | 22,1 | 22,8 | 96,9 | 87,2 |
| VB 1-19 | 161,5 | 114,3 | 53,4 | 27,5 | 23,7 | 20,8 | 99,9 | 78,3 |
| VB: Vergleichsbeispiel<br>SW: Schwitzwassertest | | | | | | | | |

Der Schwitzwassertest wurde in Anlehnung an die EN ISO 6270-1 durchgeführt. Die Glanzmessung erfolgte in Anlehnung an die DIN EN ISO 2813.

Je größer der Zahlenwert des Flopindexes ist, desto stärker kommt der gewünschte Hell-/ Dunkelflop zum Ausdruck.

**Anwendungsbeispiel 8: Schwitzwassertest**

Die Pigmentproben wurden in ein handelsübliches Wasserlacksystem (0,35 Gew.-% Metallanteil) eingearbeitet und die Prüfapplikationen durch Spritzlackierung auf einem geprimerten Stahlblech hergestellt. Die Schichtdicke betrug hierbei 6 $\mu$m. Der Basislack wurde mit einem handelsüblichen 1K-Klarlack überlackiert und anschließend eingebrannt. Nachfolgend wurden die Applikationen gemäß DIN 50 017 (Kondenswasser-Konstantklimate) geprüft. Die Haftfestigkeit wurde mittels Gitterschnitt nach DIN EN ISO 2409 sofort nach Testende im Vergleich zur unbelasteten Probe geprüft. Hierbei bedeutet 0 keine Veränderung und 5 eine sehr starke Veränderung. Schließlich wurde der DOI (distinctness of image) visuell beurteilt. Er wird u.a. auch durch das jeweilige Substrat beeinflusst und kann sich im Wesentlichen aufgrund der Quellvorgänge durch Wassereinlagerung verändern.

Tabelle 12: Zwischenhaftung

| Muster | Gitterschnitt 2 mm | | DOI | |
|---|---|---|---|---|
| | vor SW | nach SW 24h | Vor SW | Δ nach SW 24h |
| Beispiel 1-5 | 1* | 1 | 76,5 | -8,9 |
| Beispiel 1-7 | 1-2* | 1-2 | 76,9 | -10,3 |
| Beispiel 1-11 | 1-2* | 1-2 | 76,2 | -9,5 |

(fortgesetzt)

| Muster | Gitterschnitt 2 mm | | DOI | |
|---|---|---|---|---|
| | vor SW | nach SW 24h | Vor SW | Δ nach SW 24h |
| Beispiel 1-12 | 1-2* | 2 | 76,6 | -10,0 |
| Beispiel 1-15 | 1* | 3 | 76,3 | -9,5 |
| Beispiel 1-18 | 1* | 3 | 76,6 | |
| VB 1-23 | 5* | 5 | 78,7 | |
| SW: Schwitzwasser<br>VB: Vergleichsbeispiel<br>* Bruch im Primer, nicht basierend auf Pigment | | | | |

**Beispiele A bis M zur Herstellung von vorkondensierten Heteropolysiloxanen**

Apparatur für Beispiele A bis G: Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter, Labordrucknutsche (2 l Inhalt).

Beispiel A: Herstellung eines wasserlöslichen Cohydrolysates aus Aminopropyltriethoxysilan (AMEO) und Methyltriethoxysilan (MTES) im molaren Verhältnis 1 : 1

In der oben beschriebenen Apparatur wurden 221 g AMEO und 178 g MTES gemischt und 54 g Wasser zugegeben. Nach einer halben Stunde gab man unter Rühren weitere 126 g Wasser innerhalb von 15 Minuten über die Dosiervorrichtung hinzu. Die Temperatur stieg hierbei von 20 °C auf ca. 50 °C. Innerhalb weiterer 15 Minuten wurde über die Dosiervorrichtung 114 g HCl (32 Gew.-% in Wasser) unter Rühren zudosiert. Innerhalb von ca. 4 h wurde bei einer Sumpftemperatur von ca. 60 °C bei einem Druck von ca. 135 mbar ein Ethanol/WasserGemisch abdestilliert, bis die Kopftemperatur ca. 50 °C betrug und das Kopfprodukt nur noch Wasser enthielt. Während der Destillation wurde Wasser über die Dosiereinrichtung mengenmässig in dem Maße dem Produkt zugeführt, wie mengenmäßig Destillat entfernt wurde.

Beispiel B:

Wie Beispiel A, mit dem Unterschied, dass zur pH-Einstellung 60 g Essigsäure anstelle der wässrigen HCl verwendet wurde.

Beispiel C: Herstellung eines wasserlöslichen Cohydrolysats aus AMEO und Propyltrimethoxysilan (PTMO) im molaren Verhältnis 1 : 1

In der oben beschriebenen Apparatur wurden 221 g AMEO und 164 g PTMO gemischt und 54 g Wasser zugegeben. Nach einer halben Stunde gab man unter Rühren weitere 126 g Wasser innerhalb von 15 Minuten über die Dosiervorrichtung hinzu. Die Temperatur stieg hierbei von 20 °C auf ca. 57 °C. Innerhalb weiterer 15 Minuten wurden über die Dosiervorrichtung 114 g HCl (32 Gew.-% in Wasser) unter Rühren zudosiert. Innerhalb von ca. 4 h wurde bei einer Sumpftemperatur von bis zu 102 °C bei Normaldruck ein Ethanol/Methanol/Wasser-Gemisch abdestilliert, bis die Kopftemperatur ca. 100 °C betrug und das Kopfprodukt nur noch Wasser enthielt. Während der Destillation wurde Wasser über die Dosiereinrichtung mengenmäßig in dem Maße dem Produkt zugeführt, wie mengenmäßig Destillat entfernt wurde.

Beispiel D: Herstellung eines wasserlöslichen Cohydrolysates aus AMEO und Vinyltrimethoxysilan (VTMO) im molaren Verhältnis 1 : 1

In der oben beschriebenen Apparatur wurden 221 g AMEO und 164 g VTMO gemischt und 54 g Wasser zugegeben. Nach einer halben Stunde gab man unter Rühren weitere 126 g Wasser innerhalb von 15 Minuten über die Dosiervorrichtung hinzu. Die Temperatur stieg hierbei von 20 °C auf ca. 57 °C. Innerhalb weiterer 15 Minuten wurden über die Dosiervorrichtung 114 g HCl (32 Gew.-% in Wasser) unter Rühren zudosiert. Innerhalb von ca. 4 h wurde bei einer Sumpftemperatur von bis zu 102 °C bei Normaldruck ein Ethanol/Methanol/Wasser-Gemisch abdestilliert, bis die

Kopftemperatur ca. 100 °C betrug und das Kopfprodukt nur noch Wasser enthielt. Während der Destillation wurde Wasser über die Dosiereinrichtung mengenmäßig in dem Maße dem Produkt zugeführt, wie mengenmäßig Destillat entfernt wurde.

Beispiel E: Herstellung eines wasserlöslichen Cohydrolysates aus AMEO und Isobutyltrimethoxysilan (IBTMO) im molaren Verhältnis 1 : 1

In der oben beschriebenen Apparatur wurden 221 g AMEO und 178 g IBTMO gemischt und 54 g Wasser zugegeben. Nach einer halben Stunde gab man unter Rühren weitere 64 g Wasser innerhalb von 15 Minuten über die Dosiervorrichtung hinzu. Die Temperatur stieg hierbei von 20 °C auf ca. 60 °C. Innerhalb weiterer 15 Minuten wurden über die Dosiervorrichtung 110 g HCl (33 Gew.-% in Wasser) unter Rühren zudosiert. Innerhalb von ca. 4 h wurde bei einer Sumpftemperatur von bis zu 52 °C bei einem Druck von 130 mbar ein Ethanol/Methanol/Wasser-Gemisch abdestilliert, bis die Kopftemperatur ca. 50 °C betrug und das Kopfprodukt nur noch Wasser enthielt. Während der Destillation wurde Wasser über die Dosiereinrichtung mengenmäßig in dem Maße dem Produkt zugeführt, wie mengenmäßig Destillat entfernt wird.

Beispiel F: Herstellung eines wasserlöslichen Cohydrolysates aus 3-Aminopropylmethyldimethoxysilan (Methyl-AMEO) und MTES im molaren Verhältnis 1 : 1

In der oben beschriebenen Apparatur wurden 191 g Methyl-AMEO und 178 g MTES gemischt und 54 g Wasser zugegeben. Nach einer halben Stunde fügte man unter Rühren eine Mischung von 64 g Wasser und 110 g HCl (33 Gew.-% in Wasser) innerhalb von 30 Minuten über die Dosiervorrichtung hinzu. Die Temperatur stieg hierbei von 20 °C auf bis zu ca. 65 °C. Innerhalb von ca. 4 h wurde bei einer Sumpftemperatur von bis zu 52 °C bei einem Druck von 130 mbar ein Ethanol/Wasser-Gemisch abdestilliert, bis die Kopftemperatur ca. 50 °C betrug und das Kopfprodukt nur noch Wasser enthielt. Während der Destillation wurde Wasser über die Dosiereinrichtung mengenmäßig in dem Maße dem Produkt zugeführt, wie mengenmäßig Destillat entfernt wurde.

Beispiel G: Herstellung eines wasserlöslichen Hydrolysates aus N-Benzylaminoethylaminopropyltrimethoxysilan (DYNASYLAN 1160)

In der oben beschriebenen Apparatur wurden 400 g DYNASYLAN 1160 (50 Gew.-% Silanlösung in Methanol, Hersteller Hüls AG) vorgelegt und 25 g Wasser zugegeben. Da es sich bei dem eingesetzten Silan um eine 50 gew.-%ige Silanlösung in Methanol handelt, wurden zunächst 100 g Methanol destillativ entfernt (Sumpftemperatur 60 °C, Druck von 300 mbar, auf < 1 mbar fallend). Anschließend wurden bei 40 bis 45 °C 49,5 g Essigsäure in das methanolfreie, viskose Silan dosiert. Innerhalb von 15 Minuten wurden über die Dosiervorlage bei einer Sumpftemperatur von 50 °C 375 g Wasser zugefügt. Innerhalb von 3 h wurde bei einer maximalen Sumpftemperatur von 55 °C und einem von 300 auf 130 mbar fallenden Druck 250 g Methanol/Wasser-Gemisch abdestilliert. Während der Destillation wird Wasser über die Dosiereinrichtung mengenmäßig in dem Maße dem Produkt zugeführt, wie mengenmäßig Destillat entfernt wurde.

Beispiel H: Herstellung eines wasserlöslichen Hydrolysates aus Ureidopropyltrimethoxysilan (DYNASYLAN 2201) und Aminopropyltriethoxysilan (AMEO)

In der oben beschriebenen Apparatur wurden 400 g DYNASYLAN 2201 (50 Gew.-%ige Lösung von Ureidopropyltriethoxysilan in Methanol, Hersteller Hüls AG) und 200 g AMEO vorgelegt und 50 g Wasser zugegeben. Bei einer Sumpftemperatur von 60 °C wurden bei vermindertem Druck - 300 mbar auf < 1 mbar fallend - 200 g Methanol/Ethanol-Gemisch abdestilliert. Über die Dosiervorlage wurden innerhalb von 10 Minuten bei einer auf 80 °C steigenden Sumpftemperatur 550 g Wasser zugeführt. Bei Umgebungsdruck wurde solange ein Methanol/Ethanol/Wasser-Gemisch abdestilliert, bis die Kopftemperatur konstant 100 °C betrug. Während der Destillation wurde Wasser über die Dosiereinrichtung mengenmäßig in dem Maße dem Produkt zugeführt, wie mengenmäßig Destillat entfernt wurde.

Beispiele I bis L zur Herstellung von vorkondensierten Heteropolysiloxanen Apparatur für Beispiele I bis L: Veresterungsapparatur: 0,5 l Laborrührreaktor, temperierbar (Innentemperaturmessung), Flüssigdosiereinrichtung, Rückflusskühler (Intensivkühler mit nachgeschaltetem Tiefkühler bis -40 °C), Stickstoffüberlagerung, Labordrucknutsche, Hydrolyseapparatur: Laborrührkesselreaktor mit 2 l Inhalt, temperierbar, Innentemperaturmessung, Flüssigkeitsdosiereinrichtung, Destillationsbrücke mit Kopftemperaturmessung, Produktkühler, Destillatvorlagebehälter; Labordrucknutsche (2 l Inhalt).

Beispiel I: Herstellung eines wasserlöslichen Cohydrolysates aus Aminopropyltriethoxysilan (AMEO), Propyltrichlorsilan (PTCS) und Dimethyldichlorsilan (DMDCS):

In der oben beschriebenen Veresterungsapparatur wurden 38,7 g DMDCS und 53,3 g PTCS vorgelegt. Unter Rühren dosiert man innerhalb von 2 h 50,4 g Methanol zu. Die Sumpftemperatur beträgt hierbei ca. 60 °C. Im Anschluss wurde unter Rückfluss 2 h HCl ausgetrieben. Zur Vervollständigung der Veresterungsreaktion wurde das noch chlorsilanhaltige Rohprodukt mit einer 30 Gew.-% Natriummethylatlösung versetzt (ca. 39 g), bis das Esterrohprodukt einen pH-Wert von 7 bis 8 aufwies. Nach Filtration wurde in die Hydrolyseapparatur überführt und nacheinander innerhalb von ca. 20 Minuten mit 132,6 g AMEO, 64,8 g Wasser und 29,5 g Ameisensäure versetzt. Die Reaktion ist exotherm, die Temperatur stieg auf ca. 60 °C, und die Lösung wies einen pH-Wert von ca. 4 bis 5 auf. Anschließend wurden innerhalb von ca. 4 h bei einer Sumpftemperatur von 55 °C bei einem von 292 mbar auf 130 mbar fallenden Druck die entstehenden Hydrolysealkohole abdestilliert, wobei während der Destillation Wasser in dem Maße (bezogen auf Gewicht) zudosiert wurde, wie Destillat entfernt wurde (ca. 350 g). Danach verdünnte man das Produkt mit 713 g Wasser auf die anwendungsfertige Endkonzentration.

Beispiel K: Herstellung eines wasserlöslichen Cohydrolysates aus Aminopropyltriethoxysilan (AMEO), Propyltrichlorsilan (PTCS), Isobutyltrichlorsilan (IBTCS), Octyltrichlorsilan (OCTCS) und Dimethyldichlorsilan (DMDCS)

In der oben beschriebenen Veresterungsapparatur wurden 38,7 g DMDCS, 53,3 g PTCS, 57,5 g IBTCS und 14,9 g OCTCS vorgelegt. Unter Rühren dosiert man innerhalb von 2 h 86,7 g Methanol zu. Die Sumpftemperatur betrug hierbei ca. 60 °C. Im Anschluss wurde unter Rückfluss 2 h HCl ausgetrieben. Zur Vervollständigung der Veresterungsreaktion wurde das noch chlorsilanhaltige Rohprodukt mit einer 30 Gew.-% Natriummethylatlösung versetzt (ca. 60 g), bis das Esterrohprodukt einen pH-Wert von 7 bis 8 aufwies. Nach Filtration wurde in die Hydrolyseapparatur überführt und nacheinander innerhalb von ca. 20 Minuten mit 132,6 g AMEO, 84,2 g Wasser und 29,0 g Ameisensäure versetzt. Die Reaktion ist exotherm, die Temperatur stieg auf ca. 60 °C, und die Lösung wies einen pH-Wert von ca. 4 bis 5 auf. Anschließend wurden innerhalb von ca. 4 h bei einer Sumpftemperatur von 55 °C bei einem von 292 mbar auf 130 mbar fallenden Druck die entstehenden Hydrolysealkohole abdestilliert, wobei während der Destillation Wasser in dem Maße zudosiert wurde, wie Destillat entfernt wurde (ca. 350 g). Danach verdünnte man das Produkt mit 1 032 g Wasser auf die anwendungsfertige Endkonzentration.

Beispiel L: Herstellung eines wasserlöslichen Cohydrolysates aus Aminopropyltrichlorsilan (AMEO), Propyltrichlorsilan (PTCS), Propylmethyldichlorsilan (PMDCS) und Dimethyldichlorsilan (DMDCS).

In der oben beschriebenen Veresterungsapparatur wurden 38,7 g DMDCS, 106,5 g PTCS und 47,1 g PMDCS vorgelegt. Unter Rühren dosierte man innerhalb von 2 h 101 g Methanol zu. Die Sumpftemperatur betrug hierbei ca. 60 °C. Im Anschluss wurde unter Rückfluss 2 h HCl ausgetrieben. Zur Vervollständigung der Veresterungsreaktion wurde das noch chlorsilanhaltige Rohprodukt mit einer 30 Gew.-% Natriummethylatlösung versetzt (ca. 35 g), bis das Esterrohprodukt einen pH-Wert von 7 bis 8 aufwies. Nach Filtration wurde in die Hydrolyseapparatur überführt und nacheinander innerhalb von ca. 20 Minuten mit 265,2 g AMEO, 130 g Wasser und 55 g Ameisensäure versetzt. Die Reaktion ist exotherm, die Temperatur stieg auf ca. 60 °C, und die Lösung wies einen pH-Wert von ca. 4 bis 5 auf. Anschließend wurden innerhalb von ca. 4 h bei einer Sumpftemperatur von 55 °C und bei einem von 292 mbar auf 130 mbar fallenden Druck die entstehenden Hydrolysealkohole abdestilliert, wobei während der Destillation Wasser in dem Maße zudosiert wurde, wie Destillat entfernt wurde (ca. 330 g). Danach verdünnte man das Produkt mit 1 750 g Wasser auf die anwendungsfertige Endkonzentration.

Beispiel M: Herstellung eines wasserlöslichen Cohydrolysates aus verschiedenen Silanen

In der oben beschriebenen Apparatur jedoch ohne Destillationsbrücke wurden die in nachstehender Tabelle aufgeführten Silane gemischt und 54 g Wasser zugegeben. Nach einer halben Stunde gab man unter Rühren weitere 126 g Wasser innerhalb von 15 Minuten über die Dosiervorrichtung hinzu. Die Temperatur stieg hierbei von 20 °C auf ca. 50 °C. Innerhalb weiterer 15 Minuten wurde über die Dosiervorrichtung 114 g HCl (32 Gew.-% in Wasser) unter Rühren zudosiert. Nach 4 h war die Reaktion abgeschlossen und das erhaltene Produkt wurde weiter eingesetzt.

| Versuch | Aminosilan | Sonstige Silane |
|---|---|---|
| M-1 | 1 mol DAMO ((N-(2-Aminoethyl)-3-aminopropyl)(trimethoxy)silan) | 1 mol Hexadecyltrimethoxysilan |
| M-2 | 1 mol DAMO | 0,4 mol Hexadecyltrimethoxysilan |

(fortgesetzt)

| Versuch | Aminosilan | Sonstige Silane |
|---|---|---|
| M-3 | 1 mol DAMO | 1 mol Octyltriethoxysilan |
| M-4 | 1 mol DAMO | 0,4 mol Octyltriethoxysilan |
| M-5 | 1 mol DAMO | 1 mol Phenyltrimethoxysilan |
| M-6 | 1 mol DAMO | 0,4 mol Phenyltrimethoxysilan |
| M-7 | 1 mol DAMO | 1 mol Vinyltrimethoxysilan |
| M-8 | 0,4 mol DAMO | 1 mol Isobutyltrimethoxysilan |
| M-9 | 1 mol AMEO (((3-Aminopropyl)(triethoxy)silan) | 1 mol Phenyltrimethoxysilane |
| M-10 | 1 mol DAMO | 1 mol Methyltrimethoxysilan |
| M-11 | 1 mol AMEO | 1 mol Octyltriethoxysilan |
| M-12 | 1 mol DAMO | 0,5 mol Octyltriethoxysilan<br>0,5 mol Methyltrimethoxysilan |
| M-13 | 1 mol DAMO | 0,5 mol Phenyltrimethoxysilane<br>0,5 mol Methyltrimethoxysilan |
| M-14 | 1 mol DAMO | 0,4 mol Methyltrimethoxysilan |
| M-15 | 1 mol AMEO | 1 mol Isobutyltrimethoxysilan |
| M-16 | 1 mol AMEO | 1 mol Methyltrimethoxysilan |

**Patentansprüche**

1. Metallpigment mit metallischem Substrat und Beschichtung, wobei die Beschichtung mindestens eine erste das Metallpigment umhüllende Beschichtungsschicht, die mindestens ein Metalloxid aufweist, und

   mindestens eine zweite Beschichtungsschicht, die mindestens ein Heteropolysiloxan aufweist, umfasst, wobei der Begriff Metalloxid auch Oxidhydrate und Hydroxide umfasst, wobei das mindestens eine Heteropolysiloxan mindestens eine Aminosilankomponente und mindestens ein Silankomponente, die ausgewählt wird aus der Gruppe, bestehend aus Alkylsilanen, Vinylsilanen und Arylsilanen, aufweist,
   wobei das Heteropolysiloxan in vorkondensierter Form auf die mindestens eine erste umhüllende Beschichtungsschicht aufgebracht ist und wobei das Heteropolysiloxan die äußerste Beschichtungsschicht des Metallpigments ist, wobei das metallische Substrat ein Metallkern ist, wobei der Anteil der Beschichtung in einem Bereich von 2 bis 30 Gew.-%, jeweils bezogen auf das Gewicht des beschichteten Metallpigments, liegt.

2. Metallpigment gemäß Anspruch 1, wobei das Heteropolysiloxan vor der Aufbringung auf das Metallpigment höchstens 25 % unkondensierte Gruppen aufweist.

3. Metallpigment gemäß einem der Ansprüche 1 bis 2, wobei das Heteropolysiloxan mindestens eine Aminosilankomponente und mindestens eine Alkylsilankomponente umfasst.

4. Metallpigment gemäß einem der Ansprüche 1 bis 3, wobei das Metallpigment keine Beschichtungsschicht, die thermoresponsives Polymer enthält oder daraus besteht, aufweist.

5. Metallpigment gemäß einem der Ansprüche 1 bis 4, wobei das Metallpigment ein plättchenförmiges Metallpigment ist.

6. Metallpigment gemäß einem der Ansprüche 1 bis 5, wobei der Metallkern des Metallpigments ein durch Vermahlung erhaltenes plättchenförmiges Metallpigment mit einem $h_{50}$-Wert im Bereich von 20 bis 100 nm, einem Formfaktor von mindestens 200 und einer relativen Dickenverteilung $\Delta H$ gemäß Formel (VII):

$$\Delta H = (h_{90}-h_{10})/h_{50} \qquad (VII)$$

im Bereich von 30 bis 140 % ist oder
ein PVD-Metallpigment ist.

**7.** Metallpigment gemäß einem der Ansprüche 1 bis 6, wobei das Metall des metallischen Substrats zu mindestens 60 Gew.-% aus einem ferromagnetischen Metall besteht, bezogen auf das Gesamtgewicht an elementarem Metall des metallischen Substrats.

**8.** Metallpigment gemäß einem der Ansprüche 1 bis 7, wobei das Metalloxid der mindestens einen ersten Beschichtungsschicht, die mindestens ein Metalloxid aufweist, im Wesentlichen ausgewählt wird aus der Gruppe, bestehend aus Siliziumoxid, Aluminiumoxid, Boroxid, Zirkoniumoxid, Ceroxid, Eisenoxid, Titanoxid, Chromoxid, Zinnoxid, Zinkoxid, Molybdänoxid, Vanadiumoxid und Mischungen davon, wobei die vorgenannten Metalloxide auch deren Oxidhydrate und Hydroxide umfassen.

**9.** Metallpigment gemäß einem der Ansprüche 1 bis 8, wobei das Metalloxid der mindestens einen ersten Beschichtungsschicht, die mindestens ein Metalloxid aufweist, im Wesentlichen ausgewählt wird aus der Gruppe, bestehend aus Siliziumoxid, Siliziumhydroxid, Siliziumoxidhydrat und Mischungen davon.

**10.** Metallpigment gemäß einem der Ansprüche 1 bis 9, wobei das mindestens eine vorkondensierte Heteropolysiloxan auf mindestens eine erste Beschichtungsschicht, die im Wesentlichen aus mindestens einem Metalloxid besteht, aufgebracht ist.

**11.** Metallpigment gemäß einem der Ansprüche 1 bis 10, wobei das Metall des metallischen Substrats im Wesentlichen aus einem Metall besteht, das ausgewählt wird aus der Gruppe, bestehend aus Aluminium, Kupfer, Eisen, Zink, Zinn, Titan, Chrom, Kobalt, Silber, Edelstahl, Nickel, Antimon, Magnesium, Zirkonium, Silizium und Bor und Mischungen sowie Legierungen davon.

**12.** Verfahren zur Herstellung von Metallpigmenten mit metallischem Substrat und Beschichtung gemäß einem der vorherigen Ansprüche, umfassend folgende Schritte:

- Bereitstellen eines, optional vorbeschichteten, Metallpigments,
- Erzeugen mindestens einer das Metallpigment umhüllenden ersten Beschichtungsschicht, wobei die mindestens eine erste Beschichtungsschicht mindestens ein Metalloxid auf dem, optional vorbeschichteten, Metallpigment umfasst, und
- Aufbringen mindestens einer zweiten Beschichtungsschicht, umfassend mindestens ein vorkondensiertes Heteropolysiloxan auf der mindestens einen ersten Beschichtungsschicht, die mindestens ein Metalloxid aufweist, wobei der Begriff Metalloxid auch Oxidhydrate und Hydroxide umfasst.

**13.** Verfahren gemäß Anspruch 12, wobei ein plättchenförmiges Metallpigment bereitgestellt wird.

**14.** Verwendung mindestens eines vorkondensierten Heteropolysiloxans zur Verbesserung von Anwendungseigenschaften von Metallpigmenten gemäß einem der Ansprüche 1 bis 11, die aus der Gruppe, die aus der Verbesserung der Stabilität von Metallpigmenten, der Verbesserung der Applizierbarkeit und Ausrichtbarkeit von Metallpigmenten im Nasslack oder Pulverlack, der Verringerung der Agglomerationsneigung von Metallpigmenten, der Verbesserung der Orientierung von Metallpigmenten in Lacksystemen und Kombinationen davon besteht, ausgewählt wird.

**15.** Beschichtungsmittel enthaltend ein Metallpigment gemäß einem der Ansprüche 1 bis 11.

## Claims

**1.** Metal pigment comprising a metallic substrate and coating, which coating comprises at least one first coating layer comprising at least one metal oxide surrounding the metal pigment, and

at least one second coating layer comprising at least one heteropolysiloxane, the term metal oxide also including oxide hydrates and hydroxides,

wherein the at least one heteropolysiloxane comprises at least one aminosilane component and at least one silane component selected from the group consisting of alkylsilanes, vinylsilanes and arylsilanes,
wherein the heteropolysiloxane is applied to the at least one first surrounding coating layer in pre-condensed form and wherein the heteropolysiloxane is the outermost coating layer of the metal pigment wherein the metallic substrate is a metal core, wherein the proportion of the coating lies within a range of 2 to 30 % by weight, in each case based on the weight of the coated metal pigment.

**2.** Metal pigment as claimed in claim 1, wherein the heteropolysiloxane comprises at most 25 % of uncondensed groups before being applied to the metal pigment.

**3.** Metal pigment as claimed in one of claims 1 to 2, wherein the heteropolysiloxane comprises at least one aminosilane component and at least one alkylsilane component.

**4.** Metal pigment as claimed in one of claims 1 to 3, wherein the metal pigment does not have a coating layer containing or consisting of a thermoresponsive polymer.

**5.** Metal pigment as claimed in one of claims 1 to 4, wherein the metal pigment is a platelet-shaped metal pigment.

**6.** Metal pigment as claimed in one of claims 1 to 5, wherein the metal core of the metal pigment is a platelet-shaped metal pigment obtained by grinding having an $h_{50}$ value in the range of 20 to 100 nm, a form factor of at least 200 and a relative thickness distribution $\Delta h$ based on formula (VII):

$$\Delta H = (h_{90}-h_{10})/h_{50} \qquad (VII)$$

in the range of 30 to 140 % or is a PVD metal pigment.

**7.** Metal pigment as claimed in one of claims 1 to 6, wherein the metal of the metallic substrate comprises at least 60 % by weight of a ferromagnetic metal relative to the total weight of elemental metal in the metallic substrate.

**8.** Metal pigment as claimed in one of claims 1 to 7, wherein the metal oxide of the at least one first coating layer comprising at least one metal oxide is essentially selected from the group consisting of silicon oxide, aluminium oxide, boron oxide, zirconium oxide, cerium oxide, iron oxide, titanium oxide, chromium oxide, tin oxide, zinc oxide, molybdenum oxide, vanadium oxide and mixtures thereof, the aforementioned metal oxides also including oxide hydrates and hydroxides thereof.

**9.** Metal pigment as claimed in one of claims 1 to 8, wherein the metal oxide of the at least one first coating layer comprising at least one metal oxide is essentially selected from the group consisting of silicon oxide, silicon hydroxide, silicon oxide hydrate and mixtures thereof.

**10.** Metal pigment as claimed in one of claims 1 to 9, wherein the at least one pre-condensed heteropolysiloxane is applied to at least one first coating layer essentially comprising at least one metal oxide.

**11.** Metal pigment as claimed in one of claims 1 to 10, wherein the metal of the metallic substrate essentially comprises a metal selected from the group consisting of aluminium, copper, iron, zinc, tin, titanium, chromium, cobalt, silver, stainless steel, nickel, antimony, magnesium, zirconium, silicon and boron and mixtures and alloys thereof.

**12.** Method of producing metal pigments having a metallic substrate and coating as claimed in one of the preceding claims, comprising the following steps:

- providing an optionally pre-coated metal pigment,
- producing at least one first coating layer surrounding the metal pigment, wherein the at least one first coating layer comprises at least one metal oxide on the optionally pre-coated metal pigment, and
- applying at least one second coating layer comprising at least one pre-condensed heteropolysiloxane to the at least one first coating layer comprising at least one metal oxide, the term metal oxide also including oxide hydrates and hydroxides.

**13.** Method as claimed in claim 12, wherein a platelet-shaped metal pigment is prepared.

**14.** Use of at least one pre-condensed heteropolysiloxane for improving application properties of metal pigments as claimed in one of claims 1 to 11, selected from the group consisting of improving the stability of metal pigments, improving the applicability and orientability of metal pigments in wet coatings or powder coatings, reducing the tendency of metal pigments to agglomerate, improving the orientation of metal pigments in coating systems and combinations thereof.

**15.** Coating agent containing a metal pigment as claimed in one of claims 1 to 11.

## Revendications

**1.** Pigment métallique comprenant un substrat métallique et un revêtement, dans lequel le revêtement comprend

au moins une première couche de revêtement, enrobant le pigment métallique, et qui présente au moins un oxyde métallique, et
au moins une deuxième couche de revêtement, qui présente au moins un hétéropolysiloxane, l'expression oxyde métallique englobant aussi les oxydes hydratés et les hydroxydes,
dans lequel l'au moins un hétéropolysiloxane comprend au moins un composant aminosilane et au moins un composant silane, qui est choisi dans le groupe consistant en les alkylsilanes, les vinylsilanes et les arylsilanes, et dans lequel l'hétéropolysiloxane est appliqué sous forme précondensée sur l'au moins une première couche de revêtement d'enrobage, et dans lequel l'hétéropolysiloxane est la couche de revêtement la plus extérieure du pigment métallique,
dans lequel le substrat métallique est un coeur métallique,
dans lequel la proportion du revêtement d'enrobage est compris dans une plage de 2 à 30 % en poids par rapport au poids du pigment métallique enrobé.

**2.** Pigment métallique selon la revendication 1, dans lequel l'hétéropolysiloxane présente avant application sur le pigment métallique une quantité d'au plus 25 % de groupes non condensés.

**3.** Pigment métallique selon l'une des revendications 1 à 2, dans lequel l'hétéropolysiloxane comprend au moins un composant aminosilane et au moins un composant alkylsilane.

**4.** Pigment métallique selon l'une des revendications 1 à 3, le pigment métallique ne comprenant pas de couche de revêtement contenant un polymère thermosensible ou en étant constituée.

**5.** Pigment métallique selon l'une des revendications 1 à 4, le pigment métallique étant un pigment métallique lamellaire.

**6.** Pigment métallique selon l'une des revendications 1 à 5, dans lequel le noyau métallique du pigment métallique est un pigment métallique lamellaire obtenu par broyage, ayant une valeur $h_{50}$ comprise dans la plage de 20 à 100 nm, un facteur de forme d'au moins 200 et une distribution relative des épaisseurs ΔH selon la formule (VII) :

$$\Delta H = (h_{90}-h_{10})/h_{50} \qquad \text{(VII)}$$

comprise dans la plage de 30 à 140 %, ou
est un pigment métallique pour PVD.

**7.** Pigment métallique selon l'une des revendications 1 à 6, dans lequel le métal du substrat métallique est pour au moins 60 % en poids constitué d'un métal ferromagnétique, par rapport au poids total du métal élémentaire du substrat métallique.

**8.** Pigment métallique selon l'une des revendications 1 à 7, dans lequel l'oxyde métallique de l'au moins une première couche de revêtement qui présente un oxyde métallique est pour l'essentiel choisi dans le groupe consistant en l'oxyde de silicium, l'oxyde d'aluminium, l'oxyde de bore, l'oxyde de zirconium, l'oxyde de cérium, l'oxyde de fer, l'oxyde de titane, l'oxyde de chrome, l'oxyde d'étain, l'oxyde de zinc, l'oxyde de molybdène, l'oxyde de vanadium et les mélanges de ceux-ci, les oxydes métalliques mentionnés ci-dessus englobant aussi leurs oxydes hydratés et hydroxydes.

**9.** Pigment métallique selon l'une des revendications 1 à 8, dans lequel l'oxyde métallique de l'au moins une première couche de revêtement qui présente au moins un oxyde métallique est pour l'essentiel choisi dans le groupe consistant en l'oxyde de silicium, l'hydroxyde de silicium, l'oxyde de silicium hydraté et les mélanges de ceux-ci.

**10.** Pigment métallique selon l'une des revendications 1 à 9, dans lequel l'au moins un hétéropolysiloxane précondensé est appliqué sur au moins une première couche de revêtement, qui pour l'essentiel est constituée d'au moins un oxyde métallique

**11.** Pigment métallique selon l'une des revendications 1 à 10, dans lequel le métal du substrat métallique est pour l'essentiel constitué d'un métal qui est choisi dans le groupe consistant en l'aluminium, le cuivre, le fer, le zinc, l'étain, le titane, le chrome, le cobalt, l'argent, l'acier inoxydable, le nickel, l'antimoine, le magnésium, le zirconium, le silicium et le bore, et les mélanges, ainsi que les alliages de ceux-ci.

**12.** Procédé de fabrication de pigments métalliques comprenant un substrat métallique et un revêtement selon l'une quelconque des revendications précédentes, comprenant les étapes suivantes :

- fourniture d'un pigment métallique, en option prérevêtu,
- production d'au moins une première couche de revêtement enrobant le pigment métallique, l'au moins une première couche de revêtement comprenant au moins un oxyde métallique sur le pigment métallique en option prérevêtu, et
- application d'au moins une deuxième couche de revêtement, comprenant au moins un hétéropolysiloxane précondensé, sur l'au moins une première couche de revêtement qui présente au moins une couche métallique, l'expression "oxyde métallique" englobant aussi les oxydes hydratés et les hydroxydes.

**13.** Procédé selon la revendication 12, dans lequel c'est un pigment métallique lamellaire qui est fourni.

**14.** Utilisation d'au moins un hétéropolysiloxane précondensé pour améliorer les propriétés à l'utilisation de pigments métalliques selon l'une quelconque des revendications 1 à 11, qui sont choisies dans le groupe consistant en l'amélioration de la stabilité des pigments métalliques, l'amélioration de l'applicabilité et de l'orientabilité des pigments métalliques dans une peinture liquide ou une peinture en poudre, la diminution de la tendance à l'agglomération des pigments métalliques, l'amélioration de l'orientation des pigments métalliques dans les systèmes de peintures et les combinaisons de celles-ci.

**15.** Composition de revêtement contenant un pigment métallique selon l'une des revendications 1 à 11.

Abbildung 1:

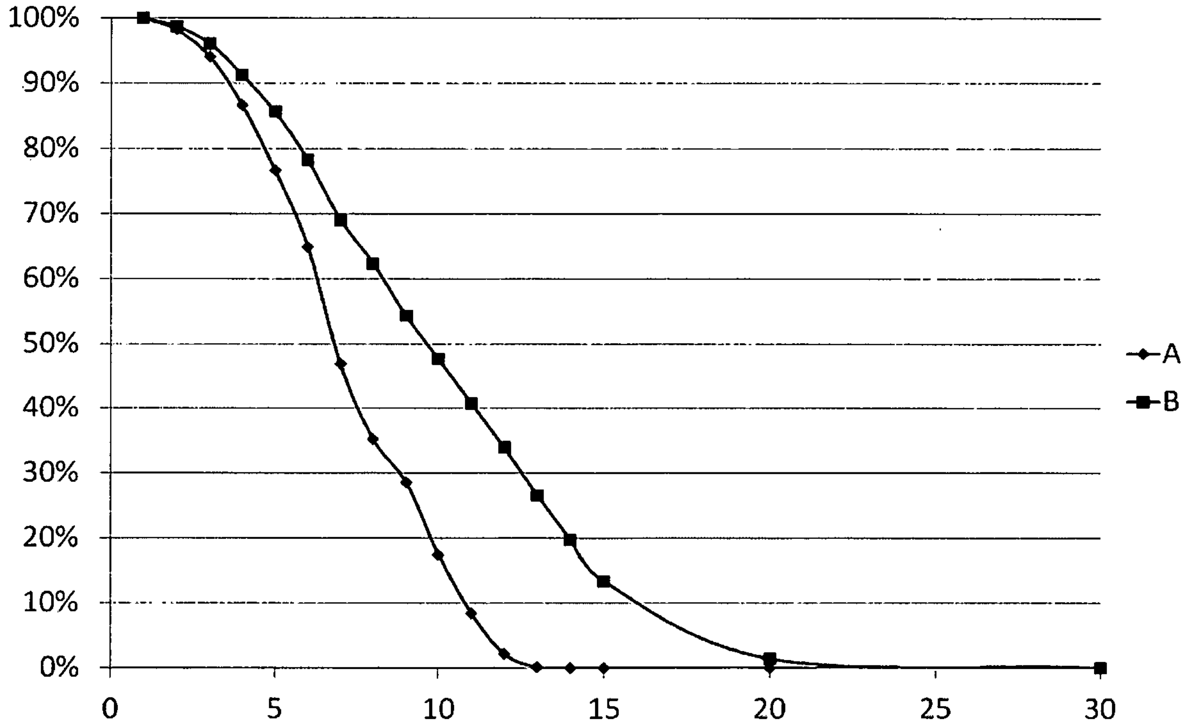

Abbildung 2:

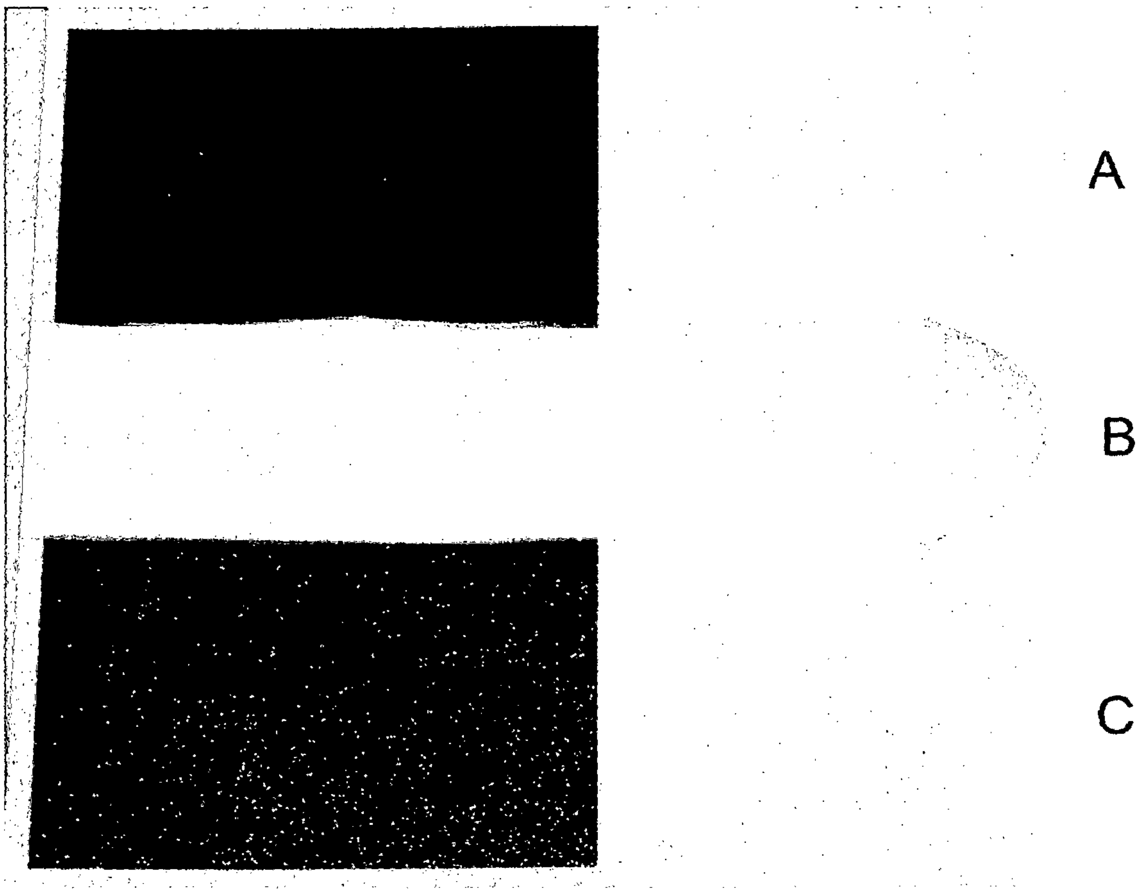

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 1999057204 A2
- US 20020169244 A1
- WO 2004087816 A2
- WO 2008077612 A2
- WO 2008095697 A2
- WO 2009144005 A1
- WO 2009149834 A2
- WO 2012130680 A1
- DE 102008031901 A1
- WO 9813426 A1
- WO 03043567 A2
- EP 0716128 A2
- EP 0716127 B1
- EP 1613702 B1
- EP 1251152 B1
- US 6645286 B2
- WO 2009152941 A2
- US 20070199478 A1
- US 20100047199 A1
- EP 2102294 B1
- EP 2128203 A1
- WO 1996038505 A1
- WO 2008095697 A
- WO 2005118722 A1
- WO 2007017195 A
- WO 1999057204 A
- US 5808125 A
- US 5679147 A
- US 5629400 A


### In der Beschreibung aufgeführte Nicht-Patentliteratur


- Organofunctional alkoxysilanes in dilute aqueous solution: new accounts on the dynamic structural mutability. *Journal of Organometallic Chemistry,* 2001, vol. 625, 208-216